(19) Europäisches Patentamt / European Patent Office / Office européen des brevets

(11) **EP 1 530 779 B1**

(12) **EUROPÄISCHE PATENTSCHRIFT**

(45) Veröffentlichungstag und Bekanntmachung des Hinweises auf die Patenterteilung:
**29.10.2008 Patentblatt 2008/44**

(21) Anmeldenummer: **03787774.3**

(22) Anmeldetag: **12.08.2003**

(51) Int Cl.:
**G06N 3/02** *(2006.01)*

(86) Internationale Anmeldenummer:
**PCT/EP2003/008951**

(87) Internationale Veröffentlichungsnummer:
**WO 2004/017258 (26.02.2004 Gazette 2004/09)**

(54) **VERFAHREN, DATENVERARBEITUNGSEINRICHTUNG UND COMPUTERPROGRAMMPRODUKT ZUR DATENVERARBEITUNG**

METHOD, DATA PROCESSING DEVICE AND COMPUTER PROGRAM PRODUCT FOR PROCESSING DATA

PROCEDE, DISPOSITIF DE TRAITEMENT DE DONNEES ET PRODUIT POUR PROGRAMME INFORMATIQUE POUR TRAITER DES DONNEES

(84) Benannte Vertragsstaaten:
**AT CH DE GB LI**

(30) Priorität: **14.08.2002 DE 10237310**

(43) Veröffentlichungstag der Anmeldung:
**18.05.2005 Patentblatt 2005/20**

(73) Patentinhaber: **Wismüller, Axel**
**81375 München (DE)**

(72) Erfinder: **Wismüller, Axel**
**81375 München (DE)**

(74) Vertreter: **Jacoby, Georg et al**
**Samson & Partner**
**Widenmayerstrasse 5**
**80538 München (DE)**

(56) Entgegenhaltungen:
**EP-A- 0 393 571          WO-A-01/16880**

**Beschreibung**

Die vorliegende Erfindung betrifft ein Verfahren gemäß dem Oberbegriff des Anspruchs 1 zur Datenverarbeitung für die Abbildung von zu verarbeitenden Eingabedaten auf Ausgabedaten; insbesondere zum Lernen durch Selbstorganisation topologieerhaltender

Abbildungen mit zahlreichen Anwendungen für Datenverarbeitung und Datenanalyse.

Ferner betrifft sie Verfahren gemäß dem Oberbegriff des Anspruchs 7 zur Datenverarbeitung. Schließlich betrifft sie den Verfahren entsprechende Datenverarbeitungseinrichtungen und Computerprogrammprodukte.

Obwohl die hierbei verwendeten Konzepte von einer spezifischen Modellvorstellung unabhängig sind, ist es für das Verständnis der vorliegenden Erfindung nützlich, deren Beschreibung mit grundlegenden Begriffen aus dem Fachgebiet der Neuroinformatik zu motivieren. Hierdurch können vielfach anschauliche Interpretationen im Hinblick auf die Lemdynamik in neuronalen Netzwerken geschaffen werden.

Zur Einführung in die Neuroinformatik sei der Leser auf einschlägige

Standardwerke verwiesen, z. B. [20], [36].

Für das technische Verständnis topologieerhaltender Abbildungen ist es nützlich, auf Grundbegriffe der Datenpartitionierung durch Vektorquantisierung aufzubauen. Die

Darstellung folgt hierbei u. a. [45], [46].

**1.1 Vektorquantisierung**

Soll ein Datensatz $X = \{\mathbf{x}\}$ mit $x \in \mathbb{R}^n$ durch ein Menge $C$ von sogenannten *Codebuchvektoren* $\mathbf{w}_j$ mit $C = \{w_j \in \mathbb{R}^n \mid j \in \{1,..., N\}\}$ charakterisiert werden, so spricht man vom Problem der Vektorquantisierung (VQ). Hierbei soll das *Codebuch C* die statistische Struktur eineZs Datensatzes X mit der Wahrscheinlichkeitsdichte

$$f : \mathbb{R}^n \to [0,1], \quad x \mapsto f(x)$$

in geeigneter Weise repräsentieren, wobei 'geeignet' im Hinblick auf spezifische Zielvorstellungen auf unterschiedliche Weise definiert werden kann. Typischerweise wird die Anzahl $N$ der Codebuchvektoren wesentlich kleiner gewählt als die Anzahl $\#C$ der Datenpunkte. Zu den vielfältigen Anwendungsfeldern der VQ, wie Analyse und Kompression großer Datenmengen, siehe z. B. [17]. VQ-Methoden werden häufig auch als *Clustering*-Verfahren bezeichnet. Beide Begriffe werden im folgenden synonym verwendet.

Man unterscheidet bei der VQ zwischen einem sog. *hard clustering,* bei dem jeder Datenpunkt $\mathbf{x}$ genau einem Codebuchvektor $\mathbf{w}_j$ zugeordnet wird, und einem sog. fuzzy clustering, bei dem ein Datenpunkt $\mathbf{x}$ in geeigneter Weise auf mehrere Codebuchvektoren $\mathbf{w}_j$ abgebildet werden kann.

Abbildung 1 zeigt schematisch ein neuronales Netz als Modell für einen Vektorquantisierer. Es besteht aus zwei Schichten: einer Eingabeschicht und einer Ausgabeschicht. Legt man $n$ Eingabezellen mit den Aktivitäten $x_i$, $i \in \{1,..., n\}$ zugrunde, so repräsentiert das

Eingabesignale
$x_i \qquad i = 1, \ldots, n$

$\mathbf{w}_j$

Aktivierungen
$a_j(\mathbf{x}) \qquad j = 1, \ldots, N$

Abbildung 1: Schematische Struktur eines Vektorquantisierers.

Aktivitätsmuster auf der *Eingabeschicht* einen Datenpunkt x im sogenannten *Merkmalsraum* IR$^n$. Durch gerichtete, mit den Gewichten $w_{ji}$ gewichtete Verbindungen wird diese Aktivität auf die *N* Zellen der *Ausgabeschicht* fortgeleitet. Diese Zellen der Ausgabeschicht entsprechen den *Codebuchneuronen.* Die Verbindungsgewichte - d. h. im neuronalen Bild - die Synapsenstärken w$_j$ $\mathbb{R}^n$, $j \in \{1, \dots, N\}$ werden hierbei so gewählt, daß die Aktivität $\alpha_j$ eines Ausgabeschichtneurons *j* in geeigneter Weise von der Distanz d = $\|$x-w$_j\|$ des Datenpunkts x vom *virtuellen Ort* w$_j$ des Codebuchneurons *j* abhängt. *d* definiert dabei ein beliebiges Distanzmaß im Merkmalsraum. Der Begriff "virtueller Ort" basiert hierbei auf der Vorstellung, daß die Aktivität $\alpha_j$ des Codebuchneurons für x$_{max}$ $\overset{!}{=}$ w$_j$ ihren Maximalwert annehmen soll, was als "Spezialisierung" des Neurons *j* auf den Ort x$_{max}$ interpretiert werden kann.

Nach abgeschlossenem Training des Vektorquantisierers kann ein Eingabesignal x durch die Aktivierungen $\alpha_j$(x) der Codebuchneuronen *j* repräsentiert werden, wobei die Verbindungsgewichte des Codebuchneurons *j* zur Eingabeschicht zum Codebuchvektor w$_j$ zusammengefaßt werden können.

Manche VQ-Algorithmen lassen sich allgemein als iterative, sequentielle Lernvorgänge charakterisieren. Hierbei wird zunächst die Anzahl *N* der Codebuchvektoren w$_j$ festgelegt, und diese werden initialisiert. Im weiteren wird typischerweise jeweils ein Da tenpunkt x $\in$ *X* zufällig ausgewählt und die Codebuchvektoren nach der *allgemeinen, sequentiellen VQ-Lernregel*

$$\mathbf{w}_j(t+1) = \mathbf{w}_j(t) + \epsilon(t)\,\psi(t, \mathbf{x}, C)\,(\mathbf{x}(t) - \mathbf{w}_j(t)) \qquad (1)$$

aktualisiert. *t* bezeichnet den Aktualisierungsschritt, $\in$ einen frei wählbaren Lernparameter und $\psi$ die sogenannte Kooperativitätsfunktion. Der Lernparameter $\in$ wird typischerweise mit fortschreitendem Aktualisierungsschritt monoton fallend gewählt. Aufgrund von Analogien zu Systemen der statistischen Physik wird dies häufig als "Abkühlung" bezeichnet.

Vielfach wird eine exponentielle Abkühlungsstrategie verwendet:

$$\epsilon(t) = \epsilon(0)\left(\frac{\epsilon(t_{\max})}{\epsilon(0)}\right)^{\frac{t}{t_{\max}}}, \quad t \in [0, t_{\max}]. \qquad (2)$$

Neben der jeweils gewählten Heuristik zur Festlegung der Zeitabhängigkeit von $\in$ und $\psi$ unterscheiden sich zahlreiche VQ-Methoden im wesentlichen durch die Definition der Kooperativitätsfunktion $\psi$.

Eine einfache Methode für das *hard clustering* bietet beispielsweise der LBG-Algorithmus von Y. Linde, A. Buzo und R. Gray [25]. Hierbei wählt $\psi$ in jedem Lernschritt genau einen zu aktualisierenden Codebuchvektor w$_j$ gemäß

$$\psi(t, \mathbf{x}, C) := \delta_{i(\mathbf{x}), j} \qquad (3)$$

aus, wobei i(x) aus dem minimalen Abstand

$$\|\mathbf{x} - \mathbf{w}_i\| = \min_j \|\mathbf{x} - \mathbf{w}_j\|$$

definiert wird, $\delta_i$(x),$_j$ bezeichnet das Kronecker-Delta. Da jeweils nur genau ein Codebuchvektor an jedem Lernschritt teilnimmt, spricht man auch von einer *winner-takes-all*-Lernregel.

Wird $\psi$ hingegen so gewählt, daß in jedem Lernschritt mehrere Codebuchvektoren an der Aktualisierung beteiligt sind, so definiert Gleichung (1) eine *winner-takes-most*-Lernregel. Je nach Definition von $\psi$ resultieren hieraus unterschiedliche Methoden für ein sogenanntes *fuzzy clustering.*

**1.2 Selbstorganisierende Karten**

Ein klassisches Verfahren der Neuroinformatik ist der von T. Kohonen beschriebene Algorithmus der *selbstorganisierenden Karte* (Self-Organizing Map, SOM), siehe z. B. [24]. Dieser läßt sich im Lichte der obigen Bemerkungen auch als VQ-Verfahren interpretieren:
Von wesentlicher Bedeutung ist hierbei die Wahl des Bezugsraumes der Metrik, die der Kooperativitätsfunktion $\psi$ in

Gleichung (1) zugrundegelegt wird. Beim Algorithmus der selbstorganisierenden Karte sowie bei anderen topologieerhaltenden Abbildungen bezieht sich die Metrik der Kooperativitätsfunktion $\psi$ auf einen vom Quellraum unabhängigen Zielraum. Die Bezeichnungen Quell- und Zielraum sind im Hinblick auf die Abbildung

$$j : \mathbb{R}^n \to \mathbb{R}^N, \quad \mathbf{x} \mapsto a_j(\mathbf{x}) \tag{4}$$

der Datenpunkte auf die Aktivierungen der Codebuchneuronen mit den Vereinbarungen von Abbildung 1 zu verstehen:

Der Quellraum ist i.a. mit dem oben definierten Merkmalsraum, z. B. dem $\mathbb{R}^n$ identisch. Bei den selbstorganisierenden Karten läßt sich der Zielraum z. B. als Raum der *physikalischen Positionen* $r_j$ der Codebuchneuronen *j* interpretieren gemäß einer Abbildung

$$\mathbf{r} : \mathbb{N} \to \mathbb{R}^k, \quad j \mapsto \mathbf{r}(j). \tag{5}$$

Für die wissenschaftliche Entdeckung des Algorithmus der selbstorganisierenden Karte war die Interpretation im Hinblick auf neurophysiologische Modellvorstellungen wesentlich. Aus diesem Grund wird der Zielraum, d. h. der Raum der $r_j$ := r(*j*) vielfach als sogenannter *Modellcortex* bezeichnet. Ein typischer Fall ist beispielsweise die Anordnung von *N* Codebuchneuronen auf einem zweidimensionalen diskreten periodischen Gitter (also *k* = 2) in Form einer sensorischen Karte, die den Input von *n* Sinneszellen repräsentieren soll. Hierzu gibt es zahlreiche biologische Vorbilder, z. B. die retinotope Projektion von Fischen und Amphibien [12]. Kohonen fand nun eine Heuristik, mit der "die Neuronen *j* des Modellcortex ihre Empfindlichkeit auf Eingabesignale x so miteinander abstimmen können, daß ihr Ansprechverhalten auf Signalmerkmale in gesetzmäßiger Weise mit ihrem Ort auf dem Modellcortex variiert" (frei zitiert nach [36]). Zur neurophysiologischen Motivation sowie zur mathematischen Definition sei auf [36] verwiesen.

Der physikalische Ort r der Codebuchneuronen bestimmt hierbei die Metrik für die Kooperativitätsfunktion $\psi$. Deren konkrete Wahl als Gaußfunktion

$$\psi(\mathbf{r}, \mathbf{r}'(\mathbf{x}(t)), \sigma(t)) := \exp\left(-\frac{(\mathbf{r} - \mathbf{r}'(\mathbf{x}(t)))^2}{2\sigma(t)^2}\right). \tag{6}$$

oder etwa als charakteristische Funktion auf einer *k*-dimensionalen Hyperkugel um r'(x(*t*))

$$\psi(\mathbf{r}, \mathbf{r}'(\mathbf{x}(t)), \sigma(t)) := \chi_{\|\mathbf{r} - \mathbf{r}'(\mathbf{x}(t))\| \leq \sigma(t)} := \begin{cases} 1 & : & \|\mathbf{r} - \mathbf{r}'(\mathbf{x}(t))\| \leq \sigma(t) \\ 0 & : & \|\mathbf{r} - \mathbf{r}'(\mathbf{x}(t))\| > \sigma(t) \end{cases} \tag{7}$$

ist demgegenüber von untergeordneter Bedeutung. r'(x(*t*)) definiert dabei bei gegebenem Reiz x(*t*) $\in \mathbb{R}^n$ gemäß

$$\|\mathbf{x} - \mathbf{w}_{\mathbf{r}'}\| = \min_{\mathbf{r}} \|\mathbf{x} - \mathbf{w}_{\mathbf{r}}\| \tag{8}$$

das Neuron mit der höchsten Aktivität, das sogenannte "Gewinnerneuron". Zur Kennzeichnung eines Codebuchneurons wird hier direkt sein physikalischer Ort gemäß der Abbildung (5) benützt. Die Lemregel (1) wird somit zu

$$\mathbf{w}_{\mathbf{r}}(t+1) = \mathbf{w}_{\mathbf{r}}(t) + \epsilon(t)\,\psi(\mathbf{r}, \mathbf{r}'(\mathbf{x}(t)), \sigma(t))\,(\mathbf{x}(t) - \mathbf{w}_{\mathbf{r}}(t)). \tag{9}$$

$\sigma(t)$ bezeichnet hierbei den entsprechenden Kooperativitätsparameter aus Gleichung (6) bzw. (7). Er ist ein Maß für die "Reichweite" der Nachbarschaftsfunktion $\psi$ im Modellcortex und wird i. a. während des Lernverfahrens ebenso wie der Lernparameter $\in(t)$ nach einer geeigneten Heuristik verändert, z. B. analog zu Gleichung (2):

$$\sigma(t) = \sigma(0) \left( \frac{\sigma(t_{\max})}{\sigma(0)} \right)^{\frac{t}{t_{\max}}} \quad t \in [0, t_{\max}]. \tag{10}$$

Mit diesen Definitionen kann das Training einer selbstorganisierenden Karte in Anlehnung an [36] folgendermaßen als technischer Verfahrensablauf beschrieben werden:

(i) Initialisierung: Wähle geeignete Anfangswerte für die Codebuchvektoren $w_j$. In Abwesenheit irgendwelcher a-priori-Information können die $w_j$ z. B. zufällig gewählt werden.
(ii) **Stimuluswahl:** Wähle zufällig einen Vektor x der eingegebenen Daten im Merkmalsraum.
(iii) **Response:** Bestimme das Gewinnerneuron gemäß Gleichung (8).
(iv) **Adaptationsschritt:** Führe einen Adaptationsschritt durch Veränderung der Codebuchvektoren durch gemäß Gleichung (9).
(v) Iteration: Wiederhole die Schritte (ii) - (iv), bis ein geeignetes Abbruchkriterium erfüllt ist.

Zu weiteren Details der selbstorganisierenden Karten sei auf [36] verwiesen, deren Offenbarung hiermit durch Bezugnahme in die vorliegende Anmeldung aufgenommen ist.

### 1.3 Weitere bekannte Verfahren der Neuroinformatik

WO 01/16880 beschreibt ein unüberwachtes kompetitives Lernverfahren zur Bildung äquiprobabilistischer topographischer Karten. Das Verfahren, das auch Maximum Entropy Learning Rule genannt (kMER) wird, passt nicht nur die Neuronengewichte an, sondern auch die Radien der Kernels, die um diese Gewichte herum zentriert sind. Da die Radien aktualisiert werden, können diese Radien direkt bei variabler Kerneldichte-Abschätzung verwendet werden. Die Druckschrift offenbart nicht die Anordnung von Neuronen entsprechend Distanzen zwischen Eingabedaten.

### 2 Detailliere Beschreibung der Erfindung, Teil I

Der Erfindung liegt nunmehr die Aufgabe zugrund, Datenverarbeitungen zu verbessern.
Die Erfindung löst diese Aufgabe jeweils mit den Gegenständen der Ansprüche 1, 7, 16 und 17.
Weitere bevorzugte Ausgestaltungen der Erfindung sind in den Unteransprüchen beschrieben.
Nach Anspruch 1 wird bei einem gattungsgemäßen Verfahren zumindest ein Teil des eingegebenen Datenobjekte verwendet, um die Anordnung von Neuronen im Anordnungsraum festzulegen. Alternativ oder zusätzlich werden für die Datenverarbeitung erforderliche, von den zu verarbeitenden Eingabedaten unabhängige Datenobjekte eingegeben, die als Datenobjekte des Erkundungsraumes verwendet werden.
Nach Anspruch 7 wird bei einem gattungsgemäßen Verfahren das Maß für die Qualität der Zuordnung unter Verwendung von wenigstens einem Teil der eingegebenen und/oder berechneten Distanzobjekte berechnet.
Zum auf die Datenverarbeitungseinrichtung gerichteten Patentanspruch wird erwähnt, daß der Begriff "Datenverarbeitungseinrichtung" neben den heute üblichen (z. B. auf Halbleitertechnologien basierenden Computersystemen) auch alle zukünftigen Realisierungen (z. B. Quantencomputer, biologische, molekulare, atomare, optische, oder auf beliebigen biologischen, chemischen oder physikalischen Prinzipien der Datenverarbeitung beruhenden Realisierungen etc.) von datenverarbeitenden Einrichtungen umfaßt.
Zum auf das Computerprogrammprodukt gerichteten Patentanspruch wird erwähnt, daß unter dem Begriff "Computerprogrammprodukt" ein Computerprogramm oder Computerprogramm-Modul zu verstehen ist, welches durch Speicherung (zum Beispiel auf einem magnetischen Speichermedium oder in einem flüchtigen oder nicht-flüchtigen Halbleiterspeicher eines Computers) oder durch Signale, die über ein Netzwerk, insbesondere das Internet, versendet werden, verkörpert ist. Dabei braucht das Computerprogramm nicht in einer unmittelbar ausführbaren Form vorliegen, vielmehr kann es auch in einer für die Installation auf der Datenverarbeitungseinrichtung vorbereiteten Form existieren, wobei es selbstverständlich gepackt, verschlüsselt, für eine etwaige Versendung über ein Netzwerk in Pakete zerteilt und mit übertragungsbezogenen Headern versehen sein kann, etc.
Die Erfindung sowie weitere Merkmale und Vorteile der Erfindung werden nunmehr anhand bevorzugter Ausführungsbeispiele näher erläutert.
Vorab wird in groben Zügen der Aufbau eines Computersystems als spezielles Ausführungsbeispiel einer Datenverarbeitungseinrichtung erläutert. In der Regel umfaßt ein solches Computersystem einen Computer mit einem Monitor, einer Eingabetastatur und einer Computermaus. Anstelle des Monitors können beliebige andere Anzeigemittel, wie beispielsweise ein Projektor, verwendet werden. Anstelle der Computermaus können ebenfalls beliebige andere Cursorpositionierungsmittel, wie beispielsweise ein Track-Ball, ein Touch-Pad, ein Maus-Stick, eine Touch-Screen oder Pfeiltasten einer Computertastatur eingesetzt werden.

Der Computer weist einen ersten Datenspeicher in Form eines Plattenspeichers auf, wie etwa einer Festplatte, CD oder Diskette, und einen zweiten Datenspeicher in Form eines Haupt- und/oder Arbeitsspeichers. Zwischen dem Platten- und dem Arbeitsspeicher werden Daten übertragen. Die Übertragung erfolgt beispielsweise über übliche Schnittstellen und Bussysteme. Die Be- und/oder Verarbeitung von Daten erfolgt über eine CPU (Central Processing Unit). Auf dem Plattenspeicher werden Daten gespeichert, auf die der Computer über entsprechende Kontrollmittel zugreifen kann. Der Computer umfaßt weiterhin eine Netzwerkkarte, mit der er beispielsweise mit einem zweiten Computer verbunden sein kann. Ferner kann der Computer ein sogenanntes Modem umfassen, mit dem er über das Telefonnetz und seinen entsprechenden Provider mit dem Internet verbunden werden kann. Der Computer kann auch Teil einer direkten PC-Verbindung, weiterer Computer eines Computer- Clusters oder Server eines Netzwerks sein.

**2.1 Verallgemeinerte Sichtweise topologieerhaltender Abbildungen**

Die für das Verständnis der Erfindung wesentlichen Begriffe werden im folgenden definiert:

Ausgangspunkt ist die Datenverarbeitung durch sog. 'topologieerhaltende Abbildungen'. Hierbei handelt es sich um unterschiedliche, dem Stand der Technik entsprechende Datenverarbeitungsverfahren. Wichtige Beispiele sind: Selbstorganisierende Karte (Self-Organizing Map (SOM)) [24] (wie in der Beschreibungseinleitung unter Abschnitt 1.2 beschrieben), Generative Topographic Mapping (GTM) [4, 2], Neural Gas Algorithmus [28], unterschiedliche Formen topographischer Vektorquantisierer (z. B. Topographic Vector Quantizer (TVQ), Soft Topographic Vector Quantizer (STVQ), Soft Self-Organizing Map (SSOM), Kernel-Based Soft Topographic Mapping (STMK), Soft Topographic Mapping of Proximity Data (STMP)) [13, 14] sowie zahlreiche Varianten der genannten Verfahren.

Trotz dieser Vielfalt besitzen topologieerhaltende Abbildungen wesentliche gemeinsame Funktions- und Strukturkomponenten, die in folgenden Definitionen charakterisiert werden:

**2.1.1 Allgemeine Definitionen**

**1. Datenobjekte**: Beliebige Daten ohne jegliche Beschränkungen, z. B. Mengen, Zahlen, Vektoren, Graphen, Symbole, Texte, Bilder, Signale, mathematische Abbildungen und deren Repräsentationen, z. B. Matrizen, Tensoren etc. sowie beliebige Kombinationen von Datenobjekten

**2. Raum**: Beliebige Menge von Datenobjekten, z. B. auch Teil- oder Obermenge einer Mengen von Datenobjekten

**2.1.2 Funktionelle Definitionen**

- **Eingabedaten:** *Rohdaten* sind hierbei beliebige Datenobjekte, die der Datenverarbeitung zugeführt werden sollen, z. B. Mengen, Zahlen, Vektoren, Graphen, Symbole, Texte, Bilder, Signale, mathematische Abbildungen und deren Repräsentationen etc. Diese Rohdaten dienen entweder direkt als Eingabedaten oder werden durch geeignete Berechnungsverfahren in Eingabedaten überführt. Im folgenden wird daher nicht mehr zwischen Rohdaten und Eingabedaten unterschieden, sondern nur noch von *Eingabedaten* gesprochen. Wesentlich ist, daß es sich bei diesen Eingabedaten um diejenigen Datenobjekte handelt, für die eine Aufgabenstellung der mit der topologieerhaltenden Abbildung verbundenen Datenverarbeitung existiert, die also z. B. analysiert, visualisiert oder sonstwie verarbeitet werden sollen. Typische Aufgabenstellungen für die Datenverarbeitung dieser Eingabedaten sind z. B. Partitionierung, Clustering, Einbettung, Hauptkomponentenanalyse, Approximation, Interpolation, Extrapolation, Dimensionsbestimmung, Visualisierung, Regelung etc. Für die Definition der Eingabedaten sind also zwei Aspekte wesentlich: Eingabedaten sind (i) *vorgegebenen* Datenobjekte oder *aus vorgegebenen Datenobjekten berechnete Datenobjekte,* für die eine *Aufgabenstellung* existiert, also etwas 'Gegebenes, mit dem etwas gemacht werden soll'.

- **Strukturhypothesen**: Hierbei handelt es sich um Annahmen, z. B. über die Struktur der Eingabedaten. Strukturhypothesen sind Annahmen, die nicht ohne weitere, von den Eingabedaten der topologieerhaltenden Abbildung unabhängige Datenobjekte, aus den Eingabedaten berechnet werden können. Dies bedeutet, daß die Annahmen

    (i) *ad hoc* postuliert werden, wobei die Hypothesen unabhängig von den Eingabedaten gewählt werden oder

    (ii) *ad hoc* postuliert werden, wobei die Hypothesen durch berechenbare Eigenschaften der Eingabedaten beeinflußt, jedoch nicht vollständig bestimmt werden oder

(iii) erst durch Datenverarbeitung der Eingabedaten unter Beteiligung der topologieerhaltenden Abbildung selbst, also unter Rückgriff auf Ausgabedaten (Definition siehe unten) berechnet werden können oder durch beliebige Kombinationen dieser Vorgehensweisen getroffen werden. (iii) ist hier ein Sonderfall von (ii) insofern, als eine topologieerhaltende Abbildung Strukturhypothesen erfordert. Typische Beispiele für die Bildung von Strukturhypothesen sind:

Ad (i) Wahl der Gittertopologie beim Kohonen-Algorithmus als zweidimensionales quadratisches Gitter mit vorgegebener Anzahl der Gitterknoten für beide Dimensionen unabhängig von den Eingabedaten

Ad (ii) Wahl der Gittertopologie beim Kohonen-Algorithmus als zweidimensionales quadratisches Gitter mit vorgegebener Gesamtknotenzahl (*ad-hoc*-Komponenten der Hypothese), wobei das Verhältnis der Anzahl der Gitterknoten für die beiden Dimensionen unter Berücksichtigung des Verhältnisses der Streuungen der Eingabedatenverteilung entlang der beiden Hauptverteilungsrichtungen erfolgt, wie sie durch die Berechnung der beiden größten Eigenwerte im Rahmen einer Hauptkomponentenanalyse der Eingabedatenverteilung bestimmt werden können (datengetriebene Komponente der Hypothese)

Ad (iii) Wahl der Gittertopologie in Abhängigkeit von der Datenrepräsentation durch die topologieerhaltende Abbildung selbst, z. B. in wachsenden selbstorganisierenden Karten [44]; Wahl der Gittertopologie in Abhängigkeit von der durch die Verteilung der Codebuchvektoren induzierten Topologie, z. B. im Rahmen der durch einen minimal spanning tree der Codebuchvektoren induzierten Topologie [24], oder durch die durch eine Ordnungsmetrik der Codebuchvektoren induzierten Toplogie beim Neural Gas Algorithmus [28].

Es handelt sich also bei Strukturhypothesen um zur Datenverarbeitung erforderliche, von den zu verarbeitenden Eingabedaten unabhängige Datenobjekte. "Unabhängig" bedeutet, daß es *kein* Berechnungsverfahren gibt, mit dem diese Datenobjekte ausschließlich unter Verwendung von Eingabedaten der topologieerhaltenden Abbildung, d. h. ohne Rückgriff auf Strukturhypothesen, berechnet werden können.

- **Ausgabedaten**: Hierbei handelt es sich um Datenobjekte, die als Ergebnis der Verarbeitung der Eingabedaten durch die topologieerhaltende Abbildung gewertet werden. Dies sind typischerweise

(i) Codebuchobjekte und daraus berechnete Größen, Definition siehe unten
(ii) Strukturhypothesen, die durch Codebuchobjekte oder daraus berechnete Größen motiviert sind
Ausgabedaten sind keineswegs nur Codebuchobjekte oder Strukturhypothesen nach vollständig abgeschlossenem Training einer topologieerhaltenden Abbildung, sondern können einem beliebigen Trainingsstadium der topologieerhaltenden Abbildung entsprechen.

### 2.1.3 Strukturelle Definitionen

- **Erkundungsraum:** Raum der Menge von Datenobjekten, mit denen die topologieerhaltende Abbildung trainiert wird, d. h. die präsentiert werden, d. h. die in die Berechnungsvorschrift der topologieerhaltenden Abbildung eingesetzt werden, um die Codebuchobjekte zu berechnen (z. B. x in Abschnitt 1.2). Diese Datenobjekte werden im folgenden Erkundungsobjekte genannt und aus dem Stand der Technik bedingten historischen Gründen auch synonym als *Merkmalsvektoren* bezeichnet. Man beachte, daß diese Datenobjekte gemäß Stand der Technik den Eingabedaten der topologieerhaltenden Abbildung entsprechen. Ein wesentlicher Aspekt der Erfindung ist, daß diese Entsprechung aufgehoben wird.

- **Anordnungsraum**: Raum der Menge von Datenobjekten, die topologische Zusammenhänge definieren, wobei diese Zusammenhänge für die Berechnung der Ausgabedaten der topologieerhaltenden Abbildung benützt werden, z. B. im Rahmen einer Kooperativitätsfunktion gemäß Gleichung 9. Ein wichtiges Beispiel eines Anordnungsraumes ist der Modellcortex beim Kohonen-Algorithmus, auch Gitter- oder Indexraum genannt. Die Datenobjekte des Anordnungsraumes werden im folgenden als Anordnungsobjekte oder Neuronen bezeichnet. Gemäß dem Stand der Technik handelt es sich hierbei um Vektoren in metrischen Räumen. Diese werden aus dem Stand der Technik bedingten historischen Gründen im folgenden auch als *Gittervektoren* oder *Positionsvektoren* bezeichnet. Ein weiterer wichtiger Teilaspekt der Erfindung ist die Verallgemeinerung des Begriffs der Anordnungsobjekte auf beliebige Datenobjekte, z. B. Distanzobjekte zwischen Datenobjekten (Definition des Begriffs *Distanzobjekt* siehe unten). Man beachte, daß gemäß Stand der Technik die Datenobjekte des Anordnungsraumes durch Strukturhypothesen bestimmt werden. Ein wesentlicher Aspekt der Erfindung ist, daß diese Entsprechung aufgehoben wird. Um die Begriffe Anordnungsraum und Erkundungsraum zweifelsfrei abzugrenzen, werden in Abschnitt 2.3 die bei verschiedenen in der Literatur beschriebenen topologieerhaltenden Abbildungen getroffenen Festsetzungen aufgeführt.

- **Ergebnisraum:** Raum der Menge von Datenobjekten, die als Ergebnis der Verarbeitung der Eingabedaten gewertet werden (z. B. Codebuchvektoren einer selbstorganisierenden Karte). Diese werden im folgenden als Codebuchobjekte bezeichnet.

Hierbei muß es sich nicht unbedingt um unterschiedliche Räume handeln. So entspricht beispielsweise der Ergebnisraum vielfach dem Erkundungsraum: Bei der selbstorganisierenden Karte nach Abschnitt 1.2 ist dies der Fall. Hier entstammen die Merkmalsvektoren i. a. dem gleichen Raum wie die Codebuchvektoren. Ein Gegenbeispiel wäre beim Clustering von Beobachtungsfolgen durch Hidden-Markov-Modelle denkbar (z. B. [34]): Hier können beispielsweise einzelnen Codebuchobjekten spezifische Hidden-Markov-Modelle entsprechen, den Erkundungsobjekten jedoch die Beobachtungsfolgen. Als weiteres Beispiel kann auch der Anordnungsraum implizit aus dem Ergebnisraum definiert sein, z. B. als Ordnungsmetrik beim Neural-Gas-Algorithmus.

Die zentrale Motivation für die vorliegende Erfindung basiert nun auf einer *Entflechtung der oben aufgeführten funktionellen und strukturellen Merkmale topologieerhaltender Abbildungen:*

Entscheidend ist hierbei, daß gemäß dem Stand der Technik die Eingabedaten Erkundungsobjekte sind, also dem Erkundungsraum entnommen werden und nicht Datenobjekte des.Anordnungsraums definieren. Des weiteren beeinflussen die Strukturhypothesen den Anordnungsraum und nicht den Erkundungsraum. Gemäß Stand der Technik ist also den Eingabedaten der Erkundungsraum zugeordnet und den Strukturhypothesen der Anordnungsraum.

Kerngedanke der erkundungsgefügten Gestaltbildung (eXploration Organized Morphogenesis, XOM) ist nun die teilweise Umkehrung dieser Zuordnungen:

**XOM-Definition:** Verfahren und Vorrichtung zur Datenverarbeitung durch topologieerhaltende Abbildungen, wobei im Gegensatz zum Stand der Technik *sowohl der Anordnungsraum als auch der Erkundungsraum beliebig durch Eingabedaten, oder Strukturhyprothesen* bestimmt werden können. Insbesondere können im Gegensatz zum Stand der Technik *Eingabedaten Datenobjekte des Anordnungraumes bestimmen, umgekehrt Strukturhypothesen Datenobjekte des Erkundungsraumes bestimmen.*

Die Aussage, daß Eingabedaten Datenobjekte des Anordnungsraumes "bestimmen", bedeutet hierbei, daß es ein Berechnungsverfahren gibt, mit dem Datenobjekte des Anordnungsraumes aus Eingabedaten *ohne Rückgriff auf Strukturhypothesen* berechnet werden können.

Die Aussage, daß Strukturhypothesen Datenobjekte des Erkundungsraumes "bestimmen" , bedeutet, daß es *kein* Berechnungsverfahren gibt, mit dem diese Datenobjekte *ohne Rückgriff auf Strukturhypothesen* aus Eingabedaten berechnet werden können.

Im Gegensatz zum Stand der Technik unterliegt die Wahl des Erkundungsraumes keinen Beschränkungen insofern, als es es sich bei seinen Datenobjekten neben Eingabedaten auch um Strukturhypothesen handeln kann. Umgekehrt unterliegt auch im Gegensatz zum Stand der Technik die Wahl des Anordnungsraumes keinen Beschränkungen, als es sich bei seinen Datenobjekten neben Strukturhypothesen auch um Eingabedaten handeln kann!

Im Gegensatz zum Stand der Technik kann also den Eingabedaten der Anordnungsraum und den Strukturhypothesen der Erkundungsraum zugeordnet werden.

Ein besonderer Aspekt der Erfindung besteht zusätzlich in der Verallgemeinerung des oben definierten Begriffs der Anordnungsobjekte über die dem Stand der Technik entsprechende Interpretation als Vektoren in metrischen Räumen hinaus auf beliebige Datenobjekte, insbesondere auf Distanzobjekte zwischen Datenobjekten.

Distanzobjekte sind hierbei definiert als Datenobjekte, die Ähnlichkeitsbeziehungen bzw. Distanzen zwischen Datenobjekten gemäß einem beliebigen Distanzmaß charakterisieren. Hierbei sind sowohl durch Metriken induzierte Distanzmaße als auch insbesondere durch beliebige, nicht einer Metrik genügenden, Distanzmaße definierte Ähnlichkeitsbeziehungen bzw. Dissimilaritäten eingeschlossen. Einige typische Distanzmaße auf der Basis von Dissimilaritäten sind z. B. in [19] aufgeführt. Metrik wird hierbei in mathematischem Sinne definiert, siehe z. B. [5].

Zusammenfassend ergibt sich also als Abgrenzung vom Stand der Technik mit obigen Definitionen folgende

## 2.2 Technische Beschreibung

Das erfindungsgemäße Verfahren (XOM) für die Abbildung von zu verarbeitenden Eingabedaten auf Ausgabedaten umfaßt die folgenden Schritte:

Die zu verarbeitenden Datenobjekte werden als Eingabedaten eingegeben.

Die eingegebenen Datenobjekte werden mit Hilfe einer topologieerhaltenden Abbildung verarbeitet. Dabei werden

Neuronen im Anordnungsraum angeordnet, indem gemäß einer ersten Alternative zumindest ein Teil der eingegebenen Datenobjekte verwendet wird, um die Anordnung von Neuronen im Anordnungsraum festzulegen.

Weiterhin werden dabei den Neuronen Codebuchobjekte im Ergebnisraum zugeordnet.

Schließlich werden dabei Codebuchobjekte verarbeitet gemäß der Berechnungsvorschrift einer topologieerhaltenden Abbildung unter Verwendung von Datenobjekten des Erkundungsraumes (siehe beispielsweise den in der Beschreibungseinleitung aufgeführten technischen Verfahrensablauf für das Training einer selbstorganisierenden Karte in Abschnitt 1.2).

Gemäß einer zweiten Alternative werden dabei als Datenobjekte des Erkundungsraums von den zu verarbeitenden Eingabedaten unabhängig eingegebene Datenobjekte (Strukturhypothesen) verwendet. Die erste und die zweite Alternative können einzeln oder kombiniert angewandt werden.

Letztendlich werden die verarbeiteten Codebuchobjekte als Ausgabedaten ausgegeben.

### 2.3 Beispiele der XOM-Definition für einige topologieerhaltende Abbildungen

Die oben definierte XOM-Definition sei für einige in der Literatur beschriebene topologieerhaltende Abbildungen beispielhaft beschrieben. Es sei jedoch betont, daß die Erfindung nicht auf diese Beispiele beschränkt ist, sondern sich durch Analogieschluß unter Verwendung obiger Definitionen für die Funktions- und Strukturkomponenten auf beliebige topologieerhaltende Abbildungen anwenden läßt, auch wenn diese hier nicht explizit aufgeführt sind. Insbesondere sei betont, daß die Erfindung *unabhängig* ist (i) von der konkreten Wahl freier Parametern topologieerhaltender Abbildungen, (ii) von der konkreten Wahl einer Kooperativitätsfunktion etwa im Sinne der Funktion $\psi$ gemäß Abschnitt 1.1, (iii) von der konkreten Wahl bestimmter Annealing-Schemata, z. B. für Lernparameter, etwa im Sinne von $\in$ in Abschnitt 1.1, (iv) von der Art der Datenpräsentation, d. h. ob die Erkundungs- oder Anordnungsdatenobjekte sequentiell oder parallel im Sinne von 'batch'-Algorithmen präsentiert werden, bei denen in einzelnen Trainingsschritten auch mehr als ein Datenobjekt verarbeitet werden kann.

### 2.3.1 XOM für die selbstorganisierende Karte

Hierbei können gemäß XOM-Definition die Eingabedaten die Datenobjekte des Anordnungraumes bestimmen, wohingegen Strukturhypothesen die Eigenschaften des Erkundungsraumes bestimmen können. Für die selbstorganisierenden Karten gelten im Zusammenhang mit XOM folgende Festsetzungen: Der Merkmalsraum der selbstorganisierenden Karte gemäß Abschnitt 1.1 entspricht dem Erkundungsraum, der Modellcortex der selbstorganisierenden Karte gemäß 1.1 entspricht dem Anordnungsraum.
Im Modellcortex gemäß Abschnitt 1.2 werden also Eingabedaten präsentiert, d. h. der Modellcortex wird durch Eingabedaten ganz oder teilweise bestimmt. Handelt es sich beispielsweise bei den Eingabedaten Z um Vektoren in einem k-dimensionalen metrischen Raum also $Z = \{(z^v) \,|\, z^v \in \mathbb{R}^k, v \in \{1, ..., p\}, k, p \in \mathbb{N}\}$ so können die Positionsvektoren der selbstorganisierenden Karte mit diesen gleichgesetzt werden. Hierdurch ergibt sich i. a. eine durch Eingabedaten bestimmte Topologie des Anordnungsraumes, die im Gegensatz zum Stand der Technik bei der Verwendung selbstorganisierender Karten nicht einem diskreten periodischen Gitter entspricht. Das Training der selbstorganisierenden Karte erfolgt dann mit Datenobjekten eines beliebig gewählten Erkundungsraumes. Dieser kann einer Strukturhypothese entsprechen, jedoch auch direkt über Eingabedaten definiert sein. Mit den Konventionen aus Abschnitt 1.2 kann also beispielsweise folgende Vereinbarung getroffen werden: $r_v = z^v$. Als Erkundungsraum wird nun eine beliebige Menge von Datenobjekten festgelegt, beispielsweise Datenvektoren auf einer beliebigen Mannigfaltigkeit im $\mathbb{R}^n$, die z. B. einer Gleichverteilung, einer Gaußverteilung oder sonstwie in der Wahrscheinlichkeitstheorie beschriebenen Verteilung genügen. Denkbar ist grundsätzlich auch jede beliebige andere Festlegung des Erkundungsraumes, sei sie nun von den Eingabedaten abhängig oder im Sinne einer Strukturhypothese nicht unmittelbar durch Eingabedaten eindeutig berechenbar.
Neben der oben angeführten Entflechtung der strukturellen und funktionellen Definitionen der an topologieerhaltenden Abbildungen beteiligten Datenräume besteht ein besonderer Aspekt der Erfindung zusätzlich in der Verallgemeinerung des oben definierten

Begriffs der Anordnungsobjekte über die dem Stand der Technik entsprechende Interpretation als Vektoren in metrischen Räumen hinaus auf beliebige Datenobjekte, insbesondere auf Distanzobjekte zwischen Datenobjekten. Im Fall der selbstorganisierenden Karte bedeutet dies, daß die Topologie des Modellcortex durch beliebige Dissimilaritäten definiert sein kann, die keiner Metrik im mathematischen Sinne genügen müssen. Die Anordnungsobjekte (Neuronen) müssen also nicht Vektoren im $\mathbb{R}^{\tilde{n}}$ repräsentieren.

### 2.3.2 XOM für Generative Topographic Mapping

Zur Präzisierung der Begriffe Anordnungsraum und Erkundungsraum seien bei Generative Topographic Mapping (GTM) folgende Festsetzungen getroffen, die sich auf die Publikation [3] beziehen: Der Raum, der in [3] als "latent space" bezeichnet wird, entspricht dem Anordnungsraum, seine Datenobjekte werden in dieser Publikation als "latent variables x" bezeichnet. Die Datenobjekte des Erkundungsraumes werden in [3] mit der Variable t bezeichnet.

### 2.3.3 XOM für topographische Vektorquantisierer

Zur Präzisierung der Begriffe Anordnungsraum und Erkundungsraum seien bei den in der Literatur beschriebenen topographischen Vektorquantisierern (z. B. Topographic Vector Quantizer (TVQ), Soft Topographic Vector Quantizer (STVQ), Soft Self-Organizing Map (SSOM), Kernel-Based Soft Topographic Mapping (STMK), Soft Topographic Mapping of Proximity Data (STMP)) [13, 14]) folgende Festsetzungen getroffen, die sich auf die Publikation [14] beziehen: Die Datenobjekte, die in [14] als "nodes" mit den Variablenbezeichnungen r bzw. s bezeichnet werden, entsprechen Datenobjekten des Anordnungsraumes. Die Datenobjekte, die in [14] als "data vectors x($t$)" bezeichnet werden, entsprechen Datenobjekten des Erkundungsraumes.

Durch Analogieschluß ist es möglich, auch in anderen, hier nicht beschriebenen Berechnungsvorschriften für topologieerhaltende Abbildungen, Erkundungsraum und Anordnungsraum voneinander abzugrenzen.

### 3 Detaillierte Beschreibung der Erfindung, Teil II

In der nachfolgenden Aufstellung werden zusätzliche durch das Patent zu schützende Verfahren, Vorrichtungen und Anwendungen beschrieben:

1.

   (a) **XOM-Definition:** Verfahren und Vorrichtung zur Datenverarbeitung durch topologieerhaltende Abbildungen, wobei im Gegensatz zum Stand der Technik *sowohl der Anordnungsraum als auch der Erkundungsraum beliebig durch Eingabedaten oder Strukturhypothesen* bestimmt werden können. Insbesondere können im Gegensatz zum Stand der Technik *Eingabedaten Datenobjekte des Anordnungraumes bestimmen, umgekehrt Strukturhypothesen Datenobjekte des Erkundungsraumes* bestimmen.

   Die Aussage, daß Eingabedaten Datenobjekte des Anordnungsraumes "bestimmen", bedeutet hierbei, daß es ein Berechnungsverfahren gibt, mit dem Datenobjekte des Anordnungsraumes aus Eingabedaten *ohne Rückgriff auf Strukturhypothesen* berechnet werden können.

   Die Aussage, daß Strukturhypothesen Datenobjekte des Erkundungsraumes "bestimmen", bedeutet, daß es *kein* Berechnungsverfahren gibt, mit dem diese Datenobjekte *ohne Rückgriff auf Strukturhypothesen* aus Eingabedaten berechnet werden können.

   Im Gegensatz zum Stand der Technik unterliegt die Wahl des Erkundungsraumes keinen Beschränkunen insofern, als es es sich bei seinen Datenobjekten neben Eingabedaten auch um Strukturhypothesen handeln kann.

   Hierbei muß es sich ausdrücklich nicht um Daten handeln, die auf einer einzelnen Mannigfaltigkeit im $\mathbb{R}^{n}$ gleichverteilt sind, sondern in beliebigen Datenräumen beliebig verteilt sein können. Beispiele für interessante Verteilungsmuster sind unten in 5 aufgeführt. Diese Verteilungsmuster können auch im Laufe eines Trainingsvorgangs oder im Rahmen einer Folge von Trainingsvorgängen der topologieerhaltenden Abbildung dynamisch veränderlich gewählt werden, z. B. unter Berücksichtigung der aktuell oder in einem früheren Stadium durch die topologieerhaltende Abbildung gelieferten Ausgabedaten bzw. Ergebnisse, z. B. Codebuchobjekte oder die durch sie induzierte Topologie, wodurch insbesondere dynamische Strukturhypothesen generiert werden können. Es sei auch betont, daß die gewählten Verteilungen im Erkundungsraum statisch oder dynamisch von den Eingabedaten beeinflußt werden können.

Umgekehrt unterliegt auch im Gegensatz zum Stand der Technik die Wahl des Anordnungsraumes keinen Beschränkungen, als es sich bei seinen Datenobjekten neben Strukturhypothesen auch um Eingabedaten handeln kann!

Im Gegensatz zum Stand der Technik kann also den Eingabedaten der Anordnungsraum und den Strukturhypothesen der Erkundungsraum zugeordnet werden.

Ein besonderer Aspekt der Erfindung besteht zusätzlich in der Verallgemeinerung des oben definierten Begriffs der Anordnungsobjekte über die dem Stand der Technik entsprechende Interpretation als Vektoren in metrischen Räumen hinaus auf beliebige Datenobjekte, insbesondere auf Distanzobjekte zwischen Datenobjekten.

Distanzobjekte sind hierbei definiert als Datenobjekte, die Ähnlichkeitsbeziehungen bzw. Distanzen zwischen Datenobjekten gemäß einem beliebigen Distanzmaß charakterisieren. Hierbei sind sowohl durch Metriken induzierte Distanzmaße als auch insbesondere durch beliebige nichtmetrische Distanzmaße definierte Ähnlichkeitsbeziehungen bzw. Dissimilaritäten eingeschlossen. Einige typische Distanzmaße auf der Basis von Dissimilaritäten sind z. B. in [19] aufgeführt. Metrik wird hierbei in mathematischem Sinne definiert, siehe z. B. [5] Der Einsatz von XOM zur Datenverarbeitung kann auch insbesondere erfolgen, wenn zum Training mehr als eine zusammenhängende Datenverteilung im Erkundungsraum benutzt wird; wenn zum Training keine uniforme Datenverteilung im Erkundungsraum benutzt wird; wenn die Datenobjekte oder Teilmengen davon im Anordnungsraum nicht einer Metrik im mathematischen Sinne genügen; wenn die zum Training benutzten Datenverteilungen im Erkundungsraum nicht konvex sind; wenn die Datenobjekte oder Teilmengen davon im Anordnungsraum oder im Erkundungsraum nicht der euklidischen Geometrie genügen oder deren Distanz durch beliebige Dissimilaritätsmaße definiert ist; wenn für das Training Distanzen von beliebigen Datenobjekten verwendet werden, beispielsweise geodätische Distanzen oder einer Rangmetrik; wenn die topologieerhaltende Abbildung nicht der sequentiellen Formulierung einer selbstorganisierenden Karte nach Kohonen entspricht; wenn die zum Training der topologieerhaltenden Abbildung verwendete Verteilung der Trainingsdaten im Erkundungsraum nicht die Dimension 2 oder 3 hat; wenn die zum Training der topologieerhaltenden Abbildung verwendete Verteilung im Erkundungsraum keine Kugel in 3D ist; wenn die Trainingvorschrift der topologieerhaltenden Abbildung für sich für unterschiedliche Codebuchobjekte unterscheiden kann, vgl. auch Punkt 1m; wenn für die Visualisierung der Ergebnisse nicht alle Verbindungen bzw. topologischen Beziehungen gezeichnet werden, für die Distanzen bekannt sind oder berechnet wurden;

(b) **Irreguläre Struktur des Anordnungsraumes:** Ein wesentlicher Aspekt der Erfindung ist, daß bei XOM die dem Stand der Technik entsprechende Beschränkung des Anordnungsraumes auf diskrete periodische Gitter im $\mathbb{R}^n$, z. B. reguläre kubische oder hexagonale Gitter, aufgehoben ist, insbesondere wenn Eingabedaten verwendet werden, um die Eigenschaften, z. B. die Topologie, des Anordnungsraumes festzulegen und/oder Strukturhypothesen, um die Eigenschaften des Erkundungsraumes festzulegen. Besonders geschützt ist die Verwendung von Anordnungsräumen mit fraktaler lokaler oder globaler Dimension.

(c) **Kombination von irregulärer Struktur des Anordnungsraumes mit XOM**: Besonders sei betont, daß diejenigen Verfahren und Vorrichtungen ein besonderer Aspekt der Erfindung sind, bei denen eine irreguläre Struktur des Anordnungsraumes gemäß 1b vorliegt *und zugleich* Eingabedaten (und nicht nur Strukturhypothesen) verwendet werden, um die Eigenschaften dieses Anordnungsraumes, z. B. seine Topologie festzulegen.

(d) **Bestimmung des Erkundungsraumes durch Strukturhypothesen:** Ein weiterer wesentlicher Aspekt sind Verfahren und Vorrichtungen, bei denen Strukturhypothesen (und nicht nur Eingabedaten) verwendet werden, um die Eigenschaften des Erkundungsraumes festzulegen.

(e) **Beliebige Distanzmaße, z. B. paarweise Dissimilaritäten:** Ein besonderer Aspekt der Erfindung besteht in der Verallgemeinerung des oben definierten Begriffs der Anordnungsobjekte über die dem Stand der Technik entsprechende Interpretation als Vektoren in metrischen Räumen hinaus auf beliebige Datenobjekte, insbesondere auf Distanzobjekte zwischen Datenobjekten. Interessant ist dies insbesondere, wenn die Anordnungsobjekte durch Eingabedaten festgelegt werden.

Distanzobjekte sind hierbei definiert als Datenobjekte, die Ähnlichkeitsbeziehungen bzw. Distanzen zwischen Datenobjekten gemäß einem beliebigen Distanzmaß charakterisieren. Hierbei sind sowohl durch Metriken induzierte Distanzmaße als auch insbesondere durch beliebige nichtmetrische Distanzmaße definierte Ähnlichkeitsbeziehungen bzw. Dissimilaritäten eingeschlossen. Metrik wird hierbei in mathematischem Sinne definiert, siehe z. B. [5]. Ein wichtiges Beispiel ist die Verwendung einer Rangmetrik (z. B. in Analogie zur Definition der Rangmetrik zwischen dem Gewinnerneuron und den anderen Codebuchneuronen beim Neural Gas Algorithmus). Einige typische Distanzmaße auf der Basis von Dissimilaritäten sind z. B. in [19] aufgeführt. Distanzen zwischen Datenobjekten, also Distanzobjekte können also grundsätzlich durch beliebige Rechenverfahren oder auch durch Strukturhypothesen definiert sein.

Es sei auch betont, daß es für die Erfindung nicht erforderlich ist, daß bezüglich eines Distanzmaßes *alle* paarweisen Distanzen zwischen den Eingabedatenobjekten bzw. Anordnungsobjekten zu berechnen bzw. zum Training der topologieerhaltenden Abbildung zu verwenden. Auch ist es nicht erforderlich, daß solche Distanzen bzgl. aller Paare von Datenobjekten definiert sein müssen. Es genügt, eine beliebige Teilmenge der berechenbaren paarweisen Distanzen zu verwenden. Diese Teilmenge kann dem jeweiligen Ziel bzw. den Umständen der Datenverarbeitung angepaßt werden, ggf. auch dynamisch. Eine solche Anpassung ist in zahlreichen Situationen geboten, beispielsweise (i) beim sog. *Sparseness Annealing* (siehe unten), (ii) bei der Visualisierung von Graphen, bei denen nicht alle Kanten zwischen den Knoten bekannt sind oder in die Berechnung einbezogen werden sollen, (iii) bei Molekulardynamiksimulationen, bei denen die durch die kovalente Struktur des Moleküls vorgegebenen Zwangsbedingungen oder die zwischen einzelnen Atomen wirkenden Kräfte nur eine echte Teilmenge von paarweisen Distanzen zwischen den Atomen definiert ist bzw. für das Training der topologieerhaltenden Abbildung genutzt werden soll, (iv) bei Anwendungen in der Robotik, z. B. im Rahmen der inversen Kinematik, bei denen z. B. durch Zwangsbedingungen nur eine echte Teilmenge der paarweisen Distanzen zwischen den Robotergelenken definiert ist bzw. für das Training der topologieerhaltenden Abbildung genutzt werden soll.

Besonders interessant ist der Fall spärlich codierter Distanzmatrizen.

(f) **Nichtmetrische Anordnungsräume und Eingabedatenräume:** Besonders sei noch einmal betont, daß im Gegensatz zum Stand der Technik Verfahren und Vorrichtungen in die Erfindung einbezogen sind, bei denen zur Festlegung der Topologie des Anordnungsraumes im mathematischen Sinne nichtmetrische Distanzmaße verwendet werden, für die z. B. für eine echte oder unechte Teilmenge der paarweisen Distanzen die Symmetrierelation und/oder die Dreiecksungleichung nicht erfüllt sind/ist. Die Anordnungsobjekte können also im Gegensatz zum Stand der Technik einen nichtmetrischen Raum definieren, d. h. nicht einem metrischen Raum gemäß der Definition in [5] entsprechen. Besonders geschützt ist dieser Teilaspekt der Erfindung, wenn zur Festlegung der Topologie des Anordnungsraumes nicht nur Strukturhypothesen, sondern auch Eingabedaten verwendet werden.

(g) **Nichteuklidische XOM** Der Anordnungsraum, Erkundungsraum oder Ergebnisraum oder beliebige Kombinationen dieser Räume können einer nichteuklidischen, z. B. hyperbolischen Geometrie genügen.

(h) **Lokale Nachbarschaften, Beschleunigung durch schnelle Suche nächster Nachbarn, spärliche Distanzmatrizen:** Für das Training der topologieerhaltenden Abbildung können insbesondere nur oder nur zum Teil Datenobjekte aus lokalen Nachbarschaften der Datenobjekte im Anordnungsraum und/oder Erkundungsraum und/oder Ergebnisraum benutzt werden, d. h. hierdurch erzeugte spärlich kodierte Distanzmatrizen verwendet werden. Hierzu können insbesondere Beschleunigungsstrategien zur Definition der lokalen Nachbarschaften, z. B. zur Suche nach den $k$ nächsten Nachbarn, eingesetzt werden, wie sie dem Stand der Technik (vgl. z. B. [30], [29] und dort zitierte Literatur sowie [9]) oder dieser Patentschrift entsprechen, insbesondere im Hinblick auf unten folgende Punkte 5 und 12.

(i) **Fraktale:** Ein besonderer Aspekt der Erfindung ist, daß bei Verfahren und Vorrichtungen gemäß obiger XOM-Definition als Anordnungsraum Datenverteilungen verwendet werden können, die nach in der Literatur (z. B. [27] und dort zitierte Literatur, [16]) oder in dieser Patentschrift beschriebenen Dimensionsbestimmungsverfahren lokal oder global eine fraktale Dimension besitzen. Lokal bedeutet hier und im folgenden, daß die Dimensionsbestimmung für einzelne Datenobjekte durchgeführt wird, wohingegen global, daß die Dimensionsbestimmung für mehr als ein Datenobjekt durchgeführt wird, z. B. für einen gesamten Datensatz. Umgekehrt können Datenverteilungen mit fraktaler Dimension auch den Erkundungsraum definieren. Besonders geschützt sind Verfahren und Vorrichtungen, bei denen der Anordnungsraum Datenverteilungen mit fraktaler Dimension enthält, wobei diese Datenverteilungen Eingabedaten sind, ebenso Verfahren und Vorrichtungen, bei denen der Einbettungsraum Datenverteilungen mit fraktaler Dimension enthält, wobei diese Datenverteilungen Strukturhypothesen sind. Besonders geschützt ist auch die Kombination aus beiden Möglichkeiten.

(j) **Nichtorientierbare Flächen, Moebiusband und Kleinsche Flasche:** Sowohl der Anordnungsraum als auch der Erkundungsraum können Datenverteilungen enthalten, bei denen die durch die Datenobjekte im jeweiligen Raum erzeugte Topologie eine nichtorientierbare Fläche im Sinne der Differentialgeometrie beschreibt, z. B. ein Möbiusband oder eine Kleinsche Flasche. Besonders geschützt sind Verfahren und Vorrichtungen, bei denen der Anordnungsraum derartige Datenverteilungen enthält, wobei diese Datenverteilungen Eingabedaten sind, ebenso Verfahren und Vorrichtungen, bei denen der Erkundungsraum derartige Datenverteilungen enthält, wobei diese Datenverteilungen Strukturhypothesen sind. Besonders geschützt sind auch die Kombinationen aus beiden Möglichkeiten.

(k) **Stochastische XOM:** Sowohl der Anordnungsraum als auch der Erkundungsraum können Datenverteilungen enthalten, die Ergebnis eines Zufallsexperimentes sind. Besonders geschützt sind Verfahren und Vorrichtungen, bei denen die durch die Datenobjekte im Anordnungsraum induzierte Topologie durch ein Zufallsexperiment beeinflußt wird, ebenso Verfahren und Vorrichtungen, bei denen Datenobjekte des Erkundungsraumes im Sinne einer Strukturhypothese durch ein Zufallsexperiment bestimmt werden, sowie Kombinationen beider Möglichkeiten.

(l) **Hinzufügen oder Weglassen von Datenobjekten im Anordnungsraum:** Auf der Basis der XOM-Definition können Verfahren und Vorrichtungen konstruiert werden, bei denen vor oder während eines Trainingsvorganges oder vor oder während einer Folge von Trainingsvorgängen der topologieerhaltenden Abbildung zum Anordnungsraum eines oder mehrere neue Datenobjekte, insbesondere auch Distanzobjekte, hinzugefügt werden und die topologieerhaltende Abbildung partiell oder vollständig nachtrainiert wird. Insbesondere läßt sich dieses Vorgehen zur Interpolation, Extrapolation oder Approximation neuer Datenobjekte durch die topologieerhaltende Abbildung verwenden. Umgekehrt können in analoger Weise auch Datenobjekte, insbesondere auch Distanzobjekte, aus dem Anordnungsraum entfernt oder beliebig verändert werden, bevor die topologieerhaltende Abbildung partiell oder vollständig nachtrainiert wird. Insbesondere können Maße zur lokalen oder globalen Abbildungsqualität, z. B. im Sinne von 2 verwendet werden, um Datenobjekte des Anordnungsraumes zielgerichtet zu erzeugen, zu entfernen oder zu verändern.

(m) **Codebuchobjektspezifische Variation der Berechnungsvorschrift:** Es sei betont, daß auf der Basis der XOM-Definition insbesondere auch Verfahren und Vorrichtungen entwickelt werden können, bei denen beim Training der topologieerhaltenden Abbildung nicht alle zu den Datenobjekten im Anordnungsraum gehörenden Codebuchobjekte durch die gleiche Berechnungsvorschrift trainiert werden. Vielmehr ist es häufig möglich und/oder geboten, für unterschiedliche Codebuchobjekte unterschiedliche Berechnungsvorschriften anzuwenden oder Parameter der gleichen Berechnungsvorschrift für unterschiedliche Codebuchobjekte zu variieren. Beides kann auch dynamisch innerhalb eines einzelnen Trainingsvorganges oder in einer Folge mehrerer Trainingsvorgänge erfolgen. Insbesondere sind auch Verfahren und Vorrichtungen möglich, bei denen nicht jedem Datenobjekt des Anordnungsraumes genau ein Codebuchobjekt zugeordnet ist. Vielmehr können unterschiedlichen Datenobjekten des Anordnungsraumes unterschiedliche Anzahlen und Typen von Codebuchobjekten zugeordnet werden, wobei diese Anzahlen und Typen auch dynamisch veränderlich gewählt werden können, z. B. im Hinblick auf das spezifische Datenverarbeitungsproblem, auf den jeweiligen Trainingszustand der topologieerhaltenden Abbildung, auf die aktuell oder früher erreichte Abbildungsqualität oder auf beliebige, z. B. durch das Datenanalyseproblem induzierte Zusatzbedingungen. Es kann auch Datenobjekte des Anordnungsraumes geben, denen ständig oder vorübergehend kein Codebuchobjekt zugeordnet wird. Ein wichtiges Beispiel für die dynamische, codebuchobjektspezifische Anpassung der Berechnungsvorschrift ist die Anpassung der Kooperativitätsfunktion selbstorganisierender Karten im Hinblick auf Maße der lokalen Topologieerhaltung, etwa im Sinne von Verfahren wie [7]

(n) **Datenobjektspezifische Variation der Eigenschaften, z. B. Berechnungsvorschrift für Datenobjekte des Erkundungs- und/oder Anordnungsraumes:** Die in lm beschriebene datenobjektspezifische Variabilität gilt sinngemäß auch für unterschiedliche Objekte des Erkundungsraumes und/oder des Anordnungsraumes, z. B. kann die Berechnungsvorschrift der topologieerhaltenden Abbildung datenobjektspezifisch variieren. Sie kann insbesondere auch dynamisch veränderlich gewählt werden, z. B. im Hinblick auf das spezifische Datenverarbeitungsproblem, auf den jeweiligen Trainingszustand der topologieerhaltenden Abbildung, auf die aktuell oder früher erreichte Abbildungsqualität oder auf beliebige, z. B. durch das Datenanalyseproblem induzierte Zusatzbedingungen. Auch können Datenobjekte des Erkundungs-, Ergebnis- und/oder Anordnungsraumes, z. B. im Hinblick auf die soeben genannten Kriterien, dynamisch veränderlich sein, z. B. können neue Datenobjekte dynamisch erzeugt, bestehende Datenobjekte dynamisch entfernt oder beliebig verändert werden.

(o) **Überwachte XOM:** Das Training der topologieerhaltenden Abbildung kann in Abhängigkeit von Datenobjekten oder Eigenschaften von Datenobjekten erfolgen, die mit den Datenobjekten des Anordnungsraumes assoziiert sind. Interessant ist der Fall, daß Datenobjekten des Anordnungsraumes weitere Datenobjekte assoziiert sind, die im Anordnungsraum nicht auftreten bzw. Datenobjekte des Anordnungsraumes Zusatzeigenschaften besitzen, die für die Bestimmung des Anordnungsraumes ständig oder vorübergehend nicht berücksichtigt werden. Ein besonders wichtiger Fall liegt vor, wenn diese zusätzlichen Datenobjekte oder Eigenschaften von Datenobjekten im Sinne von Funktionswerten interpretiert werden, die Datenobjekten des Anordnungsraumes zugeordnet werden. Hier wiederum ist besonders der Fall wichtig, bei dem diese zusätzlichen Datenobjekte oder Eigenschaften von Datenobjekten dazu verwendet werden, den Erkundungsraum, den Anordnungsraum, den Ergebnisraum oder die der topologieerhaltenden Abbildung zugrundeliegende Datenverarbeitungsvorschrift oder deren Parameter in zielgerichteter Weise, insbesondere datenobjektspezifisch, zu verändern. Hierdurch lassen sich unterschiedlichste, auf XOM basierende Verfahren und Vorrichtungen zum überwachten Lernen konstruieren, insbesondere z. B. zum Interpolieren, Extrapolieren, Approximieren oder zur sonstwie gearteten Verarbeitung von Funktionen konstruieren. Es sei betont, daß es sich bei den Datenobjekten des Anordnungsraumes sowie den zusätzlichen mit diesen assoziierten Datenobjekten bzw. Objekteigenschaften sowohl um Eingabedaten als auch um Strukturhypothesen handeln kann.

(p) **XOM unter Zusatzbedingungen:** Ein besonders wichtige XOM-Variante besteht darin, daß das Training der topologieerhaltenden Abbildung durch Zusatzbedingungen beeinflußt wird, die beliebige Eigenschaften des Erkundungsraumes, des Anordnungsraumes oder des Ergebnisraumes beeinflussen, z. B. im Hinblick auf das spezifische Datenverarbeitungsproblem, auf den jeweiligen Trainingszustand der topologieerhaltenden Abbildung, auf die aktuell oder früher erreichte Abbildungsqualität oder auf beliebige, z. B. durch das Datenanalyseproblem induzierte Zusatzbedingungen. So ist es beispielsweise möglich, die Wanderung einer echten oder unechten Teilmenge der Codebuchobjekte im Ergebnisraum statisch oder dynamisch einzuschränken oder sonstwie zu beeinflussen.

(q) **Dynamisch veränderlicher Erkundungsraum, wachsende XOM-Abbildungen:** Besonders hervorzuheben sind XOM-Realisierungen, bei denen der Erkundungsraum bzw. seine Datenobjekte im Verlaufe eines Trainingsvorgangs oder im Verlaufe einer Folge von Trainingsvorgängen der topologieerhaltenden Abbildung zielgerichtet oder nicht zielgerichtet beeinflußt werden, d. h. dynamisch veränderlich sind, z. B. im Hinblick auf Kriterien der aktuell oder früher erreichten lokalen oder globalen Qualität der topologieerhaltenden Abbildung, z. B. im Sinne von 2. Besonders wichtig ist der Fall von XOM-Abbildungen mit wachsenden, schrumpfenden, sich teilenden oder sonstwie global oder lokal veränderlichen Erkundungsräumen, bei denen sukzessiv Strukturhypothesen, z. B. über Eingabedaten verbessert werden sollen.

(r) **Umskalierung der Distanzen im Anordnungsraum, Sparseness Annealing:** Besonders interessante XOM-Verfahren und -Vorrichtungen verändern während des Trainingsvorgangs oder im Laufe einer Folge wiederholter Trainingsvorgänge der topologieerhaltenden Abbildung die Topologie des Anordnungsraumes, z. B. durch eine mathematisch formulierbare Berechnungsvorschrift. Diese kann beispielsweise von der aktuell oder in einem früheren Stadium erreichten Abbildungsqualität oder von der aktuell erreichten Anzahl von Trainingsschritten oder Trainingsvorgängen abhängen. Wenn die Topologie des Anordnungsraumes durch eine echte oder unechte Teilmenge der paarweisen Distanzen zwischen den Datenobjekten des Anordnungsraumes repräsentiert wird, so kann hierbei eine globale, d. h. alle verwendeten Distanzen betreffende, oder auch eine lokale, d. h. individuell angepaßte Umskalierung einzelner Distanzen vorgenommen werden. Durch diese Umskalierung kann beispielsweise erreicht werden, daß der relative Anteil großer Distanzen an der Gesamtzahl der verwendeten Distanzen im Verlauf eines oder mehrerer Trainingsvorgänge der topologieerhaltenden Abbildung zunimmt. Beeinflussen diese großen Distanzen das Training der topologieerhaltenden Abbildung nur wenig, so können diese für das weitere Training vernachlässigt werden. Dies entspricht einer zunehmenden funktionellen "Ausdünnung" der Distanzmatrix, d. h. die Anzahl der beim Training der topologieerhaltenden Abbildung zu berücksichtigenden Distanzen nimmt ab. Hierdurch ergibt sich u. a. eine Reduktion des Rechenaufwandes. Dieses Vorgehen sei als "Spärlichkeitsabkühlung" oder "Sparseness Annealing" bezeichnet. Eines beliebig vieler denkbarer Schemata ist zum Beispiel folgendes: Seien $d_{ij}(t)$ die Distanzen zwischen Datenobjekten $i$ und $j$ des Anordnungsraumes im Trainingsstadium $t$. Seien $d_{ij}$ die ursprünglichen Distanzen. Durch Umskalierung gemäß

$$d_{ij}(t) = \left(\frac{d_{ij}}{\sigma(t)}\right)^{\alpha}$$

mit $\alpha > 0$ kann beispielsweise erreicht werden, daß $d_{ij}(t) > d_{ij}$ für $d_{ij} > \sigma(t)$ gilt. Hierbei kann $\sigma(t)$ als eine mit t monoton abnehmende Funktion gewählt werden (z. B. im Sinne eines Abkühlungsschemas wie etwa nach Gleichung (10)). Durch Variation von $\alpha$ kann die Stärke der nichtlinearen Verzerrung beeinflußt werden. Für die Umskalierungsvorschrift

$$d_{ij}(t) = d_{ij} \left( 1 + \left( \frac{d_{ij}}{\sigma(t)} \right)^{\alpha} \right)$$

ergibt sich für $\alpha \gg 1$ ein Verhalten, bei dem die Distanzen für $d_{ij} < \sigma(t)$ nahezu unverändert bleiben, hingegen für $d_{ij} > \sigma(t)$ jedoch deutlich hochskaliert werden. Unter Umständen kann es auch sinnvoll sein, nur Distanzen $d_{ij}$ in einem bestimmten Größenintervall $[a, b]$ mit $a, b \in \mathbb{R}$, $a, b \geq 0$ für das Training der topologieerhaltenden Abbildung zu berücksichtigen. Hierzu könnte man z. B. setzen:

$$d_{ij} \leftarrow \begin{cases} 0 & : \quad d_{ij} < a \\ d_{ij} - a & : \quad d_{ij} \in [a, b] \\ \infty & : \quad d_{ij} > b. \end{cases}$$

Es sei betont, daß die Umskalierung der Distanzen nicht auf diese oder ähnliche Rechenvorschriften beschränkt ist, sondern problemangepaßt im Hinblick auf die jeweilige Datenverarbeitungssituation beliebig erfolgen kann. Auch ist es nicht erforderlich, bei den vom Trainingsstadium der topologieerhaltenden Abbildung abhängigen Umskalierungen diese in jedem Trainingsschritt jeweils neu zu berechnen. Vielmehr kann es genügen, dies erst wieder nach einer Folge mehrerer Trainingsschritte zu tun, wodurch sich eine erhebliche Reduktion des Rechenaufwandes ergeben kann.

(s) **Iteration:** Verfahren und Vorrichtungen gemäß XOM-Definition können auch iterativ angewandt werden, indem Datenobjekte des Ergebnisraums einer gemäß XOM trainierten topologieerhaltenden Abbildung ganz oder teilweise dazu benutzt werden, den Anordnungsraum einer weiteren topologieerhaltenden Abbildung oder eines neuen Trainingsschritts oder Trainingsvorgangs derselben topologieerhaltenden Abbildung zu definieren oder zumindest zu beeinflussen. Dies sei an einem Beispiel erläutert: Wird beispielsweise durch XOM eine nichtlineare Einbettung einer Datenverteilung im $\mathbb{R}^k$, welche als Anordnungsraum dient, in eine Datenverteilung im $\mathbb{R}^n$, welche als Erkundungsraum dient, vorgenommen, wobei $k, n \in \mathbb{N}$, so erhält man im einfachsten Fall als Ergebnisraum eine Menge von Codebuchvektoren im $\mathbb{R}^k$. Diese können nun direkt oder durch eine geeignete Berechnungsvorschrift dazu benutzt werden, den Anordnungsraum einer neuen XOM-Abbildung festzulegen, die beispielsweise die durch diese Codebuchvektoren induzierte Topologie auf eine Datenverteilung im $\mathbb{R}^m$, $m \in \mathbb{N}$ abbildet, welche nunmehr als Erkundungsraum einer topologieerhaltenden Abbildung verwendet wird. Aus dem Ergebnisraum der ersten XOM-Anwendung wird also der Anordnungsraum einer weiteren XOM-Anwendung erzeugt. Dieses Verfahren läßt sich beliebig iterieren. Ein wichtiger Spezialfall besteht darin, daß der Ergebnisraum bzw. Erkundungsraum einerseits und der Anordnungsraum andererseits wechselseitig ihre Rollen tauschen. Dies kann ebenfalls iterativ durchgeführt werden. Selbstverständlich unterliegt die Wahl der zugrundenliegenden Datenobjekte, Räume und Distanzmaße keinen Beschränkungen.

(t) **Selbstorganisation, Selbstregeneration, Selbstreproduktion, Morphogenese, verteilte Wissensrepräsentation:** Durch XOM können leistungsfähige Verfahren und Vorrichtungen konstruiert werden, die charakteristische Eigenschaften lebender Systeme besitzen, insbesondere Selbstregeneration, Selbstreproduktion und Selbststabilisierung, Lokalität der Informationsverarbeitung bzw. verteilte Wissensrepräsentation. Ein Beispiel, wie solche Systeme konstruiert werden können sei im folgenden erläutert: Ausgangspunkt sind Datenobjekte, die im folgenden als "Zellen" bezeichnet werden: diese repräsentieren Teile eines Gesamtsystems, das im folgenden als "Organismus" bezeichnet wird. Eine Zelle besitzt folgende Datenobjekte, Eigenschaften, Verfahren bzw. Vorrichtungen, im folgenden "Elemente" genannt:

- Information, die erforderlich ist, um den Anordnungsraum einer topologieerhaltenden Abbildung teilweise oder vollständig zu konstruieren. Diese entspricht dem "Bauplan" des Gesamtorganismus. Dieser muß nicht vollständig in jeder Zelle vorhanden sein.

- Verfahren und Vorrichtung, mit der die Zelle bestimmen kann, welches oder welche Datenobjekte des Anordnungsraumes, Erkundungsraumes und/oder
Ergebnisraumes einer topologieerhaltenden Abbildung in welcher Weise ihr zugeordnet sind: die hierdurch erhaltene Information wird im folgenden 'Position' im jeweiligen Raum genannt.
- Verfahren und Vorrichtung, mit der die Zelle ihre Positionen im Anordnungsraum, Erkundungsraum und/ oder Ergebnisraum oder auch andere Information anderen Zellen mitteilen kann bzw. die diesbezüglich durch andere Zellen mitgeteilte Information verwerten kann
- Verfahren und Vorrichtung, mit der die Zelle unter Verwendung einer XOM-Abbildung eine neue Position im Ergebnisraum ermitteln kann
- Verfahren und Vorrichtung, mit der die Zelle ihre Position im Ergebnisraum verändern kann, z. B. im Hinblick auf die unter Verwendung einer XOM-Abbildung ermittelte neue Position im Ergebnisraum
- Verfahren und Vorrichtung, mit der die Zelle die Konsistenz (siehe unten) ihrer Positionen in den unterschiedlichen Räumen überprüfen und ggf. korrigieren kann
Optional können auch folgende Elemente vorliegen:
- Verfahren und Vorrichtung zur Selbstkopie der Zelle
- Verfahren und Vorrichtung zur Selbstzerstörung der Zelle
- Verfahren und Vorrichtung zur Veränderung der Datenobjekte oder Eigenschaften der Zelle

Es sei betont, daß eine Zelle nicht alle aufgeführten Elemente besitzen muß. Auch sei betont, daß die aufgeführten Elemente nicht unbedingt "lokal", d. h. in der einzelnen Zelle, repräsentiert sein müssen. Vielmehr ist es denkbar, daß die Zelle auch auf globale, d. h. mehr als eine Zelle betreffende Repräsentationen obiger Elemente zurückgreifen kann. Dies kann insbesondere für die Konstruktion technischer Systeme durch XOM Vorteile bieten.

Das "Leben", d. h. der Funktionszustand des Organismus wird nun wesentlich durch XOM bestimmt. Als typisches Beispiel sei hierzu eine sequentielle Vorgehensweise skizziert, bei der alle Zellen an allen Schritten teilnehmen. Diese Bedingungen müssen jedoch nicht erfüllt sein, d. h. es können in analoger Weise Vorgehensweisen entwickelt werden, bei denen nicht alle Zellen an allen Schritten teilnehmen und/oder eine parallele, d. h. gleichzeitig mehrere Datenobjekte betreffende Datenverarbeitung stattfindet. Die folgende Darstellung ist durch das Vorgehen bei selbstorganisierenden Karten motiviert, läßt sich jedoch einfach auf andere topologieerhaltende Abbildungen übertragen.

Zunächst wird ein Datenobjekt des Erkundungsraumes einer topologieerhaltenden Abbildung ausgewählt, im folgenden "Reiz" genannt. Jede Zelle bestimmt nun ihre Position im Erkundungsraum relativ zu diesem Reiz. Beispielsweise ist es denkbar, daß die Zelle ihre Distanz (bzgl. eines beliebigen Distanzmaßes) im Erkundungsraum zu diesem Reiz ermittelt. Die Zellen teilen sich gegenseitig Information über ihre relative Position zum Reiz mit. Die Zellen vergleichen nun diese Informationen und ermitteln eine Zelle, deren Position im Erkundungsraum am besten mit dem Reiz übereinstimmt, die sog. "Gewinnerzelle". Diese Gewinnerzelle teilt nun allen Zellen ihre Position im Anordnungsraum mit. Die Zellen vergleichen nun diese Information mit ihrem Wissen über den Anordnungsraum. Entscheidend ist, daß dieses Wissen *lokal* in den einzelnen Zellen verfügbar ist (verteilte Wissensrepräsentation). Dieses Wissen entspricht einem "Bauplan" des Organismus, der partiell oder vollständig in jeder Zelle vorhanden ist. Hierdurch ist es den Zellen möglich, die Position der Gewinnerzelle im Anordnungsraum zu ermitteln. Durch Vergleich ihrer eigenen Position im Anordnungsraum mit der Position der Gewinnerzelle im Anordnungsraum können die einzelnen Zellen ihre Distanz (bzgl. eines beliebigen Distanzmaßes) von der Gewinnerzelle im Anordnungsraum bestimmen. Die Zellen verwenden nun diese Distanz, um durch XOM eine Aktualisierung ihrer Position im Ergebnisraum durchzuführen. Mit Darbietung eines neuen Reizes beginnt der Vorgang von neuem.

Wichtig ist, daß die Zellen (je nach verwendeter topologieerhaltender Abbildung) ihre (relativen) Positionen im Erkundungs-, Anordnungs- bzw. Ergebnisraum bestimmen können. Dies kann z. B. durch Informationsaustausch in *lokalen Umgebungen* der Zellen in den verschiedenen Räumen erfolgen. Die Zellen überprüfen die Konsistenz der Positionen, die sie in den verschiedenen Räumen einnehmen, und korrigieren diese entsprechend, entweder ständig oder gelegentlich.

Die Positionsbestimmung in den einzelnen Räumen kann z. B. folgendermaßen realisiert werden: Alle Zellen erzeugen ein oder mehrere "Produkte", z. B. Felder, chemische Substanzen oder beliebige Datenobjekte. Diese verteilen sich nach geeigneten Berechnungsvorschriften im jeweiligen Raum. Ggf. klingen sie in Abhängigkeit von der räumlichen und/oder zeitlichen Distanz zu ihrer Erzeugung ab bzw. verändern ihre Eigenschaften. Aufgrund der lokalen Bestimmung der resultierenden Feldstärken, Substanzkonzentrationen oder Eigenschaften durch die einzelnen Zellen können diese ihre Position im jeweiligen Raum bestimmen. Denkbar ist hier z. B. auch eine raumrichtungsabhängige Integration über die Stärke, Konzentration oder Eigenschaften der Produkte, die in einzelnen Zellen oder durch Informationsaustausch in lokalen Zellverbänden durchgeführt werden kann.

Eine elegante Form der Positionsbestimmung im Anordnungsraum kann auch durch XOM realisiert werden: Hierbei werden die Positionen der Zellen im Erkundungsraum bzw. Ergebnisraum als Anordnungsraum einer neuen topologieerhaltenden Abbildung verwendet und umgekehrt. Die Rollen von Erkundungsraum bzw. Ergebnisraum und Anordnungsraum werden also im Sinne von ls vertauscht. Nach Training der neuen topologieerhaltenden Abbildung erhält man als Ergebnis Schätzwerte der Zellpositionen im Anordnungsraum, die mit den bislang in den Zellen gespeicherten Zellpositionen im Anordnungsraum verglichen werden können. Letztere können dann ggf. geeignet aktualisiert werden.

In Abhängigkeit von derartigen Positionsbestimmungen und Konsistenzprüfungen können dann auch lokale oder globale Korrekturen der Zellzahl oder Zelleigenschaften im Organismus vorgenommen werden. Hierzu können ggf. neue Zellen erzeugt oder existierende Zellen zerstört oder verändert werden. Ein globales Korrekturmaß ist zum Beispiel die Gesamtzahl der Zellen im Vergleich zur Gesamtzahl der Datenobjekte im Anordnungsraum.

Wesentlich ist, daß derartige korrekturmotivierende Konsistenzmaße aus Kriterien der Abbildungsqualität topologieerhaltender Abbildungen gewonnen werden können, wie sie z. B. in 2 aufgeführt werden. Insbesondere sind hierbei Maße zur Beurteilung der lokalen oder globalen Topologieerhaltung wichtig. Wird beispielsweise, wie oben beschrieben, eine Positionsbestimmung der Zellen im Anordnungsraum durch XOM vorgenommen, so kann Wissen über die Stärke und/oder die Art lokaler Topologieverletzungen dazu verwendet werden, um lokale Korrekturen im Hinblick auf Zellzahl und Zelleigenschaften durchzuführen. Wird umgekehrt durch XOM eine Positionsbestimmung der Zelle im Erkundungs- bzw. Ergebnisraum durchgeführt, so können auf der Basis derartiger Konsistenzmaße ebenfalls entsprechende Korrekturen, z. B. im Sinne von

1m, 1n oder 1q.

Eine charakteristische Eigenschaft derartiger auf XOM basierender Systeme ist, daß bei gleicher oder ähnlicher Zellausstattung jede Zelle grundsätzlich jeden Ort bzw. jede Funktion im Organismus übernehmen kann, d. h. insbesondere auch verändern kann. Die Gesamtstruktur und -funktion des Organismus bleibt hierbei im wesentlichen unverändert. Die einzelnen Zellen in derartigen Verfahren und Vorrichtungen erinnern somit an "pluripotente Stammzellen" in der Biologie. Allerdings kann diese Flexibilität der Zellen auch eingeschränkt werden, was im Hinblick auf die Ähnlichkeit mit biologischen Systemen auch als "Zelldifferenzierune" bezeichnet werden kann.

Der Erkundungsraum kann am ehesten als "Körper" interpretiert werden im Sinne eines Raumes, den der Organismus einnimmt. Ist dieser veränderlich oder äußeren Einflüssen unterworfen, so kann sich der Organismus durch adaptives Training der topologieerhaltenden Abbildung gemäß XOM selbst stabilisieren, bzw. an die neuen Bedingungen des Lebensraumes anpassen.

Werden Teile derartiger auf XOM basierender Systeme entfernt bzw. zerstört, so können sich die Systeme unter Rückgriff auf die oben beschriebenen Vorgänge regenerieren. Werden solche Systeme in zwei oder mehrere Teile geteilt, so können sich aus den einzelnen Teilen wieder gesamte Organismen entwickeln. Diese Systeme verfügen also über die Fähigkeit zur Selbstregeneration und Selbstreproduktion, wobei Selbstregeneration als Voraussetzung für die Selbstreproduktion durch Teilung des Organismus gewertet werden kann. Aus jeweils kleinen Teilen des Organismus bzw. wenigen oder einzelnen Zellen kann ein neues System entstehen, das alle Eigenschaften des Gesamtorganismus besitzt, u. a. auch seine Form bzw. Gestalt. Somit kann man durch XOM Verfahren und Vorrichtungen mit der Fähigkeit zur *Gestaltbildung* bzw. *Morphogenese* konstruieren bzw. auch Selbstorganisationsprozesse in Natur und Technik simulieren. Der Schutzanspruch dieses Patents bezieht sich auf beides, sowohl für einzelne Systeme als auch Ensembles solcher Systeme.

Offensichtlich sind zahlreiche Erweiterungen derartiger Systeme denkbar: So können Prinzipien aus dem Bereich der Biologie, insbesondere Genetik oder der evolutionären Algorithmen verwendet werden, um oben beschriebene Verfahren und Vorrichtungen mit bestimmten Eigenschaften zu "züchten" bzw. weiter zu verbessern, sowohl auf der Ebene der einzelnen Zellen als auch der Organismen. So wäre z. B. auch eine zwei- oder mehrfache Repräsentation des Anordnungsraumes als "Bauplan" des Gesamtorganismus in jeder einzelnen Zelle denkbar in Analogie zum diploiden Chromosomensatz in somatischen Zellen bei biologischen Organismen sowie die Möglichkeit geschlechtlicher Fortpflanzung der Gesamtorganismen oder Zellen mit entsprechenden Vererbungsschemata.

Weiter sei betont, daß die Informationsverarbeitung in den beschriebenen XOM-Systemen auch hierarchisch erfolgen kann. Zum Beispiel kann das Training der topologieerhaltenden Abbildung - ggf. in Abhängigkeit vom jeweiligen Systemzustand bzw. Organisationsniveau, z. B. einer geeignet zu definierenden 'Lebensphase des Organismus' - unterschiedliche Hierarchiestufen durchlaufen, z. B. durch die Auswahl von Teilmengen der zu repräsentierenden Datenobjekte des Anordnungsraumes oder durch geeignete Berechnungsverfahren aus der Verteilung der Datenobjekte im Anordnungsraum gewonnene Mengen 'prototypischer Datenobjekte'. Hierzu kann beispielsweise eine Vektorquantisierung des Anordnungsraumes durchgeführt werden. Insbesondere kann es hilfreich sein, in den einzelnen Zellen Informationen über unterschiedliche Anordnungsräume zu repräsentieren, die je nach Systemzustand für die XOM-Abbildung verwendet werden können. Hierdurch oder durch ähnliche Verfahren ist es möglich, zunächst die Grobstruktur und erst in späteren Phasen die Feinstruktur des Organismus zu entwickeln.

Ein wesentliches Kriterium für ein Verfahren oder eine Vorrichtung im Sinne eines oben beschriebenen XOM-Organismus ist, daß Datenobjekten des Anordnungsraumes Information über den Anordnungsraum zugeordnet wird, die über das Datenobjekt selbst hinausweist, d. h. zunächst nicht im Datenobjekt enthalten ist (z. B. über die Topologie des Anordnungsraumes). Diese Information dient als lokal gespeicherte Information über die Struktur des Gesamtsystems im Sinne eines vollständigen oder unvollständigen "Bauplanes". Dieser kann u. a. dazu genutzt werden, "Zellen" in obigem Sinne bzw. zugeordnete Datenobjekte des Anordnungsraumes, Ergebnisraumes und/oder Erkundungsraumes zu erzeugen, zu entfernen oder zu verändern.

(u) **Hierarchische XOM:** Im Rahmen von XOM kann das Training der topologieerhaltenden Abbildung unterschiedliche Hierarchiestufen durchlaufen, beispielsweise durch die Auswahl von Teilmengen der durch die topologieerhaltende Abbildung zu repräsentierenden Datenobjekte des Anordnungsraumes oder durch geeignete Berechnungsverfahren aus der Verteilung der Datenobjekte im Anordnungsraum gewonnene Mengen 'prototypischer Datenobjekte'. Diese können z. B. durch Vektorquantisierung des Anordnungsraumes erzeugt werden.

(v) **Dynamische XOM:** Wie bereits erwähnt, ist es möglich, die Datenobjekte oder deren Verteilung im Anordnungsraum oder die Datenobjekte oder deren Verteilung im Erkundungsraum während eines Trainingsvorganges oder im Laufe einer Folge von Trainingsvorgängen zu verändern.

(w) **Testphase bei bereits trainierter XOM:** Schließlich können nach abgeschlossenem Training einer im Sinne von XOM verwendeten topologieerhaltenden Abbildung neue Datenobjekte zum Anordnungsraum, Erkundungsraum oder Ergebnisraum hinzugefügt und unter Verwendung dieser topologieerhaltenden Abbildung ohne deren neues Training verarbeitet werden, zum Beispiel zum Zwecke der Inter- oder Extrapolation, Approximation, Einbettung, harten oder unscharfen Clusterzuweisung, Klassifikation, überwachten Abbildung durch Funktionen oder Relationen, Visualisierung oder Einsortierung oder im Rahmen von Selbstorganisations- oder Morphogeneseprozessen. Hierbei können z. B. auch Verfahren gemäß Stand der Technik zum Einsatz kommen.

2. **Qualitätsbeurteilung:** Bedeutsam sind Verfahren und Vorrichtungen zur Bestimmung der lokalen oder globalen Abbildungsqualität der gemäß 1 verwendeten topologieerhaltenden Abbildungen. Diese kann beispielsweise untersucht werden durch:

(a) **Topologie- und Verteilungserhaltung:** Hierzu eignet sich die Bestimmung von Maßen lokaler oder globaler Topologieerhaltung entsprechend dem Stand der Technik, z. B. durch das sog. topographische Produkt gemäß [1] oder vergleichbare Maße, wie sie etwa in [24], Kapitel 10.3 und der dort zitierten Literatur beschrieben sind. Eine Qualitätsbeurteilung kann auch erfolgen durch Untersuchungen von Maßen der Verteilungserhaltung, z. B. sog. "Verzerrungsexponenten", die die Dichte der Codebuchobjekte im Ergebnisraum in Abhängigkeit von der Dichte der Datenobjekte im Erkundungsraum oder der Datenobjekte im Anordnungsraum beschreiben können, z. B. im Sinne von [8] oder [35]

(b) **Verzerrungsmaße:** Die Untersuchung der XOM-Abbildungsqualität kann erfolgen durch Bestimmung von Verzerrungsmaßen, wie z. B. der Kostenfunktion nichtlinearer Einbettungsverfahren, z. B. der Sammon-Abbildung [40] oder von sog. "Minimal Wiring"-Kostenfunktionen [32], [11] oder durch vergleichende Bestimmung der Rangordnung nächster Nachbarn im Anordnungs- und Ergebnisraum, z. B. nach Präsentation eines Datenobjektes im Erkundungsraum im Sinne von [7]

(c) **Distanzplot:** Die Untersuchung der XOM-Abbildungsqualität kann erfolgen durch Erzeugen und/oder Analyse von sog. "Distanzplots": Hierbei werden die Distanzen zwischen Datenobjekten im Ergebnisraum (oder Erkundungsraum) gegen die Distanzen korrespondierender Datenobjekte im Anordnungsraum graphisch aufgetragen, z. B. die paarweisen Distanzen der Codebuchvektoren im Merkmalsraum einer selbstorganisierenden Karte gegenüber den paarweisen Distanzen der korrespondierenden Positionsvektoren im Modellcortex. Die korrespondierenden Distanzen in den unterschiedlichen Räumen können jedoch auch ohne graphische Darstellung vergleichend analysiert werden. Auch wenn dies der Fall ist, wird der Einfachheit im folgenden dennoch von "Distanzplot" gesprochen. Es ist nicht notwendig, jeweils alle berechenbaren paarweisen Distanzen in den einzelnen Räumen zu verwenden. Die Analyse kann z. B. erfolgen durch qualitative visuelle Betrachtung und Interpretation des Distanzplots, durch Berechnung von Maßen für die "Breite" des Distanzplots, von Korrelationsmaßen zwischen den Distanzen in den unterschiedlichen Räumen, z. B. von Korrelationskoeffizienten oder Kovarianzen oder durch Verfahren zur globalen (d. h. auf alle Distanzpaare bezogenen) und lokalen (d. h auf einzelne Distanzpaare bezogenen) Dimensionsbestimmung des Distanzplots, z. B. im Sinne der Hausdorff-Dimension [18] oder Grassberger-Procaccia-Dimension [16]. Insbesondere sei betont, daß derartige Analysen selektiv für unterschiedliche Größenordnungen der Distanzen im Erkundungs-, Ergebnis-, und Anordnungsraum durchgeführt werden können. Insbesondere können durch selektive Analyse des Distanzplots für große Distanzen Faltungsphänomene der topologieerhaltenden Abbildung (wie etwa in [36], Kapitel 14 beschrieben), für kleine Distanzen lokale Topologieverletzungen beobachtet und quantitativ ausgewertet werden. Die genannten oder ähnliche Maße können auch als Instrumente zur vergleichenden Bestimmung der Dimensionen von Datenverteilungen in den unterschiedlichen Räumen verwendet werden.

(d) **Ergebnisplot bzw. Erkundungsplot:** Eine Qualitätsbeurteilung für XOM kann auch erfolgen durch Erzeugen und/oder Analysieren eines Plots der Codebuchobjekte im Ergebnisraum bzw. diesen Codebuchobjekten entsprechenden Datenobjekten im Erkundungsraum, insbesondere wenn Ergebnis- und Erkundungsraum übereinstimmen. Insbesondere können hierbei Datenobjekte und/oder topologische Beziehungen der zu den Codebuchobjekten korrespondierenden Datenobjekte des Anordnungsraumes durch Verbindungslinien oder sonstige graphische Hilfsmittel (Linien oder graphische Objekte unterschiedlicher Dicke, Farbe, Schattierung, Struktur, Textur) visualisiert und/oder analysiert werden. Besonders geschützt ist eine derartige Darstellung, wenn sie mit der Darstellung von Datenobjekten des Erkundungsraumes und/oder Ergebnisraumes bzw. deren topologischen Beziehungen kombiniert wird. Ganz besonders ist hier auch die Darstellung der lokalen Größe von Qualitätsmaßen der verwendeten topologieerhaltenden Abbildung durch beliebige graphische Hilfsmittel hervorzuheben, z. B. bzgl. Verzerrung, Topologie- oder Verteilungserhaltung sowie bezüglich aus Distanzplots und Qualitätsbeurteilung durch überwachtes Lernen gewonnenen Informationen. Da die genannten Darstellungsarten ein wesentlicher Aspekt der explorativen Analyse des Anordnungsraumes bzw. seiner Topologie durch XOM ist, sollen sie durch das Patent besonders geschützt sein, insbesondere wenn der Anordnungsraum ganz oder teilweise durch Eingabedaten bestimmt ist oder wenn der Erkundungs- bzw. Ergebnisraum ganz oder teilweise durch Strukturhypothesen bestimmt ist. Die Ausführungen dieses Punktes gelten allgemein für Datenobjekte und für aus Datenobjekten neu berechnete Datenobjekte zugehörige Raumbereiche.

(e) **Anordnungsplot:** Umgekehrt können Datenobjekte des Erkundungsraumes und/oder des Ergebnisraumes im Anordnungsraum visualisiert werden. Insbesondere können hierbei Datenobjekte und/oder toplogische Beziehungen der zu den Datenobjekten im Erkundungs- und/oder Ergebnisraum durch Verbindungslinien oder sonstige graphische Hilfsmittel (Linien oder graphische Objekte unterschiedlicher Dicke, Farbe, Schattierung, Struktur, Textur) visualisiert und/oder analysiert werden. Besonders geschützt ist eine derartige Darstellung, wenn sie mit der Darstellung von Datenobjekten des Anordnungsraumes bzw. deren topologischen Beziehungen kombiniert wird. Ganz besonders ist hier auch die Darstellung der lokalen Größe von Qualitätsmaßen der verwendeten topologieerhaltenden Abbildung durch beliebige graphische Hilfsmittel hervorzuheben, z. B. bzgl. Verzerrung, Topologie- oder Verteilungserhaltung sowie bezüglich aus Distanzplots und Qualitätsbeurteilung durch überwachtes Lernen gewonnenen Informationen. Da die genannten Darstellungsarten ein wesentlicher Aspekt der explorativen Analyse des Erkundungsraumes, des Ergebnisraumes bzw. deren Eigenschaften durch XOM ist, sollen sie durch das Patent besonders geschützt sein, insbesondere wenn der Erkundungs- bzw. Ergebnisraum ganz oder teilweise durch Strukturhypothesen bestimmt ist oder wenn der Anordnungsraum ganz oder teilweise durch Eingabedaten bestimmt ist. Die Ausführungen dieses Punktes gelten allgemein für Datenobjekte und für aus Datenobjekten neu berechnete Datenobjekte bzw. Datenobjekten zugeordnete Raumbereiche.

(f) **Qualitätbeurteilung durch überwachtes Lernen:** Die XOM-Abbildungsqualität kann auch dadurch bestimmt werden, daß sog. überwachte Lernverfahren eingesetzt werden, um die unterschiedlichen, an der topologieerhaltenden Abbildung beteiligten Datenräume aufeinander abzubilden. Hierbei wird ein Lernverfahren bzw. eine Lernvorrichtung durch Paare von Datenobjekten trainiert, wobei ein Paar aus einem oder mehreren Quelldatenobjekten sowie einem oder mehreren Zieldatenobjekten besteht. Die Quelldatenobjekte sind hierbei einem Quellraum, die Zieldatenobjekte einem Zielraum entnommen. Ist das Training fortgeschritten oder abgeschlossen, kann in einer sog. Testphase bei Vorgabe von evtl. neuen Quelldatenobjekten ohne zugehörige Zieldatenobjekte unter Rückgriff auf die trainierte Abbildung eine Schätzung für zugeordnete Zieldatenobjekte erhalten werden. Typische überwachte Lernverfahren sind z. B. unterschiedliche neuronale Netze (z. B. Multilayer Peceptrons [38], Radiale-Basisfunktionen-Netzwerke [33], Support Vector Machines [6] sowie zahlreiche Varianten dieser Verfahren), lokale Modelle (z. B. [43], [29]), z. B. lokale Durchschnittsmodelle oder lokale lineare Modelle, sowie sämtliche in der Literatur beschriebenen Approximations- oder Interpolationsverfahren. Auch topologieerhaltende Abbildungen können für überwachtes Lernen eingesetzt werden, z. B. durch Aufspaltung des Erkundungsraumes in Quell- und Zielraum bei selbstorganisierenden Karten gemäß Stand der Technik oder durch Aufspaltung des Anordnungsraumes in Quell- und Zielraum bei XOM (vgl. auch 7). Legt man die drei Räume Erkundungsraum, Anordnungsraum und Ergebnisraum zugrunde, so kann grundsätzlich jeder der drei Räume als Quellraum oder als Zielraum dienen. Falls man Quell- und Zielraum unterschiedlich wählt, ergeben sich somit zunächst sechs Möglichkeiten für das überwachte Training von Abbildungen zwischen den drei Datenräumen. Allerdings sind auch beliebige Verkettungen dieser Abbildungen denkbar, wobei der Quellraum auch dem Zielraum entsprechen kann. Die Abbildungsqualität von XOM kann nun in der Testphase der überwacht trainierten Abbildung dadurch bestimmt werden, daß der geeignet zu quantifizierende Abbildungsfehler, also die Abweichung zwischen Ist- und Sollwerten von Zieldatenobjekten, ermittelt wird. Hierzu können beliebige Distanzmaße verwendet werden. Ein häufig in normierten Vektorräumen verwendetes Maß ist z. B. die Summe der Differenzenquadrate zwischen Ist- und Sollwerten. Durch Bestimmung des Abbildungsfehlers von überwacht trainierten Lernverfahren und -vorrichtungen kann auf diese Weise die XOM-Abbildungsqualität lokal oder global bestimmt werden. Ein Spezialfall besteht darin, daß eine Verkettung überwacht trainierter Abbildungen verwendet wird, wobei Quell- und Zielraum der Verkettung übereinstimmen. Hier kann dann z. B. die Abweichung von Quell- und Zieldatenobjekten nach Hin- und Rückprojektion in und von einem anderen Datenraum beobachtet und analysiert werden.

(g) **Qualitätsbeurteilung durch Interpolation, Extrapolation oder Approximation, Hin- und Rückprojektion:** Letztlich kann die Qualitätsbeurteilung bei XOM durch Interpolation, Extrapolation oder Approximation von Datenobjekten des Anordnungsraumes im Erkundungs- oder Ergebnisraum oder durch Interpolation, Extrapolation oder Approximation von Datenobjekten des Erkundungs- oder Ergebnisraumes im Anordnungsraum oder durch Vergleich eines Datenobjektes des Anordnungsraumes oder des Erkundungsraumes mit seinem Bild nach Projektion und Rückprojektion durch geeignete Verfahren der Interpolation, Extrapolation, Approximation oder des überwachten Lernens gemäß Stand der Technik oder dieser Patentschrift

(h) **Qualitätbeurteilung durch Trajektorien oder "Blobs":** Es sei betont, daß bei den aufgeführten und bei anderen Verfahren zur Beurteilung der XOM-Abbildungsqualität Datenobjekte auch sequentiell präsentiert werden können, z. B. Datenobjekte im Erkundungsraum, wobei zeitlich aufeinanderfolgend präsentierte Datenobjekte eine geringe wechselseitige Distanz besitzen. Die Datenpräsentation erfolgt dann auf 'stetigen' Trajektorien im jeweiligen Datenraum, wobei zeitliche Nähe auch örtliche Nähe bedingt. Auch ist eine Datenpräsentation in Form von zeitlich und örtlich wandernden "Erregungsbereichen" , sog. "Blobs" möglich. Unter geeigneten Annahmen, z. B. Stetigkeitsannahmen lassen sich damit, z. B. unter Rückgriff auf die genannten Methoden zur XOM-Qualitätsbeurteilung, weitere Kriterien zur Beurteilung der Abbildungsqualität bei XOM entwickeln, die auch die zeitliche Dynamik der Datenpräsentation berücksichtigen bzw. durch diese beeinflußt werden.

3. **Dimensionsbestimmung:** Durch topologieerhaltende Abbildungen können Verfahren und Vorrichtungen zur lokalen oder globalen Dimensionsbestimmung von Datenverteilungen konstruiert werden, insbesondere auch von Datenverteilungen mit fraktaler lokaler oder fraktaler globaler Dimension. Die Dimensionsbestimmung erfolgt hierbei dadurch, daß zwei Datenverteilungen unter Verwendung topologieerhaltender Abbildungen aufeinander abgebildet werden, wobei eine den Anordnungsraum, die andere den Erkundungsraum definiert oder beeinflußt. Durch Analyse der Eigenschaften der trainierten topologieerhaltenden Abbildung, etwa im Sinne der Verfahren und Vorrichtungen gemäß 2, lassen sich dann Rückschlüsse auf die Dimensionen der verwendeten Verteilungen ziehen, z. B. im Sinne eines Dimensionsvergleichs. Derartige Verfahren und Vorrichtungen sind ein eigenständiger Aspekt der vorliegenden Erfindung und unabhängig von der XOM-Definition. Sie lassen sich jedoch auch im Hinblick auf die in Abschnitt 2.1 aufgeführten funktionellen und strukturellen Definitionen interpretieren, wenn man die dort eingeführte Dimension der "Eingabedaten" präzise anwendet. Hierbei sind folgende Fälle zu unterscheiden:

(a) Die Dimension der Datenverteilung des Anordnungsraumes soll bestimmt werden, die Dimension der Datenverteilung des Erkundungsraumes ist bekannt: Als Eingabedaten fungieren hierbei die bekannte Dimension der Datenverteilung des Erkundungsraumes und die Datenverteilung des Anordnungsraumes im Sinne von etwas 'Gegebenem, mit dem etwas gemacht werden soll'. Somit ist die XOM-Definition anwendbar.

(b) Die Dimension der Datenverteilung des Erkundungsraumes soll bestimmt werden, die Dimension der Datenverteilung des Anordnungsraumes ist bekannt. Als Eingabedaten dienen hier die Datenverteilung des Erkundungsraumes und die bekannte Dimension der Datenverteilung des Anordnungsraumes. Letztere ist somit ein Eingabedatenobjekt, womit die XOM-Definition anwendbar wird.

(c) Die Dimensionen beider Datenverteilungen sind unbekannt, es soll lediglich ein Dimensionsvergleich stattfinden. Beide Datenverteilungen sind somit Eingabedaten, insbesondere auch die Datenverteilung des Anordnungsraumes. Somit ist die XOM-Definition anwendbar.

Für die beschriebene Dimensionsbestimmung durch topologieerhaltende Abbildungen können grundsätzlich beliebige Datenverteilungen benutzt werden. Als Referenzverteilungen mit bekannter oder berechenbarer Dimension seien hier insbesondere genannt: (i) die in [27] beschriebenen und zitierten Fraktale (ii) Attraktoren von Differentialgleichungen und Differentialgleichungssystemen, insbesondere "chaotische" und "seltsame" Attraktoren, z. B. Lorenz-Attraktor, Rössler-Attraktor, Ueda-Duffing-Attraktor, Attraktor der Mackey-Glass-Differentialgleichung (Differential-delay equation) etc. sowie (iii) Attraktoren von iterativen Abbildungen, insbesondere "chaotische" und "seltsame" Attraktoren, z. B. Sinai map, Circle map, Sine map, Shift map, Tent map, Logistic map, Henon map, Chirikov map etc. Im Hinblick auf (ii) und (iii) können sämtliche in der Literatur zu chaotischen Systemen und nichtlinearer Dynamik beschriebenen Attraktoren zur Dimensionsbestimmung durch topologieerhaltende Abbildungen verwendet werden, eine Literaturübersicht findet sich z. B. unter "http://www-chaos.umd.edu/publications/references.html". Es sei insbesondere im Hinblick auf (i) betont, daß es in vielen Fällen eines speziellen Vorgehens bedarf, um eine Dimensionsbestimmung durch topologieerhaltende Abbildungen durchführen zu können. So sind die in [27] angegebenen Hausdorff-Dimensionen vielfach analytisch berechnete Werte, die sich auf die idealtypischen fraktalen Objekte beziehen. Diese enthalten i. a unendlich viele Datenpunkte und entziehen sich somit der exakten Simulation auf Datenverarbeitungsanlagen. Erzeugt man nun beispielsweise durch rekursive Abbildungsvorschriften selbstähnliche Punktverteilungen über mehrere Rekursionsstufen gemäß den in [27] angegebenen Berechnungsvorschriften, so erhält man häufig Datenverteilungen, die eine sehr große Anzahl an Datenpunkten besitzen. Reduziert man die Anzahl der Rekursionsstufen, so erhält man zwar eine geringere Anzahl an Datenpunkten, die resultierende Verteilung besitzt jedoch andere Eigenschaften als das idealtypische Fraktal, insbesondere kann die Hausdorff-Dimension erheblich von der Dimension des idealtypischen Fraktals abweichen. Dies ist vielfach dadurch bedingt, daß die Selbstähnlichkeit über mehrere Rekursionsstufen die fraktale Dimension wesentlich bestimmt. Der besondere Trick besteht nun darin, das Fraktal zunächst über zahlreiche Rekursionsstufen zu berechnen und dann eine *zufällige* Auswahl der errechneten Datenpunkte zu treffen. Um die Dimension der resultierenden Datenverteilung experimentell zu bestimmen und ggf. Abweichungen vom theoretisch vorhergesagten Wert zu erfassen, eignet sich besonders die Bestimmung der Korrelationsdimension nach Grassberger-Procaccia [16]. Besonders geeignet zur Dimensionsbestimmung mit topologieerhaltenden Abbildungen sind Datenverteilungen, deren Dimension systematisch, d. h. durch Veränderung eines oder mehrerer Parameter in einem bestimmten Bereich "durchgestimmt" bzw. eingestellt werden kann. Als Beispiel seien die diesbezüglich in [27] genannten Systeme, z. B. fraktale Teppiche, Schwämme, Schäume, Netze, Gitter oder Koch-Inseln und -Seen sowie die Mackey-Glass-Differentialgleichung (Differential-delay equation) [26], deren Attraktordimension von der Zeitverzögerung abhängt. Es seien noch einige spezielle Fälle der Dimensionsbestimmung durch topologieerhaltende Abbildungen genannt:

(a) **Dimensionsbestimmung im Anordnungsraum:** Dimensionsbestimmung der Datenverteilung im Anordnungsraum einer topologieerhaltenden Abbildung auf der Basis der unter Punkt 1 aufgeführten Verfahren und Vorrichtungen, insbesondere durch die unter Punkt 2 aufgeführten Verfahren und Vorrichtungen, insbesondere durch wiederholte Anwendung der unter 1 aufgeführten Verfahren und Vorrichtungen, mit Datenverteilungen im Erkundungsraum von bekannter, ggf. jeweils unterschiedlicher Dimension

(b) **Dimensionsbestimmung im Anordnungsraum:** Dimensionsbestimmung der Datenverteilung im Erkundungsraum einer topologieerhaltenden Abbildung auf der Basis der unter Punkt 1 aufgeführten Verfahren und Vorrichtungen, insbesondere durch die unter Punkt 2 aufgeführten Verfahren und Vorrichtungen, insbesondere durch wiederholte Anwendung der unter 1 aufgeführten Verfahren und Vorrichtungen, mit Datenverteilungen im Anordnungsraum von bekannter, ggf. jeweils unterschiedlicher Dimension

(c) **Dimensionsvergleich:** Dimensionsvergleich auf der Basis der unter Punkt 1 aufgeführten Verfahren und Vorrichtungen, insbesondere auch mittels Austausch der Datenverteilungen von Anordnungsraum und Erkundungsraum, d. h. wechselseitige Einbettung, wobei die Dimensionen einer oder beider Datenverteilungen auch unbekannt sein können, insbesondere durch die unter Punkt 2 aufgeführten Verfahren und Vorrichtungen, insbesondere auch Anordnung von mehr als zwei Datenverteilungen im Hinblick auf ihre Dimension durch paarweisen Dimensionsvergleich

Wichtig für die Dimensionsbestimmung durch XOM ist, daß sämtliche in dieser Patentschrift und insbesondere in 1 und 2 aufgeführten XOM-Modifikationen und Evaluationstechniken eingesetzt werden können.

4. **Einbettung:** Durch XOM lassen sich leistungsfähige Verfahren und Vorrichtungen, insbesondere gemäß den Beschreibungen in Punkt 1 zur nichtlinearen Einbettung von Datenobjekten bzw. deren Verteilungen im Anordnungsraum in beliebige Datenobjekte bzw. deren Verteilungen im Erkundungsraum realisieren. Typischerweise wird hierbei der Anordnungsraum einer topologieerhaltenden Abbildung aus den einzubettenden Eingabedaten konstruiert. Im einfachsten Fall werden die Eingabedaten hierzu direkt verwendet, es ist jedoch auch möglich, die Eingabedaten durch Berechnungsvorschriften zu verarbeiten, bevor sie in den Anordnungsraum eingespeist werden. Auch ist es möglich, daß der Anordnungsraum nicht vollständig durch die Eingabedaten bestimmt ist. Die letztlich im Anordnungsraum vorliegenden Daten werden als Ursprungsdaten bezeichnet. Als Einbettungsraum dient ein beliebiger Erkundungsraum, dieser ist typischerweise durch Strukturhypothesen bestimmt, jedoch kann er auch durch Eingabedaten oder beides enthalten bzw. beeinflußt werden. Einbettungen durch XOM können z. B. zur explorativen Datenanalyse und/oder Visualisierung der Ursprungsdaten oder zur Datenreduktion der Ursprungsdaten dienen, insbesondere wenn der Erkundungsraum einfacher und/oder von geringerer Dimension als der Datenraum der Ursprungsdaten gewählt wird. Es kann jedoch auch sinnvoll sein, die Dimension des Erkundungsraumes größer als die des Anordnungsraumes zu wählen, z. B. um Dimensionsschätzungen durchzuführen oder Auffaltungsphänomene zu beobachten, vgl. hierzu auch die Punkte 3 und 2. Wesentliche Aspekte der Einbettung durch XOM sind,

(a) daß insbesondere auch Datenobjekte, Verteilungen von Datenobjekten bzw. Datenräume eingebettet werden können, für die beliebige Distanzmaße gelten, also i. a. die Distanzen zwischen den Datenobjekten dieser Verteilungen durch beliebige Distanzmaße definiert sein können, auch solche, die im mathematischen Sinne keine Metrik bilden. Hier wird besonders auf die Punkte 1e, 1f und 1g verwiesen. Die Einbettung von beliebigen, insbesondere auch nichtmetrischen Datenverteilungen, wobei diese Datenverteilungen bezüglich beliebiger Distanzmaße die Topologie des Anordnungsraumes topologieerhaltender Abbildungen bestimmen, ist ein zentraler Aspekt der Erfindung. Ein besonders wichtiger Sonderfall sind paarweise, ggf. nichtmetrische Dissimilaritäten von Datenobjekten.

(b) daß insbesondere auch Datenobjekte, Verteilungen von Datenobjekten bzw. Datenräume mit fraktaler lokaler oder globaler Dimension eingebettet werden können, vgl. auch die Ausführungen in Punkt 3.

(c) daß insbesondere auch Datenobjekte, Verteilungen von Datenobjekten bzw. Datenräume eingebettet werden können, die vollständig oder teilweise über Distanzobjekte definiert sind, für die also z. B. lediglich paarweise Distanzen, nicht jedoch metrische Einbettungen bekannt sind, insbesondere zum Zwecke der Berechnung von metrischen Einbettungen.

(d) daß insbesondere auch Umskalierungen der Distanzen im Anordnungsraum im Sinne von 1r, z. B. als Sparseness Annealing, sowie sämtliche in dieser Patentschrift und insbesondere in 1 aufgeführten XOM-Modifikationen eingesetzt werden können.

(e) daß das Einbettungsergebnis durch graphische Darstellung in Form eines Ergebnis- bzw. Erkundungsplots gemäß Punkt 2d visualisiert und analysiert werden kann, , insbesondere auch zum Zwecke der nichtlinearen Hauptkomponentenanalyse oder zur Visualisierung von Lösungen von Optimierungsproblemen oder zur Visualisierungen von Datenpartitionierungen (Clusterergebnissen).

(f) daß das Einbettungsergebnis durch graphische Darstellung in Form eines Anordnungsplots gemäß 2e visualisiert und analysiert werden kann, insbesondere auch zum Zwecke der nichtlinearen Hauptkomponentenanalyse oder zur Visualisierung von Lösungen von Optimierungsproblemen oder zur Visualisierungen von Datenpartitionierungen (Clusterergebnissen).

(g) daß eine Qualitätsbeurteilung des Einbettungsergebnisses gemäß Punkt 2 erfolgen kann. Hierdurch lassen sich insbesondere auch Strukturhypothesen bzgl. geeignet zu wählender Erkundungsräume zielgerichtet, ggf. iterativ, verbessern.

5. **Datenpartitionierung, Clustering:** Durch XOM lassen sich leistungsfähige Verfahren und Vorrichtungen zur scharfen und unscharfen Partitionierung bzw. zum Clustering von Verteilungen von Datenobjekten konstuieren, insbesondere unter Berücksichtigung der Beschreibungen in Punkt 1. Eine Beispiel für eine typische Vorgehensweise sei im folgenden beschrieben:

(a) Wähle die Eingabedatenverteilung als Anordnungsraum.

(b) Wähle eine geeignete Strukturhypothese für den Erkundungsraum. Als beliebiges Beispiel sei hier eine Datenverteilung genannt, die aus mehreren Gaußverteilungen zusammengesetzt ist, deren Parameter ad hoc festgelegt werden. Die Schwerpunkte der Gaußverteilungen können eine beliebig vorgegebene topologische Struktur besitzen, beispielsweise können sie auf einem regulären Gitter angeordnet sein. Man beachte, daß für die Wahl der Datenverteilungen im Erkundungsraum keinerlei Einschränkungen bestehen, siehe insbesondere nachfolgend aufgeführte Punkte.

(c) Trainiere die topologieerhaltende Abbildung.

(d) Ordne die Codebuchobjekte scharf oder unscharf den einzelnen Datenverteilungen des Erkundungsraumes zu, beispielsweise durch Berechnung und Vergleich von Distanzen der einzelnen Codebuchobjekte zu den Schwerpunkten der einzelnen Datenverteilungen, die ja in diesem Fall als Gaußverteilungen gewählt wurden. Durch Definition geeigneter Distanzmaße, z. B. Likelihood, kann dies auch in unscharfer Weise erfolgen, sowie in Fällen, in denen Ergebnisraum und Erkundungsraum nicht übereinstimmen.

Wesentliche Aspekte für Datenpartitionierung bzw. Clustering durch XOM sind,

(a) daß insbesondere auch Datenobjekte, Verteilungen von Datenobjekten bzw. Datenräume geclustert werden können, für die beliebige Distanzmaße gelten, also i a. die Distanzen zwischen den Datenobjekten dieser Verteilungen durch beliebige Distanzmaße definiert sein können, auch solche, die im mathematischen Sinne keine Metrik bilden. Hier wird besonders auf die Punkte 1e, 1f und 1g verwiesen. Das Clustering von beliebigen, insbesondere auch nichtmetrischen Datenverteilungen, wobei diese Datenverteilungen bezüglich beliebiger Distanzmaße die Topologie des Anordnungsraumes topologieerhaltender Abbildungen bestimmen, ist ein zentraler Aspekt der Erfindung. Ein besonders wichtiger Sonderfall sind paarweise, ggf. nichtmetrische Dissimilaritäten von Datenobjekten.

(b) daß insbesondere auch Datenobjekte, Verteilungen von Datenobjekten bzw. Datenräume mit fraktaler lokaler oder globaler Dimension geclustert werden können, vgl. auch die Ausführungen in Punkt 3.

(c) daß insbesondere auch Datenobjekte, Verteilungen von Datenobjekten bzw. Datenräume geclustert werden können, die vollständig oder teilweise über Distanzobjekte definiert sind, für die also z. B. lediglich paarweise Distanzen, nicht jedoch metrische Einbettungen bekannt sind, insbesondere zum Zwecke des Clustering in metrischen Einbettungen.

(d) daß für die Wahl der Datenobjekte und Verteilungen sowie deren Parameter im Erkundungsraum keinerlei Einschränkungen bestehen.

(e) daß dieses insbesondere durch Training der topologieerhaltenden Abbildung mit einer natürlichen Zahl identischer, ähnlicher oder unterschiedlicher Datenverteilungen im Merkmalsraum mit jeweils unterschiedlichem Schwerpunkt bzw. Median erfolgen kann.

(f) daß dieses insbesondere erfolgen kann durch harte oder unscharfe Zuordnung einzelner Datenobjekte zu Clustern durch ein Kriterium, welches sich auf die durch ein beliebiges Distanzmaß bestimmten Distanz (z. B. Minimal distance) des zum Datenobjekt zugehörigen Codebuchobjekts von den Schwerpunkten oder anderen charakteristischen Orten der Datenverteilungen (z. B. Median) im Erkundungsraum bezieht, z. B. die Likelihood (z. B. Maximum likelihood) der Positionierung des Codebuchobjekts bei bekannter Struktur der Datenverteilungen im Erkundungsraum oder irgendeine andere Berechnungsvorschrift, der die vollständige oder partielle Kenntnis der Verteilungsfunktionen im Erkundungsraum zugrundeliegt.

(g) daß es sich bei der Wahl der Datenobjekte und Verteilungen im Erkundungsraum insbesondere handeln kann um: einfache geometrische Objekte (z. B. Polygone, einfache geometrische Körper, Geradenstücke, Kreise, Ringe, Kugeln etc.), beliebige charakteristische Verteilungen, d. h. lokalisierte Gleichverteilungen, Normalverteilungen, Laplaceverteilungen, Poissonverteilungen, Binomialverteilungen, hypergeometrische Verteilungen, $\chi^2$-Verteilungen, Student'sche t-Verteilungen, Fisher'sche F-Verteilungen, Gammaverteilungen, Fisher'sche Z-Verteilungen, Kolmogorow-Smirnow'sche $\lambda$-Verteilungen (Definitionen [5]) oder um einzelne Datenobjekte im Sinne von Delta-Peaks.

(h) daß die Schwerpunkte oder andere örtliche Kenngrößen der Datenverteilungen im Erkundungsraum, z. B. die Mediane, im Erkundungsraum paarweise äquidistant angeordnet sind, z. B. auf einem diskreten, periodischen Gitter.

(i) daß insbesondere eine echte oder unechte Teilmenge der Gewichte, z. B. Anzahl der zu den einzelnen Verteilungen gehörenden Datenobjekten, oder die Streumaße (Momente) oder beliebige andere Parameter der Datenverteilungen im Erkundungsraum identisch oder ähnlich sein können.

(j) daß insbesondere die Schwerpunkte der Datenverteilungen im Erkundungsraum bei Vorgabe von $n \in \mathbb{N}$ Verteilungen auf den Ecken eines regulären Simplex im Erkundungsraum liegen können, dessen Dimension mindestens $n$ -1 ist

(k) daß insbesondere Anzahl, Struktur, Lokalisation, Dimension, relative oder absolute Gewichte oder beliebige Parameter der Datenverteilungen im Erkundungsraum während eines Trainingsvorganges oder bei wiederholten Trainingsvorgängen der topologieerhaltenden Abbildung veränderlich gewählt werden können, insbesondere daß diese variiert werden können, um ein Qualitätskriterium gemäß den Punkten 2 oder 6 zu optimieren. Insbesondere können während eines Trainingsvorganges oder bei wiederholten Trainingsvorgängen Streumaße der Verteilungen im Erkundungsraum systematisch veränderlich gewählt werden, z. B. um eine zunehmende Fokussierung der Datenobjekte auf einzelne Cluster zu begünstigen, d. h. um die Entropie der Verteilung der Datenobjekte auf die Cluster zu verringern.

(l) daß insbesondere auch Umskalierungen der Distanzen im Anordnungsraum im Sinne von 1r, z. B. als Sparseness Annealing, sowie sämtliche in dieser Patentschrift und insbesondere in 1 aufgeführten XOM-Modifikationen eingesetzt werden können.

(m) daß Ergebnisse des Clustering durch graphische Darstellung in Form eines Ergebnis- bzw. Erkundungsplots gemäß Punkt 2d visualisiert und analysiert werden können. Hier sind insbesondere auch Darstellungen geschützt, die Clustergrenzen bzw. Tesselierungen charakterisieren oder die durch beliebige graphische Hilfsmittel die Zugehörigkeit von Datenobjekten zu Clustern kennzeichnen.

(n) daß Ergebnisse des Clustering durch graphische Darstellung in Form eines Anordnungsplots gemäß 2e visualisiert und analysiert werden können. Hier sind insbesondere auch Darstellungen geschützt, die Clustergrenzen bzw. Tesselierungen charakterisieren oder die durch beliebige graphische Hilfsmittel die Zugehörigkeit von Datenobjekten zu Clustern kennzeichnen.

(o) daß eine Qualitätsbeurteilung der Ergebnisse des Clustering gemäß Punkt 2 erfolgen kann. Hierdurch lassen sich insbesondere auch Strukturhypothesen bzgl. geeignet zu wählender Erkundungsräume zielgerichtet, ggf. iterativ, verbessern.

(p) daß das Clustering hierarchisch erfolgen kann, insbesondere im Hinblick auf Punkt 1q, z. B. durch sich dynamisch sukzessiv aufspaltende Verteilungen im Erkundungsraum während eines Trainingsvorganges oder im Laufe mehrerer Trainingsvorgänge der topologieerhaltenden Abbildung.

6. **Clustervalidität:** Unter Clustervalidität versteht man das Problem, den zu clusternden Datenverteilungen angemessene Strukturhypothesen zu definieren und/oder die Qualität gegebener Partitionierungen von Daten im Hinblick auf diese Strukturhypothesen zu beurteilen, insbesondere im Hinblick auf Anzahl und/oder relatives Gewicht der Cluster, auf die Wahl von Initialisierungsstrategien und/oder Wahl der angewandten Clusteringmethode. Zum Problem der Clustervalidität sowie zahlreichen Lösungsversuchen vgl. z. B. [31].
Ein wesentlicher eigenständiger Aspekt der Erfindung bezieht sich darauf, daß im Gegensatz zum Stand der Technik Verfahren zur Bestimmung der Clustervalidität auf Dissimilaritätsdaten vorgeschlagen werden. Ein solches Verfahren läßt sich technisch folgendermaßen charakterisieren:
Verfahren zur Datenverarbeitung für die Bestimmung der Clustervalidität, bei dem
Datenobjekte eingegeben werden, Distanzobjekte zwischen diesen Datenobjekten eingegeben und/oder berechnet werden, sowie eine Zuordnung der zu verarbeitenden Datenobjekte zu Gruppen eingegeben und/oder berechnet wird, insbesondere gemäß in dieser Patentschrift dargestellten Verfahren, und ein Maß für die Qualität dieser Zuordnung als Ausgabedaten ausgegeben wird, wobei das Maß für die Qualität der Zuordnung unter Verwendung von wenigstens einem Teil der eingegebenen und/oder berechneten Distanzobjekte berechnet wird. Im Hinblick auf den Begriff "Distanzobjekt" gilt obige Definition. Es sei noch einmal besonders betont, daß in dieser Definition insbesondere Distanzmaße eingeschlossen sind, die im mathematischen Sinne keine Metrik definieren.

Als konkrete Realisierungen derartiger Verfahren werden zwei Vorgehensweisen vorgeschlagen:

Einerseits können Clustervaliditätsmaße für Dissimilaritätsdaten entwickelt werden, die auf Kostenfunktionen beruhen, die für Verfahren zum Clustering von Dissimilaritätsdaten verwendet werden. Für Beispiele derartiger Kostenfunktionen sei auf die Literatur zu Verfahren zum Clustering von Dissimilaritätsdaten verwiesen, insbesondere [21], [13], [14], [15] sowie die in diesen Arbeiten zitierte Literatur.

Beispielsweise kann man Verfahren und Vorrichtungen zur Bestimmung der Clustervalidität entwickeln, indem man zweite Differenzen der Kostenfunktionen, die für Verfahren zum Clustering von Dissimilaritätsdaten verwendet werden, berechnet, beispielsweise zweite Differenzen der Kostenfunktionen in Abhängigkeit von der jeweils verwendeten Anzahl von Clustern, Relative oder absolute Maxima der Größe dieser zweiten Differenzen können als Clustervaliditätskriterium verwendet werden.

Als zweite Vorgehensweise lassen sich durch XOM leistungsfähige Verfahren und Vorrichtungen zur Beurteilung der Clustervalidität bei der scharfen und unscharfen Partitionierung bzw. beim Clustering von Verteilungen von Datenobjekten konstruieren, insbesondere unter Berücksichtigung der Beschreibungen in Punkt 1, 5 und 2.

Eine Beispiel für eine typische Vorgehensweise bei der Clustervaliditätsbestimmung durch XOM sei im folgenden beschrieben:

(a) Definiere ein Clustervaliditätskriterium, z. B. gemäß 2.

(b) Führe ein Clustering gemäß 5 durch.

(c) Analysiere die Ergebnisse des Clustering im Hinblick auf dieses Kriterium.

(d) Ändere die Strukturhypothesen für das Clustering, d. h. die für das Clustering gewählten Datenverteilungen im Erkundungsraum. Wiederhole Clustering und Analyse im Hinblick auf das Kriterium, evtl. mehrmals, z. B. im Hinblick auf eine Optimierung der Clusterergebnisse bezüglich des Kriteriums.

Einfache und wichtige Beispiele für Clustervaliditätskriterien sind die in 2 genannten Maße zur Analyse der Verzerrung, der Topologie- und Verteilungserhaltung sowie die aus Distanzplots oder der Qualitätsbeurteilung durch überwachtes Lernen gewonnenen Maße.

Wesentliche Aspekte der Clustervaliditätsanalyse durch XOM sind,

(a) daß sie insbesondere auch für nichtmetrische Datenverteilungen durchgeführt werden kann. Sie kann für beliebige Datenobjekte, Verteilungen von Datenobjekten bzw. Datenräumen durchgeführt werden, insbesondere diejenigen, die durch XOM geclustert werden können. Die diesbezüglichen Bemerkungen im Punkt 5 gelten in vollem Umfang.

(b) daß sie insbesondere auf der Basis aller Verfahren und Vorrichtungen aus Punkt 2 durchgeführt werden kann.

(c) daß sie auch benutzt werden kann, um die Qualität einer vorgegebenen, d. h. nicht durch XOM-Clustering ermittelten Datenpartitionierung zu beurteilen.

(d) daß eine Visualisierung derartiger Analysen in Form von Erkundungs-, Ergebnis-, und Anordnungsplots im Sinne von 2 erfolgen kann, hierbei kann insbesondere auch eine bekannte oder berechnete Datenpartitionierung visualisiert werden, z. B. indem die Zuordnung von Datenobjekten zu Clustern visualisiert wird. Zusätzlich kann eine graphische Darstellung der Clustervaliditätsmaße in Abhängigkeit von den Strukturhypothesen bzw. von deren Parameter erfolgen. Typischerweise können Clustervaliditätsmaße z. B. in Abhängigkeit von der Anzahl der vorgegebenen Cluster dargestellt werden.

(e) daß bei wiederholter Durchführung derartiger Analysen nicht nur die Anzahl der Cluster verändert werden kann, sondern beliebige Strukturhypothesen, insbesondere können auch Schemata des hierarchischen Clustering, vgl. Punkt 5, angewandt werden.

7. **Überwachtes Lernen:** Durch XOM können Verfahren und Vorrichtungen für überwachtes Lernen, insbesondere zum Zweck der Funktionenapproximation oder Funktioneninterpolation, zur Zeitreihenanalyse oder Zeitreihenvorhersage, zur Glättung oder Filterung konstruiert werden. Bei überwachtem Lernen wird ein Lernverfahren bzw. eine Lernvorrichtung durch Paare von Datenobjekten trainiert, wobei ein Paar aus einem oder mehreren Quelldatenobjekten sowie einem oder mehreren Zieldatenobjekten besteht. Die Quelldatenobjekte sind hierbei einem Quellraum, die Zieldatenobjekte einem Zielraum entnommen. Ist das Training fortgeschritten oder abgeschlossen, kann in einer sog. Test- bzw. Arbeitsphase bei Vorgabe von evtl. neuen Quelldatenobjekten ohne zugehörige Zieldatenobjekte unter Rückgriff auf die trainierte Abbildung eine Schätzung für zugeordnete Zieldatenobjekte erhalten werden. Typische überwachte Lernverfahren sind z. B. unterschiedliche neuronale Netze (z. B. Multilayer Peceptrons [38], Radiale-Basisfunktionen-Netzwerke [33], Support Vector Machines [6] sowie zahlreiche Varianten dieser Verfahren), lokale Modelle (z. B [43], [29]), z. B. lokale Durchschnittsmodelle oder lokale lineare Modelle, sowie sämtliche in der Literatur beschriebenen Approximations- oder Interpolationsverfahren.

Überwachtes Lernen durch XOM kann unter Verwendung aller durch diese Patentschrift aufgeführten Aspekte realisiert werden, z. B. unter Rückgriff auf die Beschreibungen in 1 sowie auch in Kombination mit der Verwendung von Interpolations- oder Approximationsmethoden gemäß Stand der Technik.

Realisierungsmöglichkeiten sowie wesentliche Aspekte überwachten Lernens durch XOM sind,

(a) daß dieses insbesondere durch durch Aufspaltung des Anordnungsraumes in Quell- und Zielraum bei XOM erfolgen kann. Typischerweise wird hierbei der Anordnungsraum als Produktraum von Quell- und Zielraum definiert. Nunmehr wird mittels XOM eine repräsentierende Hypermannigfaltigkeit der Datenverteilung gemäß Punkt 14 in diesem Produktraum konstruiert. In der Arbeitsphase kann bei Vorgabe eines Quelldatenobjekts unter Kenntnis der Hypermannigfaltigkeit ein Zieldatenobjekt ermittelt werden, indem die Koordinaten des zum Quelldatenobjekt gehörenden Punktes der Hypermannigfaltigkeit im Zielraum ergänzt werden. Diese Vorgehensweise kann z. B: zum Zweck der Funktionenapproximation oder Funktioneninterpolation genutzt werden.

(b) daß dieses insbesondere unter Verwendung von Verfahren und Vorrichtungen gemäß Punkt 1o realisiert werden kann z. B. zum Zwecke der Funktionenapproximation oder Funktioneninterpolation.

(c) daß dieses insbesondere unter Verwendung von Verfahren und Vorrichtungen zum XOM-Clustering gemäß Punkten 5 realisiert werden kann. Hierzu werden typischerweise die durch XOM-Clustering erhaltenen Resultate als zusätzliche Eingabe von Verfahren und Vorrichtungen für überwachtes Lernen gemäß Stand der Technik benützt. Ein besonders wichtiger Spezialfall ist die Einspeisung von XOM-Clusteringergebnissen beim Training von Radiale-Basisfunktionen-Netzwerken gemäß Punkt 21a.

(d) daß dieses insbesondere auch zum Zweck des überwachten Lernens auf metrischen oder nichtmetrischen Dissimilaritätsdaten verwendet werden kann, z. B. zum Zwecke der Klassifikation auf derartigen Daten. Hierzu kann beispielsweise ein XOM-Clustering gemäß 5 auf ggf. nichtmetrischen Dissimilaritätsdaten durchgeführt werden. Die hierbei erhaltenen Clusteringergebnisse können dann beispielsweise in das Training eines Radiale-Basisfunktionen-Netzwerks eingespeist werden, etwa im Sinne von 21a.

(e) insbesondere auch in Kombination mit der Verwendung von Interpolations- oder Approximationsmethoden gemäß dem Stand der Technik oder den anderen Ansprüchen

8. **Registrierung:** Durch XOM können Verfahren und Vorrichtungen für die Registrierung von Datensätzen realisiert werden unter Rückgriff auf alle Punkte dieser Patentschrift, insbesondere auf Punkt 1 sowie in Kombination von XOM mit Verfahren und Vorrichtungen gemäß Stand der Technik. Insbesondere kann dadurch auch eine nichtlineare, nichtaffine, lokal verzerrende Registrierung von Datensätzen realisiert werden.

Typischerweise liegen im einfachsten Fall zwei Datenverteilungen zugrunde. Der sog. "Testdatensatz" soll auf einen "Referenzdatensatz" registriert werden. Dieser ist häufig dem Testdatensatz gemäß geeignet zu definierender Kriterien ähnlich. Typischerweise sind Test- und Referenzdatensatz vorgegeben, es handelt sich also bei beiden um Eingabedaten im Sinne von etwas "Gegebenem, mit dem etwas gemacht werden soll." Im einfachsten Fall wird nun einer der beiden Datensätze verwendet, um den Anordnungsraum einer topologieerhaltenden Abbildung zu definieren. Der andere Datensatz wird hingegen verwendet, um den Erkundungsraum dieser topologieerhaltenden Abbildung zu definieren. In jedem Fall werden Eingabedaten verwendet, um den Anordnungsraum teilweise oder vollständig zu definieren. Somit ist die XOM-Definition anwendbar.

Nach erfolgtem Training der topologieerhaltenden Abbildung kann die Qualität des Registrierungsergebnisses beurteilt werden, insbesondere unter Verwendung der Verfahren und Vorrichtungen aus Punkt 2. Wesentliche Aspekte der Registrierung durch XOM sind,

(a) daß sie insbesondere zum Zwecke der Registrierung von - ggf. multispektralen Bilddatensätzen - in 2D und 3D, sowie von Bildfolgen eingesetzt werden kann.

(b) daß sie insbesondere zum Zwecke der Registrierung von Zeitreihen oder Zeitfunktionen eingesetzt werden kann, z. B. im Sinne eines Dynamic Time Warping (DTW), zur Definition von DTW vgl. z. B. [22].

(c) daß sie insbesondere als Vorverarbeitung für beliebige weitere Datenverarbeitungsaufgaben, z. B. Klassifikation oder Clustering, im Sinne einer "Normalisierung" verwendet werden kann. Hierbei werden unterschiedliche Datensätze, z. B. Bilddatensätze auf einen vorgegebenen Standarddatensatz registriert. Ist beispielsweise auf dem Standarddatensatz ein Klassifikationsproblem - oder ein beliebiges anderes Datenverarbeitungsproblem - bereits ganz oder teilweise erfolgreich gelöst, so kann nach Registrierung diese Lösung auch für die anderen Datensätze übernommen werden. Ein beliebiges Beispiel ist die Segmentierung bestimmter Regionen in Bilddatensätzen des Gehirns durch Registrierung von Bilddatensätzen unterschiedlicher Individuen auf ein bereits segmentiertes "Normalhirn" , welches als Standarddatensatz dient.

(d) daß hierdurch insbesondere Maße für die lokale oder globale Ähnlichkeit zwischen verschiedenen Datensätzen gewonnen werden können, insbesondere unter Verwendung der Verfahren und Vorrichtungen nach Punkt 2.

(e) daß vor der Registrierung auch eine Datenreduktion im Sinne einer Vektorquantisierung durchgeführt werden kann.

(f) daß Rand- oder sonstige Zusatzbedingungen für die Registrierung durch sog. "Topologieanker" erzwungen werden können. Hierbei handelt es sich um zusätzliche Datenobjekte, die den zu registrierenden Datensätzen hinzugefügt werden. Dies erfolgt in der Regel (i) in denjenigen Bereichen der Datensätze, die durch die Registrierung möglichst gut zur Deckung gebracht werden sollen, (ii) in den zu registrierenden Datensätzen auf ähnliche Weise. Diese Topologieanker werden in der Regel so gewählt, daß bei deren inkongruenter Registrierung hohe Kosten im Sinne von Maßen der Abbildungsqualität zu erwarten sind, z. B. gemäß den in 2 genannten Kriterien.

9. **Active Learning:** Durch XOM können Verfahren und Vorrichtungen für sog. "Aktives Lernen" realisiert werden unter Rückgriff auf alle Punkte dieser Patentschrift, insbesondere auf Punkt 1 sowie in Kombination von XOM mit Verfahren und Vorrichtungen gemäß Stand der Technik. Hierunter versteht man eine Vorgehensweise, bei der während des Trainingsvorganges eines Lernverfahrens die Auswahl von Datenobjekten aus dem Trainingsdatensatz für das weitere Training unter Verwendung geeigneter Berechnungsverfahren durch den aktuellen Status des Lernverfahrens gezielt beeinflußt wird. Ein typisches Beispiel für die Realisierung aktiven Lernens durch XOM besteht z. B. darin, daß während des Trainingsvorganges der topologieerhaltenden Abbildung die Auswahl von Datenobjekten aus dem Erkundungsraum durch geeignete Berechnungsverfahren durch den aktuellen Status der topologieerhaltenden Abbildung beeinflußt wird, etwa durch die erreichte globale oder lokale Abbildungsqualität, z. B. unter Verwendung von Verfahren oder Vorrichtungen gemäß Anspruch 2.

10. **Molekulardynamiksimulation:** Durch XOM können Verfahren und Vorrichtungen für sog. "Molekulardynamiksimulationen" realisiert werden unter Rückgriff auf alle Punkte dieser Patentschrift, insbesondere auf Punkt 1 sowie in Kombination von XOM mit Verfahren und Vorrichtungen gemäß Stand der Technik. Hierunter versteht man Berechnungen der raum-zeitlichen Struktur von Molekülen ganz oder teilweise bekannter Zusammensetzung sowie die Verwertung der hieraus gewonnenen Erkenntnisse. Wichtige Beispiele sind die Analyse der Sekundär- oder Tertiärstruktur von Proteinen oder die Analyse der funktionellen raum-zeitlichen Struktur aktiver Zentren von Enzymen.

Eine wesentliche Erfindung in diesem Zusammenhang ist, daß zum Zwecke der Molekulardynamiksimulation "starre", d. h. nur durch starke äußere Einflüsse wesentlich veränderliche, räumliche Beziehungen oder Zwangsbedingungen zwischen den Atomen eines Moleküls bzw. seiner Umgebung dazu verwendet werden, um die *Topologie des Anordnungsraumes einer topologieerhaltenden Abbildung* zu definieren. Ein typisches Beispiel für solche starren räumlichen Beziehungen sind Bindungslängen und Bindungswinkel in kovalenten Bindungen zwischen den Atomen eines Moleküls. Im einfachsten Fall wird jedem Atom bzw. einer Gruppe von Atomen ein Datenobjekt im Anordnungsraum sowie ein Codebuchobjekt zugeordnet.

Durch Training der topologieerhaltenden Abbildung durch XOM können dann Wechselwirkungen zwischen Atomen bzw. der Umgebung modelliert werden, wobei die Analyse des Ergebnisraumes die gewünschte Struktur des Moleküls liefert. Beispiele für Vorgehensweisen bei einer solchen Modellierung sind:

(a) Modellierung der Wechselwirkung durch codebuchobjektspezifische Variation der Lernvorschrift der topologieerhaltenden Abbildung, etwa im Sinne von Punkt 1m. Ein einfaches Beispiel wäre bei Verwendung selbstorganisierender Karten die von der Stärke der Wechselwirkung abhängende Modellierung des Lernparameters $\in$ gemäß Gleichung (9). Analog dazu wäre eine Modellierung denkbar, bei der die Wechselwirkung zwischen zwei Atomen nicht bei jedem Lernschritt, sondern in Abhängigkeit von der Stärke der Wechselwirkung, seltener berücksichtigt wird. Hierdurch lassen sich auch unterschiedliche Grade von "Starrheit" im Hinblick auf die oben erwähnten räumlichen Zwangsbedingungen modellieren.

(b) Iterative Anwendung von XOM, z. B. gemäß 1s. Dies kann insbesondere mit einer Vorgehensweise kombiniert werden, in der die XOM-Molekulardynamiksimulation in kleine Simulationsstufen aufgegliedert wird, wobei in jeder Simulationsstufe nur geringe Änderungen der raum-zeitlichen Molekülstruktur modelliert werden. Am Ende einer Simulationsstufe wird nun der Ergebnisraum als neuer Anordnungsraum der topologieerhaltenden Abbildung verwendet und die Simulation fortgeführt. Hierbei können die ursprünglichen Zwangsbedingungen in der Topologie des Anordnungsraumes wieder korrigiert werden, die im Laufe des vorangegangenen Simulationsschrittes im Rahmen von Topologieverletzungen im Ergebnisraum im Vergleich zur Topologie des Anordnungsraums nicht mehr adäquat repräsentiert waren. Topologieverletzungen im Hinblick auf die Zwangsbedingungen können also wieder korrigiert werden. Zugleich können neue topologische Beziehungen zwischen den Atomen, die aus dem Ergebnis des vorangegangenen Simulationsschrittes abgeleitet werden können, für die Modellierung des neuen Anordnungsraumes berücksichtigt werden. Insbesondere sind auch Vorgehensweisen denkbar, bei denen eine ständige Korrektur von lokalen Topologieverletzungen, z. B. im Hinblick auf die unter 2 genannten Kriterien erfolgt.

11. **Robotik:** In zu Punkt 10 analoger Weise lassen sich auch Problemlösungen in der Robotik erzielen, insbesondere auf dem Gebiet der inversen Kinematik.
In Analogie zum Vorgehen bei der Molekulardynamiksimulation werden hierbei "starre", d. h. nur durch starke äußere Einflüsse wesentlich veränderliche, räumliche Beziehungen oder Zwangsbedingungen zwischen den Bestandteilen eines Roboters bzw. zwischen dem Roboter und seiner Umgebung dazu verwendet, um die *Topologie des Anordnungsraumes einer topologieerhaltenden Abbildung* zu definieren. Ein typisches Beispiel für solche starren räumlichen Beziehungen sind Form und Größe von Bauteilen eines Roboters oder Zwangsbedingungen bzgl. der relativen Beweglichkeit seiner Bauteile zueinander. Im einfachsten Fall wird charakteristischen Punkten von Bauteilen oder einer lokalisierten Gruppe von Bauteilen ein Datenobjekt im Anordnungsraum sowie ein Codebuchobjekt zugeordnet. Alle in Punkt 10 gemachten Bemerkungen sind dann in völlig analoger Weise anwendbar.

12. **Sortieren:** Durch XOM können Verfahren und Vorrichtungen für das Sortieren von Datenobjekten realisiert werden, z. B. unter Rückgriff auf Punkt 1. Hierbei wird die gewünschte Ordnung der Datenobjekte durch die Topologie des Anordnungsraumes repräsentiert. Dies ist auch insbesondere dann durchzuführen, wenn als Eingabedaten lediglich eine echte Teilmenge der möglichen paarweisen Ordnungsbeziehungen zwischen den Datenobjekten bekannt oder berechenbar ist bzw. für das Sortieren verwendet werden soll.

13. **Optimierung:** Durch XOM können Verfahren und Vorrichtungen zum Auffinden von Lösungen von Optimierungsproblemen realisiert werden unter Rückgriff auf alle Punkte dieser Patentschrift, insbesondere auf Punkt 1 sowie in Kombination von XOM mit Verfahren und Vorrichtungen gemäß Stand der Technik.
Wichtige Aspekte im Hinblick auf den Einsatz von XOM für das Auffinden von Lösungen von Optimierungsproblemen sind, daß

(a) dies insbesondere auch dann möglich ist, wenn als Eingabedaten lediglich eine echte Teilmenge der berechenbaren paarweisen Distanzen zwischen den Datenobjekten verwendet wird.

(b) dies insbesondere auch dann möglich ist, wenn paarweise Distanzen zwischen Datenobjekten keine Metrik bilden.

(c) dies insbesondere auch zum Auffinden von Lösungen von NP-harten Optimierungsproblemen eingesetzt werden kann, z. B. von metrischen oder insbesondere auch nichtmetrischen Travelling-Salesman-Problemen oder hierzu mathematisch äquivalenten Problemen. Beim Travelling-Salesman-Problem kann beispielsweise die Position der Städte die Topologie des Anordnungsraumes festlegen, eine ringförmige Gleichverteilung kann den Erkundungsraum repräsentieren. Die Visualisierung der Lösung kann dann sowohl durch einen Erkundungsals auch insbesondere durch einen Anordnungsplot gemäß 2 erfolgen.

14. **Konstruktion von Hypermannigfaltigkeiten:** Durch XOM können Verfahren und Vorrichtungen zur Konstruktion approximierender Hypermannigfaltigkeiten und zur nichtlinearen Hauptkomponentenanalyse realisiert werden unter Rückgriff auf alle Punkte dieser Patentschrift, insbesondere auf Punkt 1 sowie in Kombination von XOM mit Verfahren und Vorrichtungen gemäß Stand der Technik.

Wichtige Aspekte im Hinblick auf den Einsatz von XOM zur Konstruktion approximierender Hypermannigfaltigkeiten und zur nichtlinearen Hauptkomponentenanalyse sind, daß

(a) dies insbesondere dadurch erfolgen kann daß die Berechnung von Stützstellen für die Hypermannigfaltigkeiten durch lokale, ggf. gewichtete Mittelwertbildung, Interpolation oder Approximation im Anordnungsraum oder Ergebnisraum nach erfolgter XOM-Einbettung erfolgt, vgl. auch Punkt 4. Die XOM-Einbettung für die nichtlineare Hauptkomponentenanalyse ist z. B. möglich durch die Berechnung eines Pfades durch die Datenobjekte des Anordnungsraumes auf der Basis einer Einbettung in eine 1D-Mannigfaltigkeit im Erkundungsraum.

(b) hierbei insbesondere auch die Größe oder Struktur der hierfür gewählten lokalen Bereiche veränderlich sein kann, z. B. unter Verwendung von Verfahren oder Vorrichtungen gemäß Punkt 2, z. B. um eine lokale Anpassung der Repräsentationsqualität der Hyperfläche zu ermöglichen

(c) insbesondere auch die Dimension oder Struktur des Trainingsdatensatzes im Erkundungsraum lokal oder global während eines Trainingsvorganges oder im Laufe wiederholter Trainingsvorgänge veränderlich sein kann, z. B. unter Verwendung von Kriterien zur Bestimmung der globalen oder lokalen Topologieerhaltung oder Dimensionsschätzung, z. B. gemäß Punkten 2 oder 3, dynamisch angepaßt wird.

(d) insbesondere die hypothetisch angenommene Dimension oder Struktur der repräsentierenden Hypermannigfaltigkeit im Anordnungsraum oder der Anordnungsraum selbst lokal oder global während eines Trainingsvorganges oder im Laufe wiederholter Trainingsvorgänge veränderlich sein kann, z. B. unter Verwendung von Kriterien zur Bestimmung der globalen oder lokalen Topologieerhaltung oder Dimensionsschätzung , z. B. gemäß Punkten2 oder 3, dynamisch angepaßt wird.

(e) insbesondere auch im Sinne evolutionärer Algorithmen Strukturhypothesen über Datenverteilungen im Erkundungsraum oder repräsentierende Hypermannigfaltigkeiten im Anordnungsraum erzeugt, dynamisch verändert und/oder optimiert werden, insbesondere durch Verfahren oder Vorrichtungen nach 14c oder 14d, wobei einzelne Strukturhypothesen auch als Individuen betrachtet werden können. Insbesondere können hierbei auch Mutationen durch Verwendung von Kriterien zur Bestimmung der globalen oder lokalen Topologieerhaltung oder Dimensionsschätzung, z. B. nach Punkten 2 (hier insbesondere auch Punkt 2h) oder 3, beeinflußt werden.

(f) die Visualisierung der erzeugten Hypermannigfaltigkeiten direkt im Anordnungraum oder indirekt über deren Einbettung im Erkundungs- bzw. Ergebnisraum erfolgen kann. Die Visualisierung ist somit durch Erkundungs-, Ergebnis-, und Anordnungsplots im Sinne von Punkt 2 möglich. Hierbei kann insbesondere auch die Visualisierung der lokalen Abbildungsqualität gemäß Punkt 2 auf diesen Hypermannigfaltigkeiten oder deren Einbettungen durch Farbkodierung oder sonstige optische Kodierung erfolgen.

15. **Interpolation, Extrapolation, Approximation:** Durch XOM können Verfahren und Vorrichtungen zur Interpolation, Extrapolation oder Approximation von Datenverteilungen realisiert werden unter Rückgriff auf alle Punkte dieser Patentschrift, insbesondere auf Punkt 1 sowie in Kombination von XOM mit Verfahren und Vorrichtungen gemäß Stand der Technik.

Wichtige Aspekte im Hinblick auf Interpolation, Extrapolation oder Approximation bei XOM sind, daß

(a) dies insbesondere durch Verfahren und Vorrichtungen gemäß Punkt 11 erfolgen kann.

(b) dies insbesondere auch dann möglich ist, wenn die Interpolation, Extrapolation oder Approximation nach partiellem oder vollständigem Training der topologieerhaltenden Abbildung für zusätzlich hinzugefügte Datenobjekte erfolgen soll.

(c) dies insbesondere durch Verfahren und Vorrichtungen gemäß Punkt 14 erfolgen kann.

(d) insbesondere durch Einsatz von Verfahren oder Vorrichtungen gemäß Stand der Technik, z. B. neuronale Netze, lokale Modelle oder beliebige andere Verfahren zur Interpolation, Extrapolation oder Approximation die Datenverteilungen im Erkundungs-, Ergebnis-, und/oder Anordnungsraum von im Sinne von XOM trainierten topologieerhaltenden Abbildungen verarbeitet werden können.

16. **Selbstorganisation:** Durch XOM können Verfahren und Vorrichtungen zur Selbstorganisation und Morphogenese von beliebigen Objekten, Strukturen oder Systemen, insbesondere technischen Systemen, realisiert werden, die über Eigenschaften wie Selbstregeneration, Selbstreproduktion oder dezentrale Informationsspeicherung verfügen. Dies kann erfolgen unter Rückgriff auf alle Punkte dieser Patentschrift, insbesondere auf Punkt 1, hier besonders 1t sowie in Kombination von XOM mit Verfahren und Vorrichtungen gemäß Stand der Technik.

17. **Relevance Learning:** Durch XOM können Verfahren und Vorrichtungen zur Bestimmung der Relevanz von Datenobjekten oder Komponenten von Datenobjekten für Aufgaben der Datenverarbeitung und Datenanalyse durch Bestimmung aufgabenspezifischer Zielkriterien realisiert werden, unter Rückgriff auf alle Punkte dieser Patentschrift, insbesondere auf Punkt 1 sowie in Kombination von XOM mit Verfahren und Vorrichtungen gemäß Stand der Technik. Dies kann z. B. erfolgen durch Skalierung der einzelnen Dimensionen bei vektoriellen Eingabedaten, Auswahl von bestimmten Datenobjekten aus dem Trainingsdatensatz für das Training der topologieerhaltenden Abbbildung, z. B. für Aufgaben des überwachten Lernens, Clustering oder der Konstruktion repräsentierender Hypermannigfaltigkeiten.

18. **Visualisierung und Layout von Graphen:** Durch XOM können Verfahren und Vorrichtungen zur Visualisierung und zum Layout von Graphen realisiert werden unter Rückgriff auf alle Punkte dieser Patentschrift, insbesondere auf Punkt 1 sowie in Kombination von XOM mit Verfahren und Vorrichtungen gemäß Stand der Technik.
Der Einsatz von XOM zum Layout und zur Visualisierung von Graphen kann auch insbesondere erfolgen,

    (a) wenn zum Training mehr als eine Datenverteilung im Erkundungsraum benutzt wird.

    (b) wenn zum Training keine uniforme Datenverteilung im Erkundungsraum benutzt wird.

    (c) wenn die Datenobjekte oder Teilmengen davon im Anordnungsraum nicht einer Metrik im mathematischen Sinne genügen.

    (d) wenn die zum Training benutzten Datenverteilungen im Erkundungsraum nicht konvex sind.

    (e) wenn die Datenobjekte oder Teilmengen davon im Anordnungsraum oder im Erkundungsraum nicht der euklidischen Geometrie genügen oder deren Distanz durch beliebige Dissimilaritätsmaße definiert ist.

    (f) wenn für das Training Distanzen von beliebigen Datenobjekten verwendet werden, auch dann, wenn diese nicht durch eine Kante miteinander verbunden sind, z. B. unter Verwendung geodätischer Distanzen oder einer Rangmetrik.

    (g) wenn die topologieerhaltende Abbildung nicht der sequentiellen Formulierung einer selbstorganisierenden Karte nach Kohonen entspricht.

    (h) wenn die zum Training der topologieerhaltenden Abbildung verwendete Verteilung der Trainingsdaten im Erkundungsraum nicht die Dimension 2 oder 3 hat.

    (i) wenn die zum Training der topologieerhaltenden Abbildung verwendete Verteilung keine Kugel in 3D ist.

    (j) wenn die Trainingvorschrift der topologieerhaltenden Abbildung für die zu den Knoten gehörenden Codebuchobjekte sich für unterschiedliche Knoten bzw. Codebuchobjekte unterscheiden kann, vgl. auch Punkt 1m.

    (k) wenn für die Visualisierung des Graphen nicht alle Verbindungen gezeichnet werden, für die wechselseitige Distanzen bekannt sind oder berechnet wurden.

19. **Anwendungen:** Durch XOM können Verfahren und Vorrichtungen für Anwendungen aus den Bereichen Schaltungsentwurf, Bioinformatik, Robotik, Meteorologie, Bildverarbeitung, technische, selbstorganisierende und -reparierende Systeme, Textmining, Flugsicherung, Verkehrsleitsysteme, Codierung, Chiffrierung, Sicherheitstechnik konstruiert werden. Dies kann erfolgen unter Rückgriff auf alle Punkte dieser Patentschrift, insbesondere auf Punkt 1, hier besonders 1t sowie in Kombination von XOM mit Verfahren und Vorrichtungen gemäß Stand der Technik.

20. **Kombinationen:** Die in den einzelnen Punkten aufgeführten Verfahren und Vorrichtungen können auf vielfältige Weise kombiniert werden. Besonders hervorzuheben sind in diesem Zusammenhang:

EP 1 530 779 B1

(a) Kombination von Dimensionsbestimmung und Einbettung

(b) Kombination von Einbettung und Bestimmung von approximierender Hypermannigfaltigkeiten

(c) Kombination von Clustering und Clustervaliditätsanalyse

(d) Kombination von Einbettung und Clustering. Die Einbettung kann hierbei zur Dimensions- bzw. Datenreduktion dienen.

21. **Kombination mit Vorrichtungen und Verfahren gemäß Stand der Technik**: Die in den einzelnen Punkten aufgeführten Verfahren und Vorrichtungen können auch in Kombination mit Verfahren und Vorrichtungen angewandt werden, die dem Stand der Technik entsprechen. Insbesondere sind hervorzuheben:

(a) Kombination von XOM-Clustering mit Verfahren und Vorrichtungen zum überwachten Lernen, insbesondere zur Erzeugung von Netzwerken im Sinne von Radiale-Basisfunktionen-Netzwerken mit und ohne Normierung der Basisfunktionen. Hierbei kann zur Definition der Basisfunktionen ein beliebiges Distanzmaß zwischen den Codebuchobjekten und den Lokalisationsparametern (z. B. Schwerpunkt, Median) der für das XOM-Clustering eingesetzten prototypischen Verteilungen des Erkundungsraumes verwendet werden, z. B. die Likelihood der Positionierung der Codebuchobjekte im Hinblick auf die prototypischen Verteilungen.

(b) Kombination von XOM-Einbettung mit Verfahren oder Vorrichtungen zur Interpolation oder Approximation.

22. **Visualisierung:** Zur Visualisierung von Eingabedaten, Strukturhypothesen und Berechnungsergebnissen bei XOM können zahlreiche Verfahren und Vorrichtungen eingesetzt werden. Hervorzuheben sind hier insbesondere

(a) die Visualisierung der Codebuchobjekte im Ergebnis- bzw. Erkundungsraum oder deren Wanderungsbewegung im Sinne eines Ergebnisplots, vgl. Punkt 2

(b) die Visualisierung der Trainingsdatenverteilungen im Erkundungsraum im Sinne eines Erkundungsplots, vgl. Punkt 2

(c) die Visualisierung der Datenobjekte des Erkundungs- oder Ergebnisraumes im Anordnungsraum im Sinne eines Anordnungsplots, vgl. Punkt 2

(d) die Visualisierung der Abbildungsqualität durch Distanzplot oder daraus abgeleitete Größen, vgl. Punkt 2

(e) Farbcodierung oder anderweitige graphische Kennzeichnung der lokalen Topologieverletzung oder anderer lokaler Kriterien der Abbildungsqualität gemäß Punkt 2 im Erkundungs-, Ergebnis-, Anordnungs-, oder Distanzplot.

23. **Mutual Connectivity Analysis:** Im folgenden seien Verfahren und Vorrichtungen beschrieben, die eine innovative Art der Datenverarbeitung auf der Basis von Dissimilaritätsdaten ermöglichen. Das zugrundeliegende Verfahren wird forthin als "Mutual Connectivity Analysis" (MCA) bezeichnet. XOM repräsentiert eine wichtige Methode zur Datenanalyse im Zusammenhang mit MCA, siehe unten.
Zur Verdeutlichung sei zunächst ein Beispiel für einen typischen technischen Verfahrensablauf dargestellt. Es sei betont, daß dieser Verfahrensablauf nicht auf die in diesem Beispiel genannten Datentypen und Berechnungsverfahren eingeschränkt ist.

- Ausgangspunkt sei eine Menge von $N$ Zeitreihen $Z = \{z_1, \ldots, z_N\}$, z. B. in Form einer Menge von Datenvektoren im $R^M$, $M \in \mathbb{N}$, wobei jeder Datenvektor $z_n$, $n = 1, \ldots, N$ eine Zeitreihe und jedes Element $z_{nt}$ des Vektors $z_n$ den Wert der Zeitreihe zum Zeitpunkt t repräsentiert mit $t \in \{1, \ldots, M\}$.

- Nun wird für jede Zeitreihe ein "gleitendes Fenster" der Länge $2p + 1$ mit $p, p \in \mathbb{N}$, $p < M$ definiert, das $2p+1$ zeitlich benachbarte Werte der Zeitreihe mit $t - p \leq t \leq t + p$, bzw. $2p+1$ aufeinanderfolgende Elemente des die Zeitreihe repräsentierenden Datenvektors zusammenfaßt, wobei $p$ für alle Zeitreihen gleich gewählt wird. (Für den Anfang und das Ende der Zeitreihe seien heuristische Konventionen getroffen, wie das gleitende Fenster dort zu definieren sei.) Die hierdurch aus der Zeitreihe $z_n$ ausgeschnittenen Bereiche bzw. die aus dem die Zeitreihe repräsentierenden Datenvektor ausgeschnittenen Vektoren seien im folgenden als "Fenster" $x_n(t)$ bezeichnet.

- Nun werden jeweils zwei Zeitreihen $z_r$ und $z_s$ ausgewählt.

- Dann wird für alle Fenster dieser beiden Zeitreihen, beispielsweise durch Anwendung eines überwachten Lernverfahrens, eine Distanz $d(x_r(t), x_s(t))$ ermittelt. Dies kann beispielsweise erfolgen, indem für jedes t der Vorhersagefehler ermittelt wird, mit dem nach Abschluß des Trainings des überwachten Lernverfahrens $x_s(t)$ aus $x_r(t)$ vorhergesagt werden kann. Das überwachte Lernverfahren kann beispielsweise trainiert werden mit einer Teilmenge aller Paare $(x_r(t), x_s(t))$, hierzu kann die Menge dieser Paare - wie für die Anwendung überwachter Lernverfahren allgemein üblich - in Trainings-, Test-, und/oder Validierungsdatensätze aufgespalten werden. Es ist klar, daß es je nach Fragestellung auch sinnvoll sein kann, statt $d(x_r(t), x_s(t))$ auch $d(x_r(t), x_s(t + \tau))$ mit geeignet zu wählendem Zeitversatz $\tau$ zu bestimmen.

- Durch ein geeignetes Berechnungsverfahren bestimmt man nun für die als Testdatensatz ausgewählten Paare $(x_r(t), x_s(t))$ aus den errechneten $d(x_r(t), x_s(t))$ eine Distanz $D_{rs} = D(x_r, x_s)$ zwischen den Zeitreihen $z_r$ und $z_s$. Eine naheliegendes Berechnungsverfahren hierfür ist zum Beispiel die Mittelwertbildung aus den $d(x_r(t), x_s(t))$ für alle im Testdatensatz betrachteten t im Sinne eines mittleren Vorhersagefehlers. Man beachte, daß i. a. $D_{rs} \neq D_{sr}$ gilt.

- Das Verfahren kann nun beispielsweise für alle $N^2$ Paare von Zeitreihen wiederholt werden.

- Die hieraus erhaltene Distanzmatrix der Distanzen zwischen jeweils zwei Zeitreihen kann nun auf beliebige Weise weiterverarbeitet werden, insbesondere durch Verfahren der Datenpartitionierung auf Dissimilaritätsdaten, z. B. paarweises Clustering gemäß Stand der Technik, z. B. [21], [14], [10] oder dieser Patentschrift, z. B. nach Punkt 5 oder durch Verfahren der Klassifikation auf Dissimilaritätsdaten, z. B. gemäß Punkt 7d.

Bei der Bestimmung der wechselseitigen Distanzen der Zeitreihen kann ein erheblicher Geschwindigkeitsvorteil dadurch erzielt werden, daß Berechnungsvorschriften angewandt werden, die diese Distanzbestimmung in zwei Schritte aufspalten, wobei ein Schritt für jede Zeitreihe nur einmal durchgeführt und nur der verbleibende Schritt für jedes Zeitreihenpaar durchgeführt werden muß.

Dies sei an obigem Beispiel erläutert: So kann man die Vorhersage einer Zeitreihe $z_s$ aus einer anderen Zeitreihe $z_r$ beispielsweise durch Training eines Radiale-Basisfunktionen-Netzwerkes (z. B. nach [46]) verwirklichen: hierbei werden zunächst die Fenster der Zeitreihe $z_r$ einer Vektorquantisierung unterzogen. Hierdurch erhält man prototypische Zeitreihenfenster, die man im Sinne der einführenden Bemerkungen über Vektorquantisierung in Abschnitt 1.1 als Codebuchvektoren bezeichnen kann. Entscheidend ist, daß diese Vektorquantisierung für jede Zeitreihe nur *einmal* durchgeführt werden muß. Die Codebuchvektoren werden nun für das überwachte Training der Ausgabeschicht eines Radiale-Basisfunktionen-Netzwerks eingesetzt (vgl. z. B. [46]), wobei als Zielwerte für das überwachte Training die Fenster der Zeitreihe $z_s$ eingesetzt werden. Das Training der Ausgabeschicht des Radiale-Basisfunktionen-Netzwerkes muß für jede aus der Zeitreihe $z_r$ vorherzusagende Zeitreihe $z_s$ wiederholt werden, also - falls man alle Zeitreihenpaare berücksichtigt - insgesamt $N^2$-mal. Die Vektorquantisierung muß also - falls man alle Zeitreihenpaare berücksichtigt - insgesamt $N$-mal, das Training der Ausgabeschicht des Radiale-Basisfunktionen-Netzwerkes $N^2$-mal durchgeführt werden. Im allgemeinen ist nun der Berechnungsaufwand für die Vektorquantisierung erheblich größer als für das überwachte Training der Ausgabeschicht des Radiale-Basisfunktionen-Netzwerkes, wodurch sich für das Gesamtverfahren ein erheblicher Geschwindigkeitsvorteil ergibt.

In analoger Weise kann man statt der Anwendung von Radiale-Basisfunktionen-Netzwerken auch lokale Modelle einsetzen, z. B. [43], [29], z. B. lokale Durchschnittsmodelle oder lokale lineare Modelle. So kann man für die Vorhersage einer Zeitreihe $z_s$ aus einer anderen Zeitreihe $z_r$ folgendermaßen vorgehen: Bestimme zunächst jeweils die $k$ nächsten Nachbarn der Fenster der Zeitreihe $z_r$ unter den anderen Fenstern dieser Zeitreihe. Dieser Schritt muß für jede Zeitreihe $z_r$ nur einmal durchgeführt werden. In einem zweiten Schritt wird dann für jede vorherzusagende Zeitreihe gemäß der Berechnungsvorschrift des jeweils angewandten lokalen Modells zwischen diesen $k$ nächsten Nachbarn der Zeitreihenfenster interpoliert bzw. approximiert, wobei als Zielwerte für das überwachte Training die Fenster der Zeitreihe $z_s$ eingesetzt werden. Die Interpolation bzw. Approximation für die $k$ nächsten Nachbarn der Zeitreihenfenster in der Berechnungsvorschift des lokalen Modells muß für jede aus der Zeitreihe $z_r$ vorherzusagende Zeitreihe $z_s$ wiederholt werden, also - falls man alle Zeitreihenpaare berücksichtigt - insgesamt $N^2$-mal. Die Suche der $k$ nächsten Nachbarn der Zeitreihenfenster muß also - falls man alle Zeitreihenpaare berücksichtigt - insgesamt $N$-mal, die Interpolation bzw. Approximation für die gefundenen $k$ nächsten Nachbarn der Zeitreihenfenster $N^2$-mal durchgeführt werden. Im allgemeinen ist nun der Berechnungsaufwand für die Suche der $k$ nächsten Nachbarn der Zeitreihenfenster erheblich größer als für die Interpolation bzw. Approximation gemäß der Berechnungsvorschrift des lokalen Modells, wodurch sich für das Gesamtverfahren ebenfalls ein erheblicher Geschwindigkeitsvorteil ergibt.

Zur Verdeutlichung sei zunächst ein Beispiel für einen typischen technischen Verfahrensablauf dargestellt.

Es sei betont, daß das Konzept der MCA nicht auf die in diesem Beispiel zur Analyse von Zeitreihenmengen genannten Datentypen und Berechnungsverfahren eingeschränkt ist. Das obige Beispiel motiviert allgemein vielmehr folgenden technischen Verfahrensablauf:

Zunächst seien einige Begriffe definiert:

*Datenobjekte* seien Daten ohne jegliche Beschränkungen, z. B. Mengen, Zahlen, Vektoren, Graphen, Symbole, Texte, Bilder, Signale, mathematische Abbildungen und deren Repräsentationen, z. B. Matrizen, Tensoren etc. sowie beliebige Kombinationen von Datenobjekten.

*Unterdatenobjekte* seien Datenobjekte, die nicht die Gesamtinformation des Datenobjektes enthalten, d. h. aus der Kenntnis eines Unterdatenobjektes sei das ursprüngliche Datenobjekt i. a. nicht vollständig berechenbar.

*Distanzobjekte* seien Datenobjekte, die Ähnlichkeitsbeziehungen bzw. Distanzen zwischen Datenobjekten gemäß einem beliebigen Distanzmaß charakterisieren. Hierbei sind sowohl durch Metriken induzierte Distanzmaße als auch insbesondere durch beliebige, ggf. nicht durch eine Metrik bestimmte, Distanzmaße definierte Ähnlichkeitsbeziehungen bzw. Dissimilaritäten eingeschlossen. Einige typische Distanzmaße auf der Basis von Dissimilaritäten sind z. B. in [19] aufgeführt. Metrik sei hierbei in mathematischem Sinne definiert, siehe z. B. [5].

*Unterdistanzobjekte* Distanzobjekte zwischen Unterdatenobjekten, insbesondere unterschiedlicher Datenobjekte.

Zur Verdeutlichung sei erwähnt, daß im Hinblick auf das obige Beispiel folgende Entsprechungen gewählt werden könnten: Datenobjekt entspricht Zeitreihe. Unterdatenobjekt entspricht Fenster. Unterdistanzobjekt entspricht Distanz zwischen Zeitreihenfenstern unterschiedlicher Zeitreihen.

Technischer Verfahrensablauf, MCA:

Gegeben sei eine Menge von Datenobjekten. Die Menge der Datenobjekte kann insbesondere auch exakte Kopien von Datenobjekten enthalten.

- Gib die Menge der Datenobjekte in das Verfahren bzw. die Vorrichtung zur Datenverarbeitung ein.

- Zerlege die Datenobjekte in Unterdatenobjekte. Die Teilung muß weder disjunkt noch vollständig erfolgen.

- Berechne Distanzobjekte zwischen Unterdatenobjekten der eingegebenen Menge von Datenobjekten. Diese Distanzobjekte seien Unterdistanzobjekte genannt.

- Berechne unter Verwendung der Unterdistanzobjekte neue Distanzobjekte, die die Distanzen zwischen den Datenobjekten der eingegebenen Menge von Datenobjekten charakterisieren.

- Gib die hierdurch errechneten Distanzobjekte aus.

Wesentlich ist, daß die Berechnung der Distanzobjekte zwischen den Unterdatenobjekten bzw. Datenobjekten durch beliebige Verfahren zur Interpolation, Extrapolation, und/oder Approximation durchgeführt werden kann. Insbesondere fallen hierunter:

(i) Statistische Lernverfahren jeglicher Art, insbesondere solche, die überwachtes Lernen voraussetzen, insbesondere neuronale Netze und Support Vector Machines, Bayes-Netze, Hidden-Markov-Modelle, Observable Operator Models (z. B. [23]). Unter den neuronalen Netzen seien insbesondere erwähnt: Multilayer-Perceptron in allen in der Literatur beschriebenen Varianten, insbesondere mit Training durch Error-Backpropagation; Radiale-Basisfunktionen-Netzwerke in allen in der Literatur beschriebenen Varianten, insbesondere auch generalisierte Radiale-Basisfunktionen-Netzwerke, ART-Netzwerke, Local Linear Mappings (LLM) (vgl. z. B. [36]) in allen in der Literatur beschriebenen Varianten sowie andere neuronale Netze, die überwachtes Lernen ermöglichen, z. B. topologieerhaltende Abbildungen, z. B. selbstorganisierende Karten, sowie XOM.

(ii) Lokale Modelle jeglicher Art: Lokale Durchschnittsmodelle (auch mit Gewichtung), lokale lineare Modelle, lokale Modelle mit topologischen Zusatzbedingungen (z. B. [43]), insbesondere adaptive lokale Modelle, deren Parameter vom jeweils erzielten Lernerfolg abhängen (zur Literaturübersicht vgl. z. B. auch [43], [30], [29]).

(iii) Verfahren der schließenden Statistik, insbesondere wenn Prüfgrößen oder Signifikanzniveaus statistischer Tests als Distanzmaß benutzt werden [39].

(iv) Spezielle Berechnungsverfahren wie Levenstein-Distanz, Mutual Information, Kullback-Leibler-Divergenz, in der Signalverarbeitung, insbesondere für Biosignale, eingesetzte Kohärenzmaße, z. B. [42], [41], LPC cepstral distance, Distanzmaße, die Leistungsspektren zweier Signale in Beziehung setzen, wie z. B. die Itakura-Saito-Distanz (vgl. [22]), die Mahalanobis-Distanz, Distanzmaße im Hinblick auf die Phasensynchronisation von Oszillatoren, z. B. [37].

Eine Variante des Verfahrensablaufs sei besonders aufgeführt: Zur Verdeutlichung sei erwähnt, daß im Hinblick auf das obige Beispiel zur Analyse einer Menge von Zeitreihen zusätzlich folgende Entsprechungen gewählt werden könnten: Ein Hilfsdatenobjekt entspricht beispielsweise einem Codebuchvektor bei der Vektorquantisierung der Zeitreihenfenster einer Zeitreihe bei der Zeitreihenvorhersage durch Radiale-Basisfunktionen-Netzwerke. Ein Hilfsdatenobjekt entspricht alternativ beispielsweise einer Menge von $k$ nächsten Nachbarn eines Zeitreihenfensters bei der Zeitreihenvorhersage durch lokale Modelle.

Variante des technischen Verfahrensablaufes, MCA:

Gegeben sei eine Menge von Datenobjekten. Die Menge der Datenobjekte kann insbesondere auch exakte Kopien von Datenobjekten enthalten.

- Gib die Menge der Datenobjekte in das Verfahren bzw. die Vorrichtung zur Datenverarbeitung ein.

- Zerlege die Datenobjekte in Unterdatenobjekte. Die Teilung muß weder disjunkt noch vollständig erfolgen.

- Berechne für Unterdatenobjekte einzelner Datenobjekte neue Datenobjekte, sog. Hilfsdatenobjekte.

- Berechne unter Verwendung von Hilfsdatenobjekten Distanzobjekte zwischen Unterdatenobjekten der eingegebenen Menge von Datenobjekten. Diese Distanzobjekte seien Unterdistanzobjekte genannt.

- Berechne unter Verwendung von Unterdistanzobjekten neue Distanzobjekte, die die Distanzen zwischen den Datenobjekten der eingegebenen Menge von Datenobjekten charakterisieren.

- Gib die hierdurch errechneten Distanzobjekte aus.

Insbesondere können bei der Berechnung eines Hilfsdatenobjekts nur die Unterdatenobjekte jeweils eines einzelnen eingegebenen Datenobjekts und/oder mehr als jeweils ein Unterdatenobjekt verwendet werden.

Im Anschluß können die ausgegebenen Distanzobjekte analysiert werden. Hierzu eignen sich Verfahren und Vorrichtungen gemäß Stand der Technik und/oder den Ausführungen in dieser Patentschrift. Insbesondere seien in diesem Zusammenhang speziell erwähnt: Verfahren und Vorrichtungen zum Clustering und/oder zum überwachten Lernen, insbesondere zum paarweisen Clustering von Dissimilaritätsdaten, z. B. [21], [14], [10], Verfahren und Vorrichtungen zum XOM-Clustering gemäß Punkt 5, sowie zum überwachten Lernen, z. B. zur Klassifikation, auf Dissimilaritätsdaten z. B. [15], Verfahren und Vorrichtungen zum überwachten Lernen auf Dissimilaritätsdaten durch XOM gemäß Punkt 7d.

Als Anwendungsbeispiele seien genannt: Datenverarbeitung, z. B. Clustering, von Finanzzeitreihen, z. B. Wertpapierkursen, Verarbeitung von Daten, z. B. Zeitreihen, aus den Bereichen Wirtschaft, Finanzen, Medizin, Naturwissenschaft und/oder Technik, insbesondere angeordnete Datenobjekte, z. B. Zeitreihen, aus Laborwerten oder sonstigen Meßwerten biomedizinischer oder meteorologischer Untersuchungsverfahren, z. B. biomedizinische Bilder, Genexpressionsprofile, Gen- oder Aminosäuresequenzen.

Für obiges Beispiel zur Zeitreihenanalyse ist klar, daß die dort getroffenen Festlegungen von Datentypen und Berechnungsverfahren im Lichte der allgemeinen technischen Verfahrensabläufe keine Einschränkungen bedeuten. Insbesondere können statt Zeitreihen beliebige, z. B. angeordnete Datenobjekte, z. B. Bilder oder Gensequenzen, verwendet werden. Bei der Analyse von Zeitreihen müssen die Werte der Zeitreihen nicht zeitlich äquidistant ermittelt worden sein, es müssen keine gleitenden Fenster oder überwachte Lernverfahren zur Analyse der ausgegebenen Daten verwendet werden etc.

**Literatur**

[1] H.U. Bauer and K.R. Pawelzik. Quantifying the neighborhood preservation of self-organizing feature maps. IEEE Transactions on Neural Networks, 3(4):570-579, 1992.

[2] C. M. Bishop, M. Svensen, and C. K. I. Williams. Developments of the generative topographic mapping. Technical Report NCRG-98-012, Neural Computing Research Group, Aston University, Birmingham, 1998.

[3] C.M. Bishop, M. Svensen, and C.K.I. Williams. GTM: A principled alternative to the self-organizing map. In C. von der Malsburg, W. von Seelen, J.C. Vorbrüggen, and B. Sendhoff, editors, Artificial Neural Networks - ICANN96, Int. Conf. on Artificial Neural Networks, pages 165-170, Bochum, Germany, 1996. Springer. ISBN 3-540-61510-5.

[4] C.M. Bishop, M. Svensen, and C.K.I. Williams. GTM: the generative topographic mapping. Neural Computation, 10(1):215-234, 1998.

[5] I.N. Bronstein and K.A. Semendjajew. Ergänzende Kapitel zu Taschenbuch der Mathematik. Verlag Harri Deutsch, Thun und Frankfurt/Main, 6th edition, 1991.

[6] C. Cortes and V. Vapnik. Support vector networks. Machine Learning, 20(3):273-297, 1995.

[7] R. Der and M. Herrmann. Second-order learning in self-organizing maps.

[8] D.R. Dersch. Eigenschaften neuronaler Vektorquantisierer und ihre Anwendung in der Sprachverarbeitung. Verlag Harri Deutsch, Reihe Physik, Bd. 54, Thun, Frankfurt am Main, 1996. ISBN 3-8171-1492-3.

[9] D.R. Dersch. Feature extraction from complete data sets: A new approach to pattern recognition and its application to text-independent speaker identification. Technical report, Speech Technology Research Group, Dept. of Electrical Engineering, University of Sydney, Australia, 1997.

[10] R.O. Duda and P.E. Hart. Pattern Classification and Scene Analysis. Wiley, New York, 1973.

[11] R. Durbin and G. Mitchison. A dimension reduction framework for understanding cortical maps. Nature, 343: 644-647, 1990.

[12] R.M. Gaze and M.J. Keating. The visual system and neuronal specifity. Nature, 237:375-378, 1972.

[13] T. Graepel, M. Burger, and K. Obermayer. Phase transitions in stochastic self-organizing maps. Physical Review E, 56(4):3876-3890, 1997.

[14] T. Graepel, M. Burger, and K. Obermayer. Self-organizing maps: Generalizations and new optimization techniques. Neurocomputing, 20:173-190, 1998.

[15] T. Graepel, R. Herbrich, P. Bollmann-Sdorra, and K. Obermayer. Classification on pairwise proximity data. In Advances in Neural Information System Processing, pages 438-444, 1999.

[16] P. Grassberger and I. Procaccia. Characterization of strange attractors. Phys. Rev. Lett., 50:346-349, 1983.

[17] R.M. Gray. Vector quantization. IEEE Transactions on Acoustics, Speech, and Signal Processing, pages 4-29, April 1984.

[18] F. Hausdorff. Dimension und äußeres Maß. Mathematische Annalen, 79:157-179, 1919.

[19] J. Herault, A. Guerin-Dugue, and P. Villemain. Searching for the embedded manifolds in high-dimensional data, problems and unsolved questions. In Proc. of the 10th Europ. Symp. on Art. Neur. Netw. (ESANN), pages 173-184, Bruges, Belgium, 2002.

[20] J.A. Hertz, A.S. Krogh, and R.G: Palmer. Introduction to the Theory of Neural Computation. Addison-Wesley, Reading, Massachusetts, 1991. Lecture notes vol. I: Santa Fe Institute Studies in the Sciences of Complexity.

[21] T. Hofmann and J. Buhmann. Pairwise data clustering by deterministic annealing. IEEE Transaction on Pattern Analysis and Machine Intelligence, 19(1):1-14, 1997.

[22] X.D. Huang, Y. Ariki, and M.A. Jack. Hidden Markov Models for Speech Recognition. Edinburgh University Press, Edinburgh, 1990.

[23] H. Jaeger. Observable operator models for discrete stochastic time series. Neural Computation, 12(6): 1371-1398.

[24] T. Kohonen. Self-Organizing Maps. Springer, Berlin, Heidelberg, New York, 3 edition, 2001. ISBN 3-540-67921-9, ISSN 0720-678X.

[25] Y. Linde, A. Buzo, and R.M. Gray. An algorithm for vector quantizer design. IEEE Transactions on Communications, 28:84-95, 1980.

[26] M.C. Mackey and L. Glass. Oscillation and chaos in physiological control systems. Science, 197:287, 1977.

[27] B.B. Mandelbrot. Die fraktale Geometrie der Natur. Birkhäuser, Basel, 1987.

[28] T.M. Martinetz and K. Schulten. A 'neural gas' network learns topologies. In Proceedings of the International Conference on Artificial Neural Networks ICANN, pages 397-402, Amsterdam, 1991. Elsevier Science Publishers.

[29] J. McNames. Innovations in local modeling for time-series prediction. PhD thesis, Stanford University, Stanford, 1999.

[30] J. McNames. Winning entry of the K. U. Leuven time-series prediction competition. International Journal of Bifurcation and Chaos, 9(8):1458-1501, 1999.

[31] G.W. Milligan and M.C. Cooper. An examination of procedures for determining the number of clusters in a data set. Psychometrika, 50:159-179, 1985.

[32] G. Mitchison and R. Durbin. Optimal numberings of an N x N array. SIAM J. Alg. Disc. Meth., 7:571-581, 1986.

[33] J. Moody and C. Darken. Fast learning in networks of locally-tuned processing units. Neural Computation, 1: 281-294, 1989.

[34] L.M.D. Owsley, L.E. Atlas, and G.D. Bernard. Self-organizing feature maps and hidden Markov models. IEEE Transactions on Signal Processing, 45(11):2787-2798, 1997.

[35] H. Ritter. Asymptotic level density for a class of vector quantization processes. IEEE Transactions on Neural Networks, 1(2):173-175, 1991.

[36] H. Ritter, T. Martinetz, and K. Schulen. Neuronale Netze. Addison Wesley, New York, 2nd edition, 1991.

[37] M.G. Rosenblum, A.S. Pikovsky, and J. Kurths. Phase synchronization of chaotic oscillators. Phys. Rev. Lett., 76:1804-1807, 1996.

[38] D.E. Rumelhart and J.L. McClelland. Learning internal representations by error propagation. In Parallel Distributed Processing, volume I. M.I.T. Press, Cambridge, MA, 1986.

[39] L. Sachs. Angewandte Statistik. Springer Verlag, 7-th edition, 1992.

[40] J.W. Sammon. A nonlinear mapping for data structure analysis. IEEE Transactions on Computers, C 18:401-409, 1969.

[41] B. Schack, W. Krause, S. Weiss, and P. Rappelsberger. EEG and MEG synchronisation phenomena during cognitive processes. International Journal of Psychophysiology, 30:50-51, 1998.

[42] B. Schack, P. Rappelsberger, C. Anders, S. Weiss, and E. Möller. Quantification of synchronization processes by coherence and phase and its application in analysis of electrophysiological signals. International Journal of Bifurcation and Chaos, 10:2565-2586, 2000.

[43] G. Sugihara and R.M. May. Nonlinear forecasting as a way of distinguishing chaos from measurement error in time series. Nature, 344:734-741, 1990.

[44] T. Villmann and H.U. Bauer. The GSOM algorithm for growing hypercubical output spaces in self-organizing feature maps. In T. Kohonen, editor, Proc. Self-organizing Maps, Helsinki, 1997.

[45] A. Wismüller, O. Lange, D.R. Dersch, G.L. Leinsinger, K. Hahn, B. Pütz, and D. Auer. Cluster analysis of biomedical image time-series. International Journal of Computer Vision, 46(2):103-128, 2002.

[46] A. Wismüller, F. Vietze, and D.R. Dersch. Segmentation with neural networks. In Isaac Bankman, Raj Rangayyan, Alan Evans, Roger Woods, Elliot Fishman, and Henry Huang, editors, Handbook of Medical Imaging, Johns Hopkins University, Baltimore, 2000. Academic Press. ISBN 0120777908.

**Patentansprüche**

1. Verfahren zur Datenverarbeitung, das auf einer Datenverarbeitungseinrichtung abläuft, für die Abbildung von zu verarbeitenden Eingabedaten auf Ausgabedaten, bei dem:

   zu verarbeitende Datenobjekte als Eingabedaten eingegeben werden, die eingegebenen Datenobjekte mit Hilfe einer topologieerhaltenden Abbildung verarbeitet werden, indem
   Neuronen nach einem vorgegebenen Schema im Anordnungsraum angeordnet werden,
   den Neuronen Codebuchobjekte im Ergebnisraum zugeordnet werden, Codebuchobjekte verarbeitet werden gemäß der Berechnungsvorschrift einer topologieerhaltenden Abbildung unter Verwendung von Datenobjekten des Erkundungsraumes,
   die verarbeiteten Codebuchobjekte als Ausgabedaten ausgegeben werden,

   **dadurch gekennzeichnet, daß**
   zumindest ein Teil der eingegebenen Datenobjekte verwendet wird, um die Anordnung von Neuronen im Anordnungsraum festzulegen, und/oder daß für die Datenverarbeitung erforderliche, von den zu verarbeitenden Eingabedaten unabhängige Datenobjekte eingegeben werden, die als Datenobjekte des Erkundungsraumes verwendet werden.

2. Verfahren nach Anspruch 1, bei dem die zu verarbeitenden Datenobjekte Distanzobjekte sind.

3. Verfahren nach Anspruch 1 oder 2, bei dem die Datenobjekte im Anordnungsraum irregulär angeordnet werden.

4. Verfahren nach einem der vorhergehenden Ansprüche, bei dem Datenobjekte des Anordnungsraumes, Erkundungsraumes und/oder Ergebnisraumes
   einer nichteuklidischen Geometrie genügen,
   benutzt werden, die Distanzobjekte zu Datenobjekten einer lokalen Nachbarschaft von Datenobjekten sind,
   Datenverteilungen mit fraktaler Dimension bilden,
   Datenverteilungen nicht orientierbarer Flächen im Sinne der Differentialgeometrie repräsentieren,
   während des Trainingsvorganges oder im Laufe mehrerer Trainingsvorgänge der topologieerhaltenden Abbildung hinzugefügt, weggelassen oder verändert werden, insbesondere Distanzobjekte im Anordnungsraum hinzugefügt, weggelassen oder verändert werden,
   durch Zusatzbedingungen beeinflußt werden,
   in lokalen Einheiten gespeichert und/oder verarbeitet werden
   und/oder
   nach Abschluß des Trainings der topologieerhaltenden Abbildung hinzugefügt, weggelassen oder verändert werden.

**5.** Verfahren nach einem der vorhergehenden Ansprüche, bei dem die Berechnungsvorschrift der topologieerhaltenden Abbildung und/oder wenigstens ein Parameter dieser Berechnungsvorschrift
in Abhängigkeit vom jeweils verarbeiteten Datenobjekt des Anordnungs-, Erkundungs- und/oder Ergebnisraumes ausgewählt wird,
während des Trainingsvorganges oder im Laufe mehrerer Trainsingsvorgänge der topologieerhaltenden Abbildung verändert wird, insbesondere in Abhängigkeit vom jeweils verarbeiteten Datenobjekt des Anordnungs-, Erkundungs-, und/oder Ergebnisraumes,
und/oder
durch Zusatzbedingungen beeinflußt wird.

**6.** Verfahren zur Datenverarbeitung, das auf einer Datenverarbeitungseinrichtung abläuft, für die Bestimmung der Clustervalidität,
bei dem Datenobjekte eingegeben werden,
Distanzobjekte zwischen diesen Datenobjekten eingegeben und/oder berechnet werden,
sowie eine Zuordnung der zu verarbeitenden Datenobjekte zu Gruppen eingegeben und/oder berechnet wird, nach einem der Ansprüche 1 bis 5,
und ein Maß für die Qualität dieser Zuordnung als Ausgabedaten ausgegeben wird,
**dadurch gekennzeichnet, daß**
das Maß für die Qualität der Zuordnung unter Verwendung von wenigstens einem Teil der eingegebenen und/oder berechneten Distanzobjekte berechnet wird.

**7.** Verfahren nach Anspruch 6, bei dem das Maß für die Qualität der Zuordnung unter Anwendung eines Verfahrens nach einem der Ansprüche 1 bis 5 und/oder einer Kostenfunktion eines Verfahrens zum Clustering von Dissimilaritätsdaten berechnet wird.

**8.** Verfahren nach einem der vorhergehenden Ansprüche, das wiederholt durchgeführt wird, wobei Ausgabedaten einer vorhergehenden Durchführung des Verfahrens als Eingabedaten einer nachfolgenden Durchführung des Verfahrens eingegeben werden.

**9.** Verfahren nach einem der vorhergehenden Ansprüche, bei dem die Qualität der Ausgabedaten bestimmt wird und die bestimmte Qualität ausgegeben wird.

**10.** Verfahren nach Anspruch 9, bei dem die Qualität bestimmt wird, indem
Maße zur Topologie- und/oder Verteilungserhaltung berechnet werden, Verzerrungsmaße berechnet werden,
die Distanzen von Datenobjekten im Anordnungsraum mit Distanzen von korrespondierenden Datenobjekten im Ergebnis- und/oder Erkundungsraum in Beziehung gesetzt werden, insbesondere in einem Distanzplot aufgetragen werden,
Datenobjekte des Erkundungs-, Ergebnis-, und/oder Anordnungsraumes graphisch dargestellt werden, insbesondere in einem Erkundungs-, Ergebnis-, und/oder Anordnungsplot aufgetragen werden,
aus Datenobjekten des Erkundungs-, Ergebnis-, und/oder Anordnungsraumes berechnete Datenobjekte graphisch dargestellt werden, insbesondere in einem Erkundungs-, Ergebnis-, und/oder Anordnungsplot aufgetragen werden,
der Abbildungsfehler zur Interpolation, Extrapolation, Approximation und/oder überwachtes Lernen berechnet und ausgegeben wird, insbesondere durch Hin- und Rückprojektion,
und/oder
Datenobjekte sequentiell verarbeitet werden.

**11.** Verfahren nach Anspruch 9 oder 10, bei dem die bestimmte Qualität benutzt wird, um Datenobjekte des Erkundungs-, Ergebnis-, und/oder Anordnungsraumes der topologieerhaltenden Abbildung hinzuzufügen, wegzulassen oder zu verändern,
und/oder
die Berechnungsvorschrift der topologieerhaltenden Abbildung und/oder deren Parameter zu verändern, insbesondere in Abhängigkeit von Datenobjekten des Erkundungs-, Ergebnis-, und/oder Anordnungsraumes.

**12.** Verfahren nach einem der vorhergehenden Ansprüche, bei dem die Datenverarbeitung angewandt wird
zur Dimensionsbestimmung, insbesondere zur Bestimmung fraktaler Dimensionen,
zur nichtlinearen Einbettung, insbesondere von nichtmetrischen Daten und/oder Dissimilaritätsdaten,
zum Clustering, insbesondere von nichtmetrischen Daten und/oder Dissimilaritätsdaten,
zur Bestimmung der Clustervalidität, insbesondere für Dissimilaritätsdaten und/oder nichtmetrische Daten,

zum überwachten Lernen, insbesondere auf nichtmetrischen Daten und/oder Dissimilaritätsdaten,
zur Registrierung von Datensätzen,
zum aktiven Lernen,
zum Sortieren,
zur Optimierung, insbesondere für nichtmetrische Daten und/oder Dissimilaritätsdaten,
zum Auffinden von Lösungen von Travelling-Salesman-Problemen und dazu äquivalenten Problemen, insbesondere nichtmetrischen Travelling-Salesman-Problemen,
zur Berechnung von Hypermannigfaltigkeiten,
zur Interpolation, Extrapolation, und/oder Approximation,
zum Relevance Learning,
zur Visualisierung von Graphen,
zum Layout von Graphen,
und/oder
zur Konstruktion sich selbst entwickelnder, sich selbst reparierender und/oder reproduzierender Systeme, insbesondere technische Systeme.

13. Verfahren nach Anspruch 12, das wie folgt kombiniert angewandt wird:

Dimensionsbestimmung und nichtlineare Einbettung, nichtlineare Einbettung und Berechnung von Hypermannigfaltigkeiten, Clustering und Bestimmung der Clustervalidität

und/oder
nichtlineare Einbettung und Clustering.

14. Verfahren nach einem der vorhergehenden Ansprüche, bei dem die Datenverarbeitung angewandt wird
zur Molekulardynamiksimulation, insbesondere bei dem Zwangsbedingungen, insbesondere starre räumliche Beziehungen, im Molekül und/oder seiner Umgebung als Distanzen der Neuronen im Anordnungsraum modelliert werden,
zur Problemlösung in der Robotik, insbesondere bei dem Zwangsbedingungen, insbesondere starre räumliche Beziehungen, im Roboter und/oder seiner Umgebung als Distanzen der Neuronen im Anordnungsraum modelliert werden,
und/oder
auf Daten aus den Bereichen Wirtschaft, Finanzen, Medizin, Geisteswissenschaften, Naturwissenschaften und/oder Technik, insbesondere
aus den Bereichen Schaltungsentwurf, Bioinformatik, Robotik, Meteorologie, Bildverarbeitung,
aus dem Bereich Datamining, insbesondere Textmining,
aus dem Bereich Sicherheitstechnik, insbesondere Flug- und/oder Zugangssicherung,
aus dem Bereich Logistik, insbesondere Verkehrsleitsysteme,
und/oder
aus dem Bereich der Nachrichtentechnik und/oder Kryptologie.

15. Datenverarbeitungseinrichtung zur Durchführung eines Verfahrens nach einem der vorhergehenden Ansprüche.

16. Computerprogrammprodukt, welches in einem Speichermedium gespeichert ist und welches Softwarecodeabschnitte umfaßt, mit denen Schritte nach einem der vorhergehenden Verfahrensansprüche ausgeführt werden, wenn das Computerprogrammprodukt auf einer Datenverarbeitungseinrichtung läuft.

**Claims**

1. A method of processing data for the mapping of input data to be processed to output data, the method to be executed on a data processing device and comprising:

providing data objects to be processed as input data,
processing provided data objects by using a topology-preserving mapping, by
ordering neurons in the ordering space, according to a given pattern,
assigning codebook objects in the outcome space to the neurons
processing codebook objects according to the calculation rule of a topology-preserving mapping, by use of data objects of the exploration space,
outputting the processed codebook objects as output data,

**characterized by** comprising:

using at least a part of the provided data objects for determining the order of neurons in the ordering space, and/or providing data objects, which are required for the data processing, which are independent of the input data to be processed and which are used as data objects of the exploration space.

2. The method of claim 1, wherein the data objects to be processed are distance objects.

3. The method of claim 1 or 2, wherein data objects in the ordering space are ordered irregularly.

4. The method of any one of the preceding claims, wherein data objects of the ordering space, exploration space, and/or outcome space
satisfy a non-Euclidian geometry,
are used which are distance objects to data objects of a local neighborhood of data objects,
represent data distributions with a fractal dimension,
represent data distributions of non-orientable surfaces in the sense of differential geometry,
are added, omitted or modified during the training process or a series of training processes of the topology-preserving mapping, wherein in particular distance objects in the ordering space are added, omitted or modified,
are influenced by additional constraints,
are saved and/or processed in local units, and/or
are added, omitted or modified after completion of the training of the topology-preserving mapping.

5. The method of any one of the preceding claims, wherein the calculation rule of the topology-preserving mapping and/or at least one parameter of this calculation rule
is chosen depending on the respective processed data object of the ordering space, exploration space and/or outcome space,
is modified during the training process or over several training processes of the topology-preserving mapping, in particular depending on the respective processed data object of the ordering space, exploration space, and/or outcome space,
and/or
is influenced by additional constraints.

6. A method of processing data for the determination of the cluster validity, the method to be executed on a data processing device and comprising:

inputting data objects,
inputting and/or calculating distance objects between these data objects,
inputting and/or calculating an assignment of the data objects to be processed to groups according to any one of the claims 1 to 5,
outputting a measure of the quality of this assignment as output data,

**characterized by**
calculating the measure of the quality of the assignment by employing at least a part of the inputted and/or calculated distance objects.

7. The method of claim 6, wherein the measure of the quality of the assignment is calculated by using a method of any one of claims 1 to 5 and/or a cost function of a method for the clustering of dissimilarity data.

8. The method of any one of the preceding claims, which is carried out repeatedly, wherein the output data of a previous run of the procedure are entered as input data of a subsequent run of the procedure.

9. The method of any one of the preceding claims, wherein the quality of the output data is determined and the quality thus determined is outputted.

10. The method of claim 9, wherein the quality is determined by:

calculating measures for topology- and/or distribution-preservation,

calculating distortion measures,

relating the distances of data objects in the ordering space to the distances of corresponding data objects in the outcome space and/or the exploration space, in particular by plotting these data objects in a distance plot,

graphically displaying data objects of the exploration, the outcome space and/or the ordering space, in particular by applying these data objects to a exploration, outcome and/or ordering plot,

graphically displaying data objects calculated from data objects of the exploration space, outcome space and/or ordering space, in particular by plotting these object data in an exploration plot, outcome plot and/or ordering plot,

calculating and outputting the mapping error for an interpolation, extrapolation, approximation and/or supervised learning, in particular by forward and backward projection,

and/or

sequential processing of data objects.

11. The method of claim 9 or 10, wherein the determined quality is used for adding, omitting and/or modifying data objects of the exploration space, the outcome space and/or the ordering space of the topology-preserving mapping,

and/or

modifying the calculation rule of the topology-preserving mapping and/or its parameters, in particular depending on data objects of the exploration, outcome and/or ordering space.

12. The method of anyone of the preceding claim wherein the data processing is used:

for dimension determination, in particular for the determination of fractal dimensions,

for non-linear embedding, in particular of non-metric data and/or dissimilarity data,

for clustering, in particular of non-metric data and/or dissimilarity data,

for determining the cluster validity, in particular of dissimilarity data and/or non-metric data,

for supervised learning, in particular on non-metric data and/or dissimilarity data,

for the registration of data sets,

for active learning,

for sorting,

for the optimization, in particular for non-metric data and/or dissimilarity data,

for finding solutions of Traveling Salesman Problems and equivalent problems, in particular non-metric Traveling Salesman Problems,

for the calculation of hyper-manifolds,

for interpolation, extrapolation, and/or approximation,

for relevance learning,

for the visualization of graphs,

for graph layout,

and/or

for the construction of self-developing, self-repairing, and/or self-reproducing systems, in particular of technical systems.

13. The method of claim 12 which is used in a combined manner as follows:

dimension determination and non-linear embedding,

non-linear embedding and calculation of hyper-manifolds,

clustering and determination of cluster validity,

and/or

non-linear embedding and clustering.

14. The method of any one of the preceding claims wherein the data processing is used for:

the molecular dynamics simulation, in particular where constraints, in particular rigid spatial relations, in the molecule and/or its surroundings, are modeled as distances of the neurons in the ordering space,

the problem solving in the field of robotics, in particular when constraints, notably rigid special relations, in the robot and/or its surroundings, are modeled as distances of the neurons in the ordering space,

and/or

data in the fields of economics, finances, medicine, humanities, natural sciences, and/or technology, in particular in the fields of circuit design, bio-informatics, robotics, meteorology, image processing,

in the field of data-mining, in particular text-mining,
in the field of security technology, specifically flight and/or access security,
in the field of logistics, in particular traffic control and maintenance systems, and/or
in the fields of communication technology and/or cryptology.

**15.** Data processing device for carrying out a method as set forth in one of the preceding claims.

**16.** Computer program product, which is stored in a memory medium and contains software code segments, with which steps as set forth in any one of the preceding method claims are carried out, if the computer program product is run on a data processing device.

## Revendications

**1.** Procédé de traitement de données, qui se déroule dans un dispositif de traitement de données, pour la représentation de données d'entrée à traiter en des données de sortie, dans lequel :

➢ des objets de données à traiter sont entrés sous forme de données d'entrée,
➢ les objets de données entrés sont traités à l'aide d'une représentation conservant la topologie

➢ en agençant des neurones selon un schéma prédéfini dans un espace d'agencement,
➢ en attribuant des objets de livre de codes aux neurones dans l'espace de résultat,
➢ en traitant des objets de livre de codes selon la règle de calcul d'une représentation conservant la topologie à l'aide des objets de données de l'espace d'exploration,
➢ en délivrant en sortie les objets de livre de codes traités sous forme de données de sortie,

**caractérisé en ce que**
➢ au moins une partie des objets de données entrés est employée pour déterminer l'agencement des neurones dans l'espace d'agencement, et/ou
➢ **en ce que** pour le traitement de données sont entrés des objets de données nécessaires, indépendants des données d'entrée à traiter, qui sont employés en tant que d'objets de données de l'espace d'exploration.

**2.** Procédé selon la revendication 1, dans lequel les objets de données à traiter sont des objets de distance.

**3.** Procédé selon la revendication 1 ou 2, dans lequel les objets de données dans l'espace d'agencement sont agencés de manière irrégulière.

**4.** Procédé selon l'une quelconque des revendications précédentes, dans lequel des objets de données de l'espace d'agencement, de l'espace d'exploration et/ou de l'espace de résultat

➢ satisfont une géométrie non euclidienne,
➢ sont employés, lesquels sont des objets de distance à des objets de données d'un voisinage local des objets de données,
➢ forment des répartitions de données avec une dimension fractale,
➢ représentent des répartitions de données de surfaces non orientables au sens de la géométrie différentielle,
➢ sont ajoutés, supprimés ou modifiés durant la procédure d'apprentissage ou au cours de plusieurs procédures d'apprentissage de la représentation conservant la topologie, en particulier des objets de distance dans l'espace d'agencement sont ajoutés, supprimés ou modifiés,
➢ sont influencés par des conditions supplémentaires,
➢ sont enregistrés et/ou traités dans des unités locales et/ou
➢ sont ajoutés, supprimés ou modifiés à la fin de l'apprentissage de la représentation conservant la topologie.

**5.** Procédé selon l'une quelconque des revendications précédentes, dans lequel la règle de calcul de la représentation conservant la topologie et/ou au moins un paramètre de cette règle de calcul

➢ est sélectionné en fonction de l'objet de donnés, traité à ce moment, de l'espace d'agencement, d'exploration et/ou de résultat,

➢ est modifié durant la procédure d'apprentissage ou au cours de plusieurs procédures d'apprentissage de la représentation conservant la topologie, en particulier en fonction de l'objet de données, traité à ce moment, de l'espace d'agencement, d'exploration et/ou de résultat
et/ou
➢ est influencé par des conditions supplémentaires.

6. Procédé de traitement de données, qui se déroule sur un dispositif de traitement de données afin de déterminer la validité de grappe, dans lequel

➢ des objets de données sont entrés,
➢ des objets de distance sont entrés et/ou calculés entre ces objets de données,
➢ et une attribution des objets de données à traiter à des groupes est entrée et/ou calculée, selon une des revendications 1 à 5,
➢ et une mesure pour la qualité de cette attribution est délivrée en sortie sous forme de données de sortie,

**caractérisé en ce que** la mesure pour la qualité de l'attribution est calculée en employant au moins une partie des objets de distance entrés et/ou calculés.

7. Procédé selon la revendication 6, dans lequel la mesure pour la qualité de l'attribution est calculée par l'application d'un procédé selon l'une quelconque des revendications 1 à 5 et/ou selon une fonction de coûts d'un procédé pour mise en grappes des données de dissemblance.

8. Procédé selon l'une quelconque des revendications précédentes, qui est exécuté de façon répétée, les données de sortie d'une exécution précédente du procédé étant entrés en tant que données d'entrée d'une exécution suivante du procédé.

9. Procédé selon l'une quelconque des revendications précédentes, dans lequel la qualité des données de sortie est déterminée et la qualité déterminée est délivrée en sortie.

10. Procédé selon la revendication 9, dans lequel la qualité est déterminée

➢ en calculant des mesures relatives à la conservation de la topologie et/ou de la répartition,
➢ en calculant des mesures de distorsion,
➢ en mettant en relation les distances des objets de données dans l'espace d'agencement avec des distances d'objets de données correspondants dans l'espace de résultat et/ou d'exploration, en particulier en les reportant dans un tracé de distance,
➢ en représentant graphiquement des objets de données de l'espace d'exploration, de résultat et/ou d'agencement, en particulier en les reportant dans un tracé d'exploration, de résultat et/ou d'agencement,
➢ en représentant graphiquement des objets de données calculés à partir des objets de données de l'espace d'exploration, de résultat et/ou d'agencement, en particuliers en les reportant dans un tracé d'exploration, de résultat et/ou d'agencement,
➢ en calculant l'erreur de représentation et en la délivrant en sortie à des fins d'interpolation, d'extrapolation, d'approximation et/ou d'apprentissage surveillé, en particulier par une projection avant et arrière,
et/ou
➢ en traitant séquentiellement des objets de données.

11. Procédé selon la revendication 9 ou 10, dans lequel la qualité déterminée est utilisée

➢ pour ajouter, supprimer ou modifier des objets de données de l'espace d'exploration, de résultat et/ou d'agencement de la représentation conservant la topologie, et/ou
➢ pour modifier la règle de calcul de la représentation conservant la topologie et/ou ses paramètres, en particulier en fonction des objets de données de l'espace d'exploration, de résultat et/ou d'agencement.

12. Procédé selon l'une quelconque des revendications précédentes, dans lequel le traitement de données est appliqué

➢ pour déterminer la dimension, en particulier pour déterminer des dimensions fractales,
➢ pour prolonger de manière non linéaire, en particulier des données non métriques et/ou des données de dissemblance,

➢ pour mettre en grappes, en particulier des données non métriques et/ou des données de dissemblance,

➢ pour déterminer la validité de grappe, en particulier pour des données de dissemblance et/ou des données non métriques,

➢ pour effectuer un apprentissage surveillé, en particulier de données non métriques et/ou des données de dissemblance,

➢ pour enregistrer des ensembles de données,

➢ pour effectuer un apprentissage actif,

➢ pour trier,

➢ pour optimiser, en particulier des données non métriques et/ou des données de dissemblance,

➢ pour trouver des solutions aux problèmes du voyageur de commerce et à des problèmes équivalents à ceux-ci, en particulier des problèmes du voyageur de commerce non métriques,

➢ pour calculer des hyperdiversités,

➢ pour effectuer des interpolations, des extrapolations et/ou des approximations,

➢ pour effectuer un apprentissage de pertinence,

➢ pour visualiser des graphes,

➢ pour tracer des graphes,

et/ou

➢ pour construire des systèmes se développant, se réparant et/ou se reproduisant eux-mêmes, en particulier des systèmes techniques.

**13.** Procédé selon la revendication 12, qui est appliqué selon les combinaisons sous-mentionnées :

➢ détermination de dimension et prolongement non linéaire,

➢ prolongement non linéaire et calcul d'hyperdiversités,

➢ mise en grappes et détermination de la validité de grappe

et/ou

► prolongement non linéaire et mise en grappes.

**14.** Procédé selon l'une quelconque des revendications précédentes, dans lequel le traitement de données est appliqué

➢ pour la simulation dynamique moléculaire, en particulier dans lequel des conditions forcées, en particulier des relations spatiales rigides, dans la molécule et/ou dans son environnement sont modélisées en tant que distances des neurones dans l'espace d'agencement,

➢ pour résoudre des problèmes dans la robotique, en particulier dans lequel des conditions forcées, en particulier des relations spatiales rigides, dans le robot et/ou dans son environnement sont modélisées en tant que distances des neurones dans l'espace d'agencement ;

et/ou

➢ sur des données issues des domaines de l'économie, des finances, de la médecine, des sciences humaines, des sciences physiques et naturelles et/ou des techniques, en particulier issues

➢ des domaines de l'étude de circuit, de la bio-informatique, de la robotique, de la météorologie, du traitement d'image,

➢ des domaines de l'exploration de données, en particulier l'exploration de texte,

➢ du domaine des techniques de sécurité, en particulier la sécurité aérienne et/ou la sécurité d'accès,

➢ du domaine de la logistique, en particulier de systèmes de contrôle de trafic, et/ou

➢ du domaine de la technique des communications et/ou du chiffrement.

**15.** Dispositif de traitement de données destiné à exécuter un procédé selon l'une quelconque des revendications précédentes.

**16.** Produit de programme informatique, qui est enregistré sur un support de mémoire et qui comporte des extraits de codes logiciels avec lesquels des étapes sont exécutées selon l'une quelconque des revendications de procédé précédentes lorsque le produit de programme informatique s'exécute sur un dispositif de traitement de données.

# EP 1 530 779 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0116880 A

**In der Beschreibung aufgeführte Nicht-Patentliteratur**

- **H.U. BAUER ; K.R. PAWELZIK.** Quantifying the neighborhood preservation of self-organizing feature maps. *IEEE Transactions on Neural Networks,* 1992, vol. 3 (4), 570-579
- **C. M. BISHOP ; M. SVENSEN ; C. K. I. WILLIAMS.** Developments of the generative topographic mapping. *Technical Report NCRG-98-012,* 1998
- GTM: A principled alternative to the self-organizing map. **C.M. BISHOP ; M. SVENSEN ; C.K.I. WILLIAMS.** Artificial Neural Networks - ICANN96, Int. Conf. on Artificial Neural Networks. Springer, 1996, 165-170
- **C.M. BISHOP ; M. SVENSEN ; C.K.I. WILLIAMS.** GTM: the generative topographic mapping. *Neural Computation,* 1998, vol. 10 (1), 215-234
- **I.N. BRONSTEIN ; K.A. SEMENDJAJEW.** Ergänzende Kapitel zu Taschenbuch der Mathematik. Verlag Harri Deutsch, 1991
- **C. CORTES ; V. VAPNIK.** Support vector networks. *Machine Learning,* 1995, vol. 20 (3), 273-297
- **D.R. DERSCH.** Eigenschaften neuronaler Vektorquantisierer und ihre Anwendung in der Sprachverarbeitung. Verlag Harri Deutsch, 1996, vol. 54
- **D.R. DERSCH.** Feature extraction from complete data sets: A new approach to pattern recognition and its application to text-independent speaker identification. *Technical report,* 1997
- **R.O. DUDA ; P.E. HART.** Pattern Classification and Scene Analysis. Wiley, 1973
- **R. DURBIN ; G. MITCHISON.** A dimension reduction framework for understanding cortical maps. *Nature,* 1990, vol. 343, 644-647
- **R.M. GAZE ; M.J. KEATING.** The visual system and neuronal specifity. *Nature,* 1972, vol. 237, 375-378
- **T. GRAEPEL ; M. BURGER ; K. OBERMAYER.** Phase transitions in stochastic self-organizing maps. *Physical Review E,* 1997, vol. 56 (4), 3876-3890
- **T. GRAEPEL ; M. BURGER ; K. OBERMAYER.** Self-organizing maps: Generalizations and new optimization techniques. *Neurocomputing,* 1998, vol. 20, 173-190
- **T. GRAEPEL ; R. HERBRICH ; P. BOLLMANN-SDORRA ; K. OBERMAYER.** Classification on pairwise proximity data. *In Advances in Neural Information System Processing,* 1999, 438-444
- **P. GRASSBERGER ; I. PROCACCIA.** Characterization of strange attractors. *Phys. Rev. Lett.,* 1983, vol. 50, 346-349
- **R.M. GRAY.** Vector quantization. *IEEE Transactions on Acoustics, Speech, and Signal Processing,* April 1984, 4-29
- **F. HAUSDORFF.** Dimension und äußeres Maß. *Mathematische Annalen,* vol. 79, 157-179
- **J. HERAULT ; A. GUERIN-DUGUE ; P. VILLEMAIN.** Searching for the embedded manifolds in high-dimensional data, problems and unsolved questions. *In Proc. of the 10th Europ. Symp. on Art. Neur. Netw.,* 2002, 173-184
- Introduction to the Theory of Neural Computation. **J.A. HERTZ ; A.S. KROGH ; R.G: PALMER.** Lecture notes vol. I: Santa Fe Institute Studies in the Sciences of Complexity. Addison-Wesley, 1991, vol. 1
- **T. HOFMANN ; J. BUHMANN.** Pairwise data clustering by deterministic annealing. *IEEE Transaction on Pattern Analysis and Machine Intelligence,* 1997, vol. 19 (1), 1-14
- **X.D. HUANG ; Y. ARIKI ; M.A. JACK.** Hidden Markov Models for Speech Recognition. Edinburgh University Press, 1990
- **H. JAEGER.** Observable operator models for discrete stochastic time series. *Neural Computation,* vol. 12 (6), 1371-1398
- **T. KOHONEN.** Self-Organizing Maps. Springer, 2001
- **Y. LINDE ; A. BUZO ; R.M. GRAY.** An algorithm for vector quantizer design. *IEEE Transactions on Communications,* 1980, vol. 28, 84-95
- **M.C. MACKEY ; L. GLASS.** Oscillation and chaos in physiological control systems. *Science,* 1977, vol. 197, 287
- **B.B. MANDELBROT.** *Die fraktale Geometrie der Natur.,* 1987

- A 'neural gas' network learns topologies. **T.M. MARTINETZ ; K. SCHULTEN.** Proceedings of the International Conference on Artificial Neural Networks ICANN. Elsevier Science Publishers, 1991, 397-402
- **J. MCNAMES.** Innovations in local modeling for time-series prediction. *PhD thesis,* 1999
- **J. MCNAMES.** Winning entry of the K. U. Leuven time-series prediction competition. *International Journal of Bifurcation and Chaos,* 1999, vol. 9 (8), 1458-1501
- **G.W. MILLIGAN ; M.C. COOPER.** An examination of procedures for determining the number of clusters in a data set. *Psychometrika,* 1985, vol. 50, 159-179
- **G. MITCHISON ; R. DURBIN.** Optimal numberings of an N x N array. *SIAM J. Alg. Disc. Meth.,* 1986, vol. 7, 571-581
- **J. MOODY ; C. DARKEN.** Fast learning in networks of locally-tuned processing units. *Neural Computation,* 1989, vol. 1, 281-294
- **L.M.D. OWSLE ; L.E. ATLAS ; G.D. BERNARD.** Self-organizing feature maps and hidden Markov models. *IEEE Transactions on Signal Processing,* 1997, vol. 45 (11), 2787-2798
- **H. RITTER.** Asymptotic level density for a class of vector quantization processes. *IEEE Transactions on Neural Networks,* 1991, vol. 1 (2), 173-175
- **H. RITTER ; T. MARTINETZ ; K. SCHULEN.** Neuronale Netze. Addison Wesley, 1991
- **M.G. ROSENBLUM ; A.S. PIKOVSKY ; J. KURTHS.** Phase synchronization of chaotic oscillators. *Phys. Rev. Lett.,* 1996, vol. 76, 1804-1807
- Learning internal representations by error propagation. **D.E. RUMELHART ; J.L. MCCLELLAND.** In Parallel Distributed Processing. M.I.T. Press, 1986, vol. I
- **L. SACHS.** Angewandte Statistik. Springer Verlag, 1992
- **J.W. SAMMON.** A nonlinear mapping for data structure analysis. *IEEE Transactions on Computers,* 1969, vol. C 18, 401-409
- **B. SCHACK ; W. KRAUSE ; S. WEISS ; P. RAPPELSBERGER.** EEG and MEG synchronisation phenomena during cognitive processes. *International Journal of Psychophysiology,* 1998, vol. 30, 50-51
- **B. SCHACK ; P. RAPPELSBERGER ; C. ANDERS ; S. WEISS ; E. MÖLLER.** Quantification of synchronization processes by coherence and phase and its application in analysis of electrophysiological signals. *International Journal of Bifurcation and Chaos,* 2000, vol. 10, 2565-2586
- **G. SUGIHARA ; R.M. MAY.** Nonlinear forecasting as a way of distinguishing chaos from measurement error in time series. *Nature,* 1990, vol. 344, 734-741
- The GSOM algorithm for growing hypercubical output spaces in self-organizing feature maps. **T. VILLMANN ; H.U. BAUER.** Proc. Self-organizing Maps. 1997
- **A. WISMÜLLER ; O. LANGE ; D.R. DERSCH ; G.L. LEINSINGER ; K. HAHN ; B. PÜTZ ; D. AUER.** Cluster analysis of biomedical image time-series. *International Journal of Computer Vision,* 2002, vol. 46 (2), 103-128
- Segmentation with neural networks. **A. WISMÜLLER ; F. VIETZE ; D.R. DERSCH.** Handbook of Medical Imaging. Academic Press, 2000